# EUROPEAN PATENT SPECIFICATION

(11) **EP 2 557 937 B1**
(45) Date of publication and mention of the grant of the patent: **22.01.2020**
(21) Application number: 11769630.2
(22) Date of filing: 14.04.2011
(51) Int. Cl.: A23G 9/36, A23L 29/256, A23L 33/21, A23L 13/40, A23C 9/152, A23P 30/40

(54) **FOOD COMPOSITIONS CONTAINING LIPID-RICH MICROALGAL FLOUR**
LIPIDREICHE NAHRUNGSMITTELZUSAMMENSETZUNG MIT MIKROALGENMEHL
COMPOSITIONS ALIMENTAIRES RICHES EN LIPIDES À BASE DE FARINE DE MICROALGUES

(30) Priority: 14.04.2010 US 324294 P
(43) Date of publication of application: 20.02.2013
(73) Proprietor: Corbion Biotech, Inc., South San Francisco, CA 94080 (US)
(72) Inventor: PIECHOCKI, John, South San Francisco California 94080 (US); ZDANIS, Dana, South San Francisco California 94080 (US); NORRIS, Leslie, M., South San Francisco California 94080 (US); RAKITSKY, Walt, South San Francisco California 94080 (US); KLAMCZYNSKA, Beata, South San Francisco California 94080 (US)
(74) Representative: Carpmaels & Ransford LLP
(86) International application number: PCT/US2011/032588
(87) International publication number: WO 2011/130578

(56) References cited:
- US-A- 2 967 700
- US-A- 5 567 732
- US-A1- 2003 138 477
- US-A1- 2009 274 736
- US-A1- 2010 010 088
- US-A1- 2010 028 488
- US-A1- 2010 239 712
- US-A1- 2010 303 957
- US-B1- 6 372 460

## Description

### REFERENCE TO A SEQUENCE LISTING

This application includes a Sequence Listing, appended to the end of the Detailed Description of the Invention.

### FIELD OF THE INVENTION

The invention resides in the fields of food preparation and human animal nutrition.

### BACKGROUND OF THE INVENTION

As the human population continues to increase, there's a growing need for additional food sources, particularly food sources that are inexpensive to produce but nutritious. Moreover, the current reliance on meat as the staple of many diets, at least in the most developed countries, contributes significantly to the release of greenhouse gases, and there's a need for new foodstuffs that are equally tasty and nutritious yet less harmful to the environment to produce.

Requiring only "water and sunlight" to grow, algae have long been looked to as a potential source of food. While certain types of algae, primarily seaweed, do indeed provide important foodstuffs for human consumption, the promise of algae as a foodstuff has not been realized. Algal powders made with algae grown photosynthetically in outdoor ponds or photobioreactors are commercially available but have a deep green color (from the chlorophyll) and a strong, unpleasant taste. When formulated into food products or as nutritional supplements, these algal powders impart a visually unappealing green color to the food product or nutritional supplement and have an unpleasant fishy or seaweed flavor.

There are several species of algae that are used in foodstuffs today, most being macroalgae such as kelp, purple laver (*Porphyra*, used in nori), dulse (*Palmaria palmate)* and sea lettuce (*Ulva lactuca).* Microalgae, such as Spirulina (*Arthrospira platensis)* are grown commercially in open ponds (photosynthetically) for use as a nutritional supplement or incorporated in small amounts in smoothies or juice drinks (usually less than 0.5% w/w). Other microalgae, including some species of *Chlorella*, are popular in Asian countries as a nutritional supplement.

In addition to these products, algal oil with high docosahexanoic acid (DHA) content is used as an ingredient in infant formulas. DHA is a highly polyunsaturated fatty acid. DHA has anti-inflammatory properties and is a well known supplement as well as an additive used in the preparation of foodstuffs. However, DHA is not suitable for cooked foods because it oxidizes with heat treatment. Also, DHA is unstable when exposed to oxygen even at room temperature in the presence of antioxidants. The oxidation of DHA results in a fishy taste and unpleasant aroma. US Patent Application 2003/0138477 and US Patent 5,567,732 disclose the preparation of algal flour comprising triglyceride oil for food applications.

There remains a need for methods to produce foodstuffs from algae cheaply and efficiently, at large scale, particularly foodstuffs that are tasty and nutritious. The present invention meets these and other needs.

### SUMMARY OF THE INVENTION

In a first aspect, the present invention is directed to a frozen food composition as defined in claim 1. In some cases, the volume of the food contributed by the gas is between 10% and 60%. In some cases, the gas is air. In some cases, the percent of the volume of the food contributed by the gas is between 10 and 50%. In some cases, the continuous phase comprises 0 to 30% sugar or another natural or artificial sweetening agent, by weight.

In some embodiments, the algal flour comprises between 20% and 70% by dry weight triglyceride oil. In some cases, 60%-75% of the triglyceride oil is an 18:1 lipid in a glycerolipid form. In some embodiments, the triglyceride oil is (a) less than 2% 14:0, (b) 13-16% 16:0, (c) 1-4% 18:0, (d) 64-70% 18:1, (e) 10-16% 18:2, (f) 0.5-2.5% 18:3, or (g) less than 2% oil of a carbon chain length 20 or longer.

In some embodiments, the algal flour is between 5%-70% carbohydrate by dry weight. In some cases, the algal flour is between 25%-40% carbohydrates by dry weight. In some cases, the carbohydrate component of the biomass is between 25%-70%, optionally 25%-35%, dietary fiber and 2%-10%, optionally 2%-8%, free sugar including sucrose, by dry weight. In some embodiments, the monosaccharide composition of the dietary fiber component of the biomass is (a) 3-17% arabinose, (b) 7-43% mannose, (c) 18-77% galactose and (d) 11-60% glucose. In some embodiments, the monosaccharide composition of the dietary fiber component of the biomass is (a) 0.1-4% arabinose, (b) 5-15% mannose, (c) 15-35% galactose and (d) 50-70% glucose. In some cases, the algal flour has between 0 to 115 µg of total carotenoids per gram of algal flour, including 20-70 µg lutein per gram of algal flour. In some cases, the algal flour has less than 10 µg or less than 20 µg of total carotenoids per gram of algal flour. In some cases, the oil within the algal flour has 1-8 mg total tocopherols per 100 grams of algal flour, including 2-6 mg alpha tocopherol per 100 grams of algal flour. In some cases, the algal flour has 0.05-0.30 mg total tocotrienols per gram of algal flour, including 0.10-0.25 mg alpha tocotrienol per gram of algal flour.

In some embodiments, the biomass is derived from an alga that is a species of the genus *Chlorella.* In some cases, the algae is *Chlorella protothecoides*. In some embodiments, the biomass is derived from an alga that is a color mutant with reduced color pigmentation compared to the strain from which it was derived.

In some embodiments, the algal flour is derived from algae cultured and processed under good manufacturing practice (GMP) conditions.

In some cases, at least one additional edible ingredient is selected from the group consisting of sugar, water, milk, cream, fruit juice, fruit juice concentrate, whole eggs, egg whites, grains and animal fat or other fat. In some cases, the composition is selected from the group consisting of ice cream, gelato, sorbet, mousse, flan, custard, meringue, pate, baked good, mousse, whipped dairy toppings, frozen yogurt, whipped fillings and sauce.

In a second aspect, the present invention is directed to a method of making an aerated food as defined in claim 5. The algal flour can comprise from 0.5% to 5%, from 0.5% to 2.5% or from 0.5% to 1% of the dispersion.

In a third aspect, the present invention is directed to a meat product as defined in claim 6.

In some embodiments, the meat contains at most 10% animal fat or at most 30% animal fat. In some cases, the meat contains at most 7% animal fat. In some cases, the meat contains at most 3% animal fat or at most about 1% animal fat. In some embodiments, the meat product contains 0.5% to 2.5% w/w algal flour or from 0.5% to 10% w/w algal flour. In some cases, the algal flour contains 20-60% or 25%-70% algal oil by dry weight. In some cases, the algal flour is made from microalgae of the genus *Chlorella.* In some cases, the algal flour is made from microalgae of the species *Chlorella protothecoides.* In some embodiments, the meat product is a comminuted meat. In some cases, the meat product is a reformed meat. In some embodiments, the algal flour has no visible green or yellow color. In some embodiments, the meat is selected from the group consisting of beef, bison, lamb, mutton, sheep, venison, fish, chicken, pork, ham and turkey.

In a fourth aspect, the present invention is directed to a dairy food composition as defined in claim 7, optionally wherein between 20% and 90%, between 25% and 85%, between 30% and 80%, above 25%, above 30%, above 35%, above 40%, above 45%, above 50%, approximately 30%, approximately 40%, approximately 50%, approximately 60%, approximately 70%, approximately 80%, approximately 90% or approximately 100% of the fat in the food is provided by the algal flour. In some cases, the dairy food composition is selected from the group consisting of cheese, milk, buttermilk, cream, butter, spread and yogurt.

Preferred features of the claimed inventions are defined in the dependent claims.

These and other aspects and embodiments of the invention are described in the accompanying drawings, a brief description of which immediately follows, and in the detailed description of the invention below, and are exemplified in the examples below. Any or all of the features discussed above and throughout the application can be combined in various embodiments of the present invention.

### DETAILED DESCRIPTION OF THE INVENTION

This detailed description of the invention is divided into sections and subsections for the convenience of the reader. Section I provides definitions for various terms used herein. Section II, in parts A-E, describes methods for preparing microalgal biomass, including suitable organisms (A), methods of generating a microalgal strain lacking in or having significantly reduced pigmentation (B), culture conditions (C), concentration conditions (D) and chemical composition of the biomass (E). Section III describes methods for processing the microalgal biomass into algal flour and defatted algal flour. Section IV describes various foods and methods of combining microalgal biomass with other food ingredients.

All of the processes described herein can be performed in accordance with GMP or equivalent regulations. In the United States, GMP regulations for manufacturing, packing, or holding human food are codified at 21 C.F.R. 110. GMP conditions in the Unites States, and equivalent conditions in other jurisdictions, apply in determining whether a food is adulterated (the food has been manufactured under such conditions that it is unfit for food) or has been prepared, packed or held under unsanitary conditions such that it may have become contaminated or otherwise may have been rendered injurious to health. GMP conditions can include adhering to regulations governing: disease control; cleanliness and training of personnel; maintenance and sanitary operation of buildings and facilities; provision of adequate sanitary facilities and accommodations; design, construction, maintenance and cleanliness of equipment and utensils; provision of appropriate quality control procedures to ensure all reasonable precautions are taken in receiving, inspecting, transporting, segregating, preparing, manufacturing, packaging and storing food products according to adequate sanitation principles to prevent contamination from any source; and storage and transportation of finished food under conditions that will protect food against physical, chemical or undesirable microbial contamination, as well as against deterioration of the food and the container.

### I. DEFINITIONS

Unless defined otherwise below, all technical and scientific terms used herein have the meaning commonly understood by a person skilled in the art to which this invention belongs. General definitions of many of the terms used herein may be found in Singleton et al., Dictionary of Microbiology and Molecular Biology (2nd ed. 1994); The Cambridge Dictionary of Science and Technology (Walker ed., 1988); The Glossary of Genetics, 5th Ed., R. Rieger et al. (eds.), Springer Verlag (1991); and Hale & Marham, The Harper Collins Dictionary of Biology (1991).

"Area Percent" refers to the determination of the area percent of chromatographic, spectroscopic, and other peaks generated during experimentation. The determination of the area under the curve of a peak and the area percent of a particular peak is routinely accomplished by one of skill in the art. For example, in FAME GC/FID detection methods in which fatty acid molecules in the sample are converted into a fatty acid methyl ester (FAME) a separate peak is observed for a fatty acid of 14 carbon atoms with no unsaturation (C14:0) compared to any other fatty acid such as C14:1. The peak area for each class of FAME is directly proportional to its percent composition in the mixture and is calculated based on the sum of all peaks present in the sample (i.e. [area under specific peak / total area of all measured peaks] X 100). When referring to lipid profiles of oils and cells, "at least 4% C8-C14" means that at least 4% of the total fatty acids in the cell or in the extracted glycerolipid composition have a chain length that includes 8, 10, 12 or 14 carbon atoms.

"Aerated food" means any food product composed of a continuous and a discontinuous phase, where the continuous phase is typically an aqueous solution and the discontinuous phase is typically a gas (air). The continuous phase of the aerated food has a stabilizing property, allowing the stable formation of gas (air) bubbles within the food. Non-limiting examples of aerated foods include mousses, ice cream and sorbets.

"Axenic" means a culture of an organism that is not contaminated by other living organisms.

"Baked good" means a food item, typically found in a bakery, that is prepared by using an oven and usually contains a leavening agent. Baked goods include, but are not limited to brownies, cookies, pies, cakes and pastries.

"Cellulosic material" means the products of digestion of cellulose, particularly glucose and xylose. Cellulose digestion typically produces additional compounds such as disaccharides, oligosaccharides, lignin, furfurals and other compounds. Sources of cellulosic material include, for example and without limitation, sugar cane bagasse, sugar beet pulp, corn stover, wood chips, sawdust and switchgrass.

"Co-culture" and variants thereof such as "co-cultivate" and "co-ferment" mean that two or more types of cells are present in the same bioreactor under culture conditions. The two or more types of cells are typically both microorganisms, typically both microalgae, but may in some instances include one non-microalgal cell type. Culture conditions suitable for co-culture include, in some instances, those that foster growth and/or propagation of the two or more cell types and, in other instances, those that facilitate growth and/or proliferation of only one, or only a subset, of the two or more cells while maintaining cellular growth for the remainder.

"Comminuted meat" means a meat product that is formed by reducing the size of the meat pieces, thereby promoting the extraction of salt-soluble proteins that enable the comminuted meat to bind together. Comminution also results in a uniform distribution of fat, muscle and connective tissue. Non-limiting examples of comminuted meat include meat patties, sausage and hot dogs.

"Reformed meat" is related to comminuted meat and has an artifact of having the appearance of a cut, slice or portion of the meat that has be disrupted that is formed by 'tumbling' chopped meat, with or without the addition of finely comminuted meat, whereby the soluble proteins of the chopped meat bind the small pieces together. Chicken nuggets are a non-limiting example of reformed meat.

"Cytolysis" means the lysis of cells in a hypotonic environment. Cytolysis results from osmosis, or movement of water, to the inside of a cell to a state of hyperhydration, such that the cell cannot withstand the osmotic pressure of the water inside and so bursts.

"Dietary fiber" means non-starch carbohydrates found in plants and other organisms containing cell walls, including microalgae. Dietary fiber can be soluble (dissolvable in water) or insoluble (not able to be dissolved in water). Soluble and insoluble fiber makes up total dietary fiber.

"Dispersion" means a mixture in which fine particles of at least one substance are scattered throughout another substance. Although a dispersion can mean any particle that is scattered throught the continous phase of a different composition, the term dispersion as used herein refers to a fine solid of one substance that is scattered or dispersed throughout another substance, usually a liquid. An emulsion is a special type of dispersion to encompass a mixture of two or more immiscible liquids.

"Edible ingredient" means any substance or composition which is fit to be eaten. "Edible ingredients" include, without limitation, grains, fruits, vegetables, proteins, herbs, spices, carbohydrates, sugar and fats.

The term "ingredient" as used herein means ingredients used in foods and/or food compositions. "Ingredient" includes, without limitation, preservatives, flavorants, food additives, food coloring, sugar substitutes and other ingredients found in various foods.

"Exogenously provided" means a molecule provided to a cell (including provided to the media of a cell in culture).

"Fiber" means non-starch carbohydrates in the form of polysaccharide. Fiber can be soluble in water or insoluble in water. Many microalgae produce both soluble and insoluble fiber, typically residing in the cell wall.

"Finished food product" and "finished food ingredient" mean a food composition that is ready for packaging, use or consumption. For example, a "finished food product" may have been cooked or the ingredients comprising the "finished food product" may have been mixed or otherwise integrated with one another. A "finished food ingredient" is typically used in combination with other ingredients to form a food product.

"Food", "food composition", "food product" and "foodstuff" mean any composition intended to be or expected to be ingested by humans as a source of nutrition and/or calories. Food compositions are composed primarily of carbohydrates, fats, water and/or proteins and make up substantially all of a person's daily caloric intake. A "food composition" can have a weight minimum that is at least ten times the weight of a typical tablet or capsule (typical tablet/capsule weight ranges are from less than or equal to 100 mg up to 1500 mg). A "food composition" is not encapsulated or in tablet form.

"Glycerolipid profile" means the distribution of different carbon chain lengths and saturation levels of glycerolipids in a particular sample of biomass or oil. For example, a sample could have a glycerolipid profile in which approximately 60% of the glycerolipid is C18:1, 20% is C18:0, 15% is C16:0 and 5% is C14:0. When a carbon length is referenced generically, such as "C:18", such reference can include any amount of saturation; for example, microalgal biomass that contains 20% (by weight/mass) lipid as C:18 can include C18:0, C18:1, C18:2 and the like, in equal or varying amounts, the sum of which constitute 20% of the biomass. Reference to percentages of a certain saturation type, such as "at least 50% monounsaturated in an 18:1 glycerolipid form" means the aliphatic side chains of the glycerolipids are at least 50% 18:1, but does not necessarily mean that at least 50% of the triglycerides are triolein (three 18:1 chains attached to a single glycerol backbone); such a profile can include glycerolipids with a mixture of 18:1 and other side chains, provided at least 50% of the total side chains are 18:1.

"Good manufacturing practice" and "GMP" mean those conditions established by regulations set forth at 21 C.F.R. 110 (for human food) and 111 (for dietary supplements), or comparable regulatory schemes established in locales outside the United States. The U.S. regulations are promulgated by the U.S. Food and Drug Administration under the authority of the Federal Food, Drug, and Cosmetic Act to regulate manufacturers, processors, and packagers of food products and dietary supplements for human consumption.

"Homogenate" means biomass that has been physically disrupted. Homogenization is a fluid mechanical process that involves the subdivision of particles or agglomerates into smaller and more uniform sizes, forming a dispersion that may be subjected to further processing. Homogenization is used in treatment of several foods and dairy products to improve stability, shelf-life, digestion, and taste.

"Lipid" means any of a class of molecules that are soluble in nonpolar solvents (such as ether and hexane) and relatively or completely insoluble in water. Lipid molecules have these properties, because they are largely composed of long hydrocarbon tails that are hydrophobic in nature. Examples of lipids include fatty acids (saturated and unsaturated); glycerides or glycerolipids (such as monoglycerides, diglycerides, triglycerides or neutral fats and phosphoglycerides or glycerophospholipids); and non-glycerides (sphingolipids, tocopherols, tocotrienols, sterol lipids including cholesterol and steroid hormones, prenol lipids including terpenoids, fatty alcohols, waxes and polyketides).

"Microalgae" means eukarytotic microbial organisms that contain a chloroplast, and which may or may not be capable of performing photosynthesis. Microalgae include obligate photoautotrophs, which cannot metabolize a fixed carbon source as energy, as well as heterotrophs, which can live solely off of a fixed carbon source, including obligate heterotrophs, which cannot perform photosynthesis. Microalgae include unicellular organisms that separate from sister cells shortly after cell division, such as *Chlamydomonas,* as well as microbes such as *Volvox,* which is a simple multicellular photosynthetic microbe of two distinct cell types. "Microalgae" also include cells such as *Chlorella, Parachlorella* and *Dunaliella*.

"Microalgal biomass", "algal biomass", and "biomass" mean a material produced by growth and/or propagation of microalgal cells. Biomass may contain cells and/or intracellular contents as well as extracellular material. Extracellular material includes, but is not limited to, compounds secreted by a cell.

"Microalgal oil" and "algal oil" mean any of the lipid components produced by microalgal cells, including triacylglycerols.

"Micronized" means biomass in which the cells have been disrupted. For example, cells can be disrupted by well known methods including high pressure, mechanical, shear and sonication (or an equivalent process) so that at least 50% of the particle size (median particle size) is no more 10 µm in their longest dimension or diameter of a sphere of equivalent volume. Typically, at least 50% to 90% or more of such particles are less than 5 µm in their longest dimension or diameter of a sphere of equivalent volume. In any case, the average particle size of micronized biomass is smaller than the intact microalgal cell. The particle sizes referred to are those resulting from the homogenization and are preferably measured as soon as practical after homogenization has occurred and before drying to avoid possible distortions caused by clumping of particles as may occur in the course of drying. Some techniques of measuring particle size, such as laser diffraction, detect the size of clumped particles rather individual particles and may show a larger apparent particle size (e.g. average particle size of 1-100 µm) after drying. Because the particles are typically approximately spherical in shape, the diameter of a sphere of equivalent volume and the longest dimension of a particle are approximately the same.

"Oil" means any triacylglyceride (or triglyceride) oil produced by organisms, including microalgae, other plants and/or animals. "Oil", as distinguished from "fat", refers, unless otherwise indicated, to lipids that are generally liquid at ordinary room temperatures and pressures. However, coconut oil is typically solid at room temp, as are some palm oils and palm kernel oils. For example, "oil" includes vegetable or seed oils derived from plants including, without limitation, an oil derived from soy, rapeseed, canola, palm, palm kernel, coconut, corn, olive, sunflower, cotton seed, cuphea, peanut, camelina sativa, mustard seed, cashew nut, oats, lupine, kenaf, calendula, hemp, coffee, linseed, hazelnut, euphorbia, pumpkin seed, coriander, camelina, sesame, safflower, rice, tung oil tree, cocoa, copra, pium poppy, castor beans, pecan, jojoba, jatropha, macadamia, Brazil nuts and avocado, as well as combinations thereof.

"Polysaccharide" and "glycan" means any carbohydrate made of monosaccharides joined together by glycosidic linkages. Cellulose is an example of a polysaccharide that makes up certain plant cell walls.

"Predominantly encapsulated" means that more than 50% and typically more than 75% to 90% of a referenced component, e.g. algal oil, is sequestered in a referenced container, which can include, *e.g.* a microalgal cell.

"Predominantly intact cells" and "predominantly intact biomass" mean a population of cells that comprise more than 50, and often more than 75, 90 or 98% intact cells. "Intact", in this context, means that the physical continuity of the cellular membrane and/or cell wall enclosing the intracellular components of the cell has not been disrupted in any manner that would release the intracellular components of the cell to an extent that exceeds the permeability of the cellular membrane in culture.

"Predominantly lysed" means a population of cells in which more than 50%, and typically more than 75 to 90%, of the cells have been disrupted such that the intracellular components of the cell are no longer completely enclosed within the cell membrane.

"Species of furfural" means 2-furancarboxaldehyde and derivatives thereof that retain the same basic structural characteristics.

"Stover" means the dried stalks and leaves of a crop remaining after a grain has been harvested from that crop.

"Suitable for human consumption" means a composition can be consumed by humans as dietary intake without ill health effects and can provide significant caloric intake due to uptake of digested material in the gastrointestinal tract.

"Uncooked product" means a composition that has not been subjected to heating but may include one or more components previously subjected to heating.

### II. METHODS FOR PREPARING MICROALGAL BIOMASS

Algal biomass suitable for human consumption that is rich in nutrients, including lipid and/or protein constituents, methods of combining the same with edible ingredients and food compositions containing the same are disclosed. The invention arose in part from the discoveries that algal biomass can be prepared with a high oil content and/or with excellent functionality and the resulting biomass incorporated into food products. Additionally, defatted algal biomass (in the form of defatted algal flour) can impart unique and surprising functionality and can be incorporated into food products. The biomass also provides several beneficial micro-nutrients in addition to the oil and/or protein, such as algal-derived dietary fibers (both soluble and insoluble carbohydrates), phospholipids, glycoprotein, phytosterols, tocopherols, tocotrienols and selenium. Algal biomass comprises the algal cells grown, cultivated or propagated as disclosed herein or under conditions well known to those skilled in the art.

This section first reviews the types of microalgae suitable for use in the methods (part A), methods of generating a microalgae strain lacking or having significantly reduced pigmentation (part B), then the culture conditions (part C) that are used to propagate the biomass, then the concentration steps that are used to prepare the biomass for further processing (part D), and concludes with a description of the chemical composition of the biomass prepared in accordance with the methods (part E).

### A. Microalgae for Use in the Methods

A variety species of microalgae that produce suitable oils and/or lipids and/or protein can be used in accordance with the methods, although microalgae that naturally produce high levels of suitable oils and/or lipids and/or protein are preferred. Considerations affecting the selection of microalgae include, in addition to production of suitable oils, lipids or protein for production of food products: (1) high lipid (or protein) content as a percentage of cell weight; (2) ease of growth; (3) ease of propagation; (4) ease of biomass processing; (5) glycerolipid profile; and (6) absence or near absence of algal toxins (Example 4 below demonstrates dried microalgal biomass and oils or lipids extracted from the biomass lacks detectable algal toxins).

In some embodiments, the cell wall of the microalgae must be disrupted during food processing (*e.g*. cooking) to release the functional components and, in these embodiments, strains of microalgae with cell walls susceptible to digestion in the gastrointestinal tract of an animal, *e.g*. a human or other monogastrics, are preferred, especially if the algal biomass is to be used in uncooked food products.

Digestibility is generally decreased for microalgal strains which have a high content of cellulose/hemicellulose in the cell walls. Digestibility can be evaluated using standard assays known to the skilled artisan, for example pepsin digestibility assay.

In particular embodiments, the microalgae comprise cells that are at least 10% or more oil by dry weight. In other embodiments, the microalgae contain at least 25-35% or more oil by dry weight. Generally, in these embodiments, the more oil contained in the microalgae, the more nutritious the biomass, so microalgae that can be cultured to contain at least 40%, at least 50%, 75%, or more oil by dry weight are especially preferred. Preferred microalgae for use in the disclosed methods can grow heterotrophically (on sugars in the absence of light) or are obligate heterotrophs. Not all types of lipids are desirable for use in foods and/or nutraceuticals, as they may have an undesirable taste or unpleasant odor, as well as exhibit poor stability or provide a poor mouthfeel, and these considerations also influence the selection of microalgae for use in the disclosed methods.

Microalgae from the genus *Chlorella* are generally useful in the disclosed methods. *Chlorella* is a genus of single-celled green algae, belonging to the phylum Chlorophyta. *Chlorella* cells are generally spherical in shape, 2 to 10 µm in diameter, and lack flagella. Some species of *Chlorella* are naturally heterotrophic. In preferred embodiments, the microalga used in the disclosed methods is *Chlorella protothecoides*, *Chlorella ellipsoidea*, *Chlorella minutissima*, *Chlorella zofinienesi, Chlorella luteoviridis, Chlorella kessleri, Chlorella sorokiniana, Chlorella fusca var. vacuolata Chlorella sp., Chlorella cf. minutissima* or *Chlorella emersonii. Chlorella,* particularly *Chlorella protothecoides,* is a preferred microorganism for use in the disclosed methods because of its high composition of lipid. Particularly preferred species of *Chlorella protothecoides* for use in the methods include those exemplified in the examples below.

Other species of *Chlorella* suitable for use in the disclosed methods include the species selected from the group consisting of *anitrata, Antarctica, aureoviridis, candida, capsulate, desiccate, ellipsoidea* (including strain CCAP 211/42), *emersonii, fusca* (including *var. vacuolata*), *glucotropha, infusionum* (including *var. actophila* and *var. auxenophila*), *kessleri* (including any of UTEX strains 397,2229,398), *lobophora* (including strain SAG 37.88), *luteoviridis* (including strain SAG 2203 and *var. aureoviridis* and *lutescens), miniata, cf. minutissima, minutissima* (including UTEX strain 2341), *mutabilis, nocturna, ovalis, parva, photophila, pringsheimii, protothecoides* (including any of UTEX strains 1806, 411, 264, 256, 255, 250, 249, 31, 29, 25 or CCAP 211/8D, or CCAP 211/17 and *var. acidicola*), *regularis* (including *var. minima,* and *umbricata*), *reisiglii* (including strain CCP 11/8), *saccharophila* (including strain CCAP 211/31, CCAP 211/32 and *var. ellipsoidea*), *salina, simplex, sorokiniana* (including strain SAG 211.40B), *sp.* (including UTEX strain 2068 and CCAP 211/92), *sphaerica, stigmatophora, trebouxioides, vanniellii, vulgaris* (including strains CCAP 211/11K, CCAP 211/80 and *f*. *tertia* and *var. autotrophica, viridis, vulgaris, vulgaris f. tertia, vulgaris f. viridis*), *xanthella,* and *zofingiensis.*

Species of *Chlorella* (and species from other microalgae genera) for use in the disclosed methods can be identified by comparison of certain target regions of their genome with those same regions of species identified herein; preferred species are those that exhibit identity or at least a very high level of homology with the species identified herein. For example, identification of a specific *Chlorella* species or strain can be achieved through amplification and sequencing of nuclear and/or chloroplast DNA using primers and methodology using appropriate regions of the genome, for example using the methods described in Wu et al., Bot. Bull. Acad. Sin. 42:115-121 (2001), Identification of *Chlorella spp.* isolates using ribosomal DNA sequences. Well established methods of phylogenetic analysis, such as amplification and sequencing of ribosomal internal transcribed spacer (ITS 1 and ITS2 rDNA), 23S RNA, 18S rRNA and other conserved genomic regions can be used by those skilled in the art to identify species of not only *Chlorella* but other oil and lipid producing microalgae suitable for use in the methods disclosed herein. For examples of methods of identification and classification of algae see Genetics, 170(4):1601-10 (2005) and RNA, 11(4):361-4 (2005).

Thus, genomic DNA comparison can be used to identify suitable species of microalgae to be used in the disclosed methods. Regions of conserved genomic DNA, such as and not limited to DNA encoding for 23S rRNA, can be amplified from microalgal species that may be, for example, taxonomically related to the preferred microalgae used in the disclosed methods and compared to the corresponding regions of those preferred species. Species that exhibit a high level of similarity are then selected for use in the disclosed methods. Illustrative examples of such DNA sequence comparison among species within the *Chlorella* genus are presented below. In some cases, the microalgae that are preferred for use in the disclosed methods have genomic DNA sequences encoding for 23S rRNA that have at least 65% nucleotide identity to at least one of the sequences listed in SEQ ID NOs: 1-23 and 26-27. In other cases, microalgae that are preferred for use in the disclosed methods have genomic DNA sequences encoding for 23S rRNA that have at least 75%, 85%, 90%, 95%, 96%, 97%, 98%, 99% or greater nucleotide identity to at least one or more of the sequences listed in SEQ ID NOs: 1-23 and 26-27. Genotyping of a food composition and/or of algal biomass before it is combined with other ingredients to formulate a food composition is also a reliable method for determining if algal biomass is from more than a single strain of microalgae.

For sequence comparison to determine percent nucleotide or amino acid identity, typically one sequence acts as a reference sequence, to which test sequences are compared. In applying a sequence comparison algorithm, test and reference sequences are input into a computer, subsequence coordinates are designated, if necessary, and sequence algorithm program parameters are designated. The sequence comparison algorithm then calculates the percent sequence identity for the test sequence(s) relative to the reference sequence, based on the designated program parameters. Optimal alignment of sequences for comparison can be conducted, *e.g.* by the local homology algorithm of Smith & Waterman, Adv. Appl. Math. 2:482 (1981), by the homology alignment algorithm of Needleman & Wunsch, J. Mol. Biol. 48:443 (1970), by the search for similarity method of Pearson & Lipman, Proc. Nat'l. Acad. Sci. USA 85:2444 (1988), by computerized implementations of these algorithms (GAP, BESTFIT, FASTA and TFASTA in the Wisconsin Genetics Software Package, Genetics Computer Group, 575 Science Dr., Madison, WI), or by visual inspection (see generally Ausubel *et al., supra*). Another example algorithm that is suitable for determining percent sequence identity and sequence similarity is the BLAST algorithm, which is described in Altschul et al., J. Mol. Biol. 215:403-410 (1990). Software for performing BLAST analyses is publicly available through the National Center for Biotechnology Information (at the web address www.ncbi.nlm.nih.gov).

In addition to *Chlorella,* other genera of microalgae can also be used in the disclosed methods. In preferred embodiments, the microalga is a species selected from the group consisting *Parachlorella kessleri, Parachlorella beijerinckii, Neochloris oleabundans, Bracteacoccus,* including *B. grandis, B. cinnabarinas,* and *B. aerius, Bracteococcus sp.* or *Scenedesmus rebescens.* Other non-limiting examples of microalgal species include those species from the group of species and genera consisting of *Achnanthes orientalis; Agmenellum; Amphiprora hyaline; Amphora,* including *A. coffeiformis* including *A.c. linea, A.c. punctata, A.c. taylori, A.c. tenuis, A.c. delicatissima, A.c. delicatissima capitata; Anabaena; Ankistrodesmus,* including *A. falcatus; Boekelovia hooglandii; Borodinella; Botryococcus braunii,* including *B. sudeticus; Bracteoccocus,* including *B. aerius, B.grandis, B.cinnabarinas, B.minor,* and *B.medionucleatus; Carteria; Chaetoceros,* including *C*. *gracilis, C. muelleri,* and *C*. *muelleri subsalsum; Chlorococcum,* including *C*. *infusionum; Chlorogonium; Chroomonas; Chrysosphaera; Cricosphaera; Crypthecodinium cohnii; Cryptomonas; Cyclotella,* including *C*. *cryptica* and *C*. *meneghiniana; Dunaliella,* including *D. bardawil, D. bioculata, D. granulate, D. maritime, D. minuta, D. parva, D. peircei, D. primolecta, D. salina, D. terricola, D. tertiolecta,* and *D. viridis; Eremosphaera,* including *E*. *viridis; Ellipsoidon; Euglena; Franceia; Fragilaria,* including *F. crotonensis; Gleocapsa; Gloeothamnion; Hymenomonas; Isochrysis,* including *I. aff. galbana* and *I. galbana; Lepocinclis; Micractinium* (including UTEX LB 2614); *Monoraphidium,* including *M. minutum; Monoraphidium; Nannochloris; Nannochloropsis,* including *N. salina; Navicula,* including *N. acceptata, N. biskanterae, N. pseudotenelloides, N. pelliculosa,* and *N. saprophila; Neochloris oleabundans; Nephrochloris; Nephroselmis; Nitschia communis; Nitzschia,* including *N. alexandrina, N. communis, N. dissipata, N. frustulum, N. hantzschiana, N. inconspicua, N. intermedia, N. microcephala, N. pusilla, N. pusilla elliptica, N. pusilla monoensis,* and *N. quadrangular; Ochromonas; Oocystis,* including *O*. *parva* and *O. pusilla; Oscillatoria,* including *O*. *limnetica* and *O*. *subbrevis; Parachlorella,* including *P. beijerinckii* (including strain SAG 2046) and *P. kessleri* (including any of SAG strains 11.80, 14.82, 21.11H9); *Pascheria*, including P. *acidophila; Pavlova; Phagus; Phormidium; Platymonas; Pleurochrysis,* including *P. carterae* and *P. dentate; Prototheca,* including *P*. *stagnora* (including UTEX 327), *P. portoricensis,* and *P. moriformis* (including UTEX strains 1441,1435, 1436, 1437, 1439); *Pseudochlorella aquatica; Pyramimonas; Pyrobotrys; Rhodococcus opacus; Sarcinoid chrysophyte; Scenedesmus,* including *S. armatus* and *S*. *rubescens; Schizochytrium; Spirogyra; Spirulina platensis; Stichococcus; Synechococcus; Tetraedron; Tetraselmis,* including *T. suecica; Thalassiosira weissflogii;* and *Viridiella fridericiana.*

All fermentation processes are subject to contamination by other microbes. The the algal flour used in the products of the present invention is derived from microbes grown and processed under conditions to minimize contamination. Nevertheless, contamination can never be completely prevented. The contamination can occur during all phases of the operation, including during cultivation and propagation, harvesting of the microalgae, the preparation of the algal flour and during transport and storage of the algal flour. The contaminant microbe species may or may not be identified.

The algal flour may comprise contaminant microbes of less than or equal to 10,000 colony forming units (CFU) per gram of algal flour, less than or equal to 7,500 CFU per gram of algal flour, less than or equal to 5,000 CFU per gram of algal flour or less than or equal to 2,500 CFU per gram of algal flour.

The algal flour may comprise contaminant microbes, wherein the contaminant microbe is selected from the group consisting of contaminating yeast of less than or equal to 200 CFU per gram of algal flour, less than or equal to 150 CFU per gram of algal flour, less than or equal to 100 CFU per gram of algal flour, or less than or equal to 50 CFU per gram of algal flour. The algal flour may comprise contaminant microbes, wherein the contaminant microbe is selected from the group consisting of contaminating mold of less than or equal to 200 CFU per gram of algal flour, less than or equal to 150 CFU per gram of algal flour, less than or equal to 100 CFU per gram of algal flour, less than or equal to 50 CFU per gram of algal flour. The algal flour may comprise contaminant microbes, wherein the contaminant microbe is selected from the group consisting of contaminating coliform bacteria) of less than or equal to 10 CFU per gram of algal flour, contaminating coliform bacteria) of less than or equal to 8 CFU per gram of algal flour, contaminating coliform bacteria of less than or equal to 5 CFU per gram of algal flour. The algal flour may comprise contaminant microbes, wherein the contaminant microbe is selected from the group consisting of contaminating *Escherichia coli* of less than or equal to 10 CFU per gram of algal flour, less than or equal to 8 CFU per gram of algal flour, less than or equal to 6 CFU per gram of algal flour, less than or equal to 4 CFU per gram of algal flour. The algal flour may comprise contaminant microbes, wherein the contaminant microbe is selected from the group consisting of contaminating *Staphylococci* of less than or equal to 20 CFU per gram of algal flour, less than or equal to 15 CFU per gram of algal flour, less than or equal to 10 CFU per gram of algal flour or less than or equal to 5 CFU per gram of algal flour. The algal flour may comprise contaminant microbes, wherein the contaminating *Salmonella, Pseudomonas aeruginosa,* or *Listeria* is undetectable in 50 grams of algal flour, undetectable in 25 grams of algal flour, undetectable in 20 grams of algal flour, undetectable in 15 grams of algal flour, undetectable in 10 grams of algal flour.

The amount of contaminant microbes can be measured by tests known to those skilled in the art. For example, total aerobic plate count, coliform and *E. coli*, *Salmonella,* and *Listeria* contamination can be determined by AOAC 966.23, 966.24, 2004.03 and 999.06 respectively. Yeast and mold contamination can be measured by the methods disclosed in FDA-BAM, 7th edition; and Staphylococci and Pseudomonas aeruginosa by USP31, NF26, 2008; and the like.

In some embodiments, food compositions and food ingredients such as algal flour or algal biomass is derived from algae having at least 90%, at least 95% or at least 98% 23S rRNA genomic sequence identity to one or more sequences selected from the group consisting of SEQ ID NO:1, SEQ ID NO:2, SEQ ID NO:3, SEQ ID NO:4, SEQ ID NO:5, SEQ ID NO:6, SEQ ID NO:7, SEQ ID NO:8, SEQ ID NO:9, SEQ ID NO:10, SEQ ID NO:11, SEQ ID NO:12, SEQ ID NO:13, SEQ ID NO:14, SEQ ID NO:15, SEQ ID NO:16, SEQ ID NO:17, SEQ ID NO:18, SEQ ID NO:19, SEQ ID NO:20, SEQ ID NO:21, SEQ ID NO:22, SEQ ID NO:23, SEQ ID NO:26 and SEQ ID NO:27.

### B. Methods of Generating a Microalgae Strain Lacking or That has Significantly Reduced Pigmentation

Microalgae, such as *Chlorella*, can be capable of either photosynthetic or heterotrophic growth. When grown in heterotrophic conditions where the carbon source is a fixed carbon source and in the absence of light, normally green colored microalgae have a yellow color and lack or are significantly reduced in green pigmentation. Microalgae of reduced (or lacking in) green pigmentation can be advantageous as a food ingredient. One advantage of microalgae of reduced (or lacking in) green pigmentation is that the microalgae have a reduced chlorophyll flavor. Another advantage of microalgae of reduced (or lacking in) green pigmentation is that, as a food ingredient, the addition of the microalgae to foodstuffs will not impart a green color that can be unappealing to the consumer. The reduced green pigmentation of microalgae grown under heterotrophic conditions is transient. When switched back to phototrophic growth, microalgae capable of both phototrophic and heterotrophic growth will regain the green pigmentation. Additionally, even with reduced green pigments, heterotrophically grown microalgae are a yellow color and this may be unsuitable for some food applications where the consumer expects the color of the foodstuff to be white or light in color. Thus, it is advantageous to generate a microalgal strain that is capable of heterotrophic growth (so it is reduced or lacking in green pigmentation) and is also reduced in yellow pigmentation (so that it is a neutral color for food applications).

One method for generating such a microalgal strain lacking in or having significantly reduced pigmentation is through mutagenesis and then screening for the desired phenotype. Several methods of mutagenesis are known and practised in the art. For example, Urano et al. (Urano et al., J Bioscience Bioengineering (2000) v. 90(5): pp. 567-569) describes yellow and white color mutants of *Chlorella ellipsoidea* generated using UV irradiation. Kamiya (Kamiya, Plant Cell Physiol. (1989) v. 30(4): 513-521) describes a colorless strain of *Chlorella vulgaris,* 11h (M125).

In addition to mutagenesis by UV irradiation, chemical mutagenesis can also be employed in order to generate microalgae with reduced (or lacking in) pigmentation. Chemical mutagens such as ethyl methanesulfonate (EMS) or N-methyl-N'nitro-N-nitroguanidine (NTG) have been shown to be effective chemical mutagens on a variety of microbes including yeast, fungi, mycobacterium and microalgae. Mutagenesis can also be carried out in several rounds, where the microalga is exposed to the mutagen (either UV or chemical or both) and then screened for the desired reduced pigmentation phenotype. Colonies with the desired phenotype are then streaked out on plates and reisolated to ensure that the mutation is stable from one generation to the next and that the colony is pure and not of a mixed population.

In a particular example, *Chlorella protothecoides* was used to generate strains lacking in or with reduced pigmentation using a combination of UV and chemical mutagenesis. *Chlorella protothecoides* was exposed to a round of chemical mutagenesis with NTG and colonies were screened for color mutants. Colonies not exhibiting color mutations were then subjected to a round of UV irradiation and were again screened for color mutants. In one embodiment, a *Chlorella protothecoides* strain lacking in pigmentation was isolated and is *Chlorella protothecoides* 33-55, deposited on October 13, 2009 at the American Type Culture Collection at 10801 University Boulevard, Manassas, VA 20110-2209, in accordance with the Budapest Treaty, with a Patent Deposit Designation of PTA-10397. In another embodiment, a *Chlorella protothecoides* strain with reduced pigmentation was isolated and is *Chlorella protothecoides* 25-32, deposited on October 13, 2009 at the American Type Culture Collection at 10801 University Boulevard, Manassas, VA 20110-2209, in accordance with the Budapest Treaty, with a Patent Deposit Designation of PTA-10396.

### C. Media and Culture Conditions for Microalgae

Microalgae are cultured in liquid media to propagate biomass. In the disclosed methods, microalgal species are grown in a medium containing a fixed carbon and/or fixed nitrogen source in the absence of light. Such growth is known as heterotrophic growth. For some species of microalgae, for example, heterotrophic growth for extended periods of time such as 10 to 15 or more days under limited nitrogen conditions results accumulation of high lipid content in cells.

Microalgal culture media typically contains components such as a fixed carbon source (discussed below), a fixed nitrogen source (such as protein, soybean meal, yeast extract, cornsteep liquor, ammonia (pure or in salt form), nitrate or nitrate salt), trace elements (for example, zinc, boron, cobalt, copper, manganese and molybdenum in, *e.g.* the respective forms of ZnCl₂, H₃BO₃, CoCl₂6H₂O, CuCl₂2H₂O, MnCl₂4H₂O and (NH₄)₆Mo₇O₂₄4H₂O), optionally a buffer for pH maintenance and phosphate (a source of phosphorous; other phosphate salts can be used). Other components include salts such as sodium chloride, particularly for seawater microalgae.

In a particular example, a medium suitable for culturing *Chlorella protothecoides* comprises Proteose Medium. This medium is suitable for axenic cultures and a 1L volume of the medium (pH ∼6.8) can be prepared by addition of 1g of proteose peptone to 1 liter of Bristol Medium. Bristol medium comprises 2.94 mM NaNO₃, 0.17 mM CaCl₂2H₂O, 0.3 mM MgSO₄7H₂O, 0.43 mM, 1.29 mM KH₂PO₄ and 1.43 mM NaCl in an aqueous solution. For 1.5% agar medium, 15 g of agar can be added to 1 L of the solution. The solution is covered, autoclaved and then stored at a refrigerated temperature prior to use. Other methods for the growth and propagation of *Chlorella protothecoides* to high oil levels as a percentage of dry weight have been described (see for example Miao and Wu, J. Biotechnology, 2004, 11:85-93 and Miao and Wu, Biosource Technology (2006) 97:841-846 (demonstrating fermentation methods for obtaining 55% oil dry cell weight)). High oil algae can typically be generated by increasing the length of a fermentation while providing an excess of carbon source under nitrogen limitation.

Solid and liquid growth media are generally available from a wide variety of sources and instructions for the preparation of particular media that are suitable for a wide variety of strains of microorganisms can be found, for example, online at http://www.utex.org/, a site maintained by the University of Texas at Austin for its culture collection of algae (UTEX). For example, various fresh water media include 1/2, 1/3, 1/5, 1X, 2/3, 2X CHEV Diatom Medium; 1:1 DYIII/PEA + Gr+; Ag Diatom Medium; Allen Medium; BG11-1 Medium; Bold 1NV and 3N Medium; Botryococcus Medium; Bristol Medium; Chu's Medium; CR1, CR1-S, and CR1+ Diatom Medium; Cyanidium Medium; Cyanophycean Medium; Desmid Medium; DYIII Medium; Euglena Medium; HEPES Medium; J Medium; Malt Medium; MES Medium; Modified Bold 3N Medium; Modified COMBO Medium; N/20 Medium; Ochromonas Medium; P49 Medium; Polytomella Medium; Proteose Medium; Snow Algae Media; Soil Extract Medium; Soilwater: BAR, GR-, GR-/NH4, GR+, GR+/NH4, PEA, Peat, and VT Medium; Spirulina Medium; Tap Medium; Trebouxia Medium; Volvocacean Medium; Volvocacean-3N Medium; Volvox Medium; Volvox-Dextrose Medium; Waris Medium; and Waris+Soil Extract Medium. Various Salt Water Media include: 1%, 5%, and 1X F/2 Medium; 1/2, 1X, and 2X Erdschreiber's Medium; 1/2, 1/3, 1/4, 1/5, 1X, 5/3, and 2X Soil+Seawater Medium; 1/4 ERD; 2/3 Enriched Seawater Medium; 20% Allen + 80 % ERD; Artificial Seawater Medium; BG11-1 + .36% NaCl Medium; BG11-1 + 1% NaCl Medium; Bold 1NV:Erdshreiber (1:1) and (4:1); Bristol-NaCl Medium; Dasycladales Seawater Medium; 1/2 and 1X Enriched Seawater Medium, including ES/10, ES/2, and ES/4; F/2+NH4; LDM Medium; Modified 1X and 2X CHEV; Modified 2 X CHEV + Soil; Modified Artificial Seawater Medium; Porphridium Medium; and SS Diatom Medium.

Other suitable media for use with the disclosed methods can be readily identified by consulting the URL identified above, or by consulting other organizations that maintain cultures of microorganisms, such as SAG, CCAP, or CCALA. SAG refers to the Culture Collection of Algae at the University of Göttingen (Göttingen, Germany), CCAP refers to the culture collection of algae and protozoa managed by the Scottish Association for Marine Science (Scotland, United Kingdom) and CCALA refers to the culture collection of algal laboratory at the Institute of Botany (Třeboň, Czech Republic).

Microorganisms useful in accordance with the disclosed methods are found in various locations and environments throughout the world. As a consequence of their isolation from other species and their resulting evolutionary divergence, the particular growth medium for optimal growth and generation of oil and/or lipid and/or protein from any particular species of microbe can be difficult or impossible to predict, but those of skill in the art can readily find appropriate media by routine testing in view of the disclosure herein. In some cases, certain strains of microorganisms may be unable to grow on a particular growth medium because of the presence of some inhibitory component or the absence of some essential nutritional requirement of the particular strain of microorganism. The examples below provide exemplary methods of culturing various species of microalgae to accumulate high levels of lipid as a percentage of dry cell weight.

The fixed carbon source is a key component of the medium. Suitable fixed carbon sources include, for example, glucose, fructose, sucrose, galactose, xylose, mannose, rhamnose, arabinose, N-acetylglucosamine, glycerol, floridoside, glucuronic acid and/or acetate. Other carbon sources for culturing microalgae include mixtures, such as mixtures of glycerol and glucose, mixtures of glucose and xylose, mixtures of fructose and glucose and mixtures of sucrose and depolymerized sugar beet pulp. Other carbon sources suitable for use in culturing microalgae include black liquor, corn starch, depolymerized cellulosic material (derived from, for example, corn stover, sugar beet pulp and switchgrass), lactose, milk whey, molasses, potato, rice, sorghum, sucrose, sugar beet, sugar cane and wheat. The one or more carbon source(s) can be supplied at a concentration of at least 50 µM, at least 100 µM, at least 500 µM, at least 5 mM, at least 50 mM and at least 500 mM.

Thus, in various embodiments, the fixed carbon energy source used in the growth medium comprises glycerol and/or 5- and/or 6-carbon sugars, such as glucose, fructose and/or xylose, which can be derived from sucrose and/or cellulosic material, including depolymerized cellulosic material. Multiple species of *Chlorella* and multiple strains within a species can be grown in the presence of sucrose, depolymerized cellulosic material and glycerol, as described in US Patent Application Publication Nos. 20090035842, 20090011480, 20090148918, respectively, and PCT Patent Application Publication No. 2008/151149.

Thus, in one embodiment, microorganisms are cultured using depolymerized cellulosic biomass as a feedstock. As opposed to other feedstocks, such as corn starch or sucrose from sugar cane or sugar beets, cellulosic biomass (depolymerized or otherwise) is not suitable for human consumption and could potentially be available at low cost, which makes it especially advantageous. Microalgae can proliferate on depolymerized cellulosic material. Cellulosic materials generally include cellulose at 40-60% dry weight; hemicellulose at 20-40% dry weight; and lignin at 10-30% dry weight. Suitable cellulosic materials include residues from herbaceous and woody energy crops, as well as agricultural crops, *i.e.* the plant parts, primarily stalks and leaves, not removed from the fields with the primary food or fiber product. Examples include agricultural wastes such as sugarcane bagasse, rice hulls, corn fiber (including stalks, leaves, husks and cobs), wheat straw, rice straw, sugar beet pulp, citrus pulp, citrus peels; forestry wastes such as hardwood and softwood thinnings, and hardwood and softwood residues from timber operations; wood wastes such as saw mill wastes (wood chips, sawdust) and pulp mill waste; urban wastes such as paper fractions of municipal solid waste, urban wood waste and urban green waste such as municipal grass clippings; and wood construction waste. Additional cellulosics include dedicated cellulosic crops such as switchgrass, hybrid poplar wood, miscanthus, fiber cane and fiber sorghum. Five-carbon sugars that are produced from such materials include xylose. *Chlorella protothecoides,* for example, can be successfully cultivated under heterotrophic conditions using cellulosic-dervied sugars from cornstover and sugar beet pulp.

Some microbes are able to process cellulosic material and directly utilize cellulosic materials as a carbon source. However, cellulosic material typically needs to be treated to increase the accessible surface area or for the cellulose to be first broken down as a preparation for microbial utilization as a carbon source. Ways of preparing or pretreating cellulosic material for enzyme digestion are well known in the art. The methods are divided into two main categories: (1) breaking apart the cellulosic material into smaller particles in order to increase the accessible surface area; and (2) chemically treating the cellulosic material to create a useable substrate for enzyme digestion.

Methods for increasing the accessible surface area include steam explosion, which involves the use of steam at high temperatures to break apart cellulosic materials. Because of the high temperature requirement of this process, some of the sugars in the cellulosic material may be lost, thus reducing the available carbon source for enzyme digestion (see, for example, Chahal, D.S. et al., Proceedings of the 2nd World Congress of Chemical Engineering; (1981) and Kaar et al., Biomass and Bioenergy (1998) 14(3): 277-87). Ammonia explosion allows for explosion of cellulosic material at a lower temperature but is more costly to perform and the ammonia might interfere with subsequent enzyme digestion processes (see, for example, Dale, B.E. et al., Biotechnology and Bioengineering (1982); 12: 31-43). Another explosion technique involves the use of supercritical carbon dioxide explosion in order to break the cellulosic material into smaller fragments (see, for example, Zheng et al., Biotechnology Letters (1995); 17(8): 845-850).

Methods for chemically treating the cellulosic material to create useable substrates for enzyme digestion are also known in the art. U.S. Patent No. 7,413,882 describes the use of genetically-engineered microbes that secrete beta-glucosidase into the fermentation broth and treating cellulosic material with the fermentation broth to enhance the hydrolysis of cellulosic material into glucose. Cellulosic material can also be treated with strong acids and bases to aid subsequent enzyme digestion. U.S. Patent No. 3,617,431 describes the use of alkaline digestion to break down cellulosic materials.

*Chlorella* can proliferate on media containing combinations of xylose and glucose, such as depolymerized cellulosic material and, surprisingly, some species even exhibit higher levels of productivity when cultured on a combination of glucose and xylose than when cultured on either glucose or xylose alone. Thus, certain microalgae can both utilize an otherwise inedible feedstock, such as cellulosic material (or a pre-treated cellulosic material) or glycerol as a carbon source and produce edible oils. This allows conversion of inedible cellulose and glycerol, which are normally not part of the human food chain (as opposed to corn glucose and sucrose from sugar cane and sugar beet) into high nutrition, edible oils which can provide nutrients and calories as part of the daily human diet. Thus, methods for turning inedible feedstock into high nutrition edible oils, food products, and food compositions are disclosed.

Microalgae co-cultured with an organism expressing a secretable sucrose invertase or cultured in medium containing a sucrose invertase or expressing an exogenous sucrose invertase gene (where the invertase is either secreted or the organism also expresses a sucrose transporter) can proliferate on waste molasses from sugar cane or other sources of sucrose. The use of such low-value, sucrose-containing waste products can provide significant cost savings in the production of edible oils. Thus, the methods of cultivating microalgae on a sucrose feedstock and formulating food compositions and nutritional supplements, as described herein, provide a means to convert low-nutrition sucrose into high nutrition oils (oleic acid, DHA, ARA, etc.) and biomass containing such oils.

As detailed in the above-referenced patent publications, multiple distinct *Chlorella* species and strains proliferate very well not only on purified reagent-grade glycerol but also on acidulated and non-acidulated glycerol by-products from biodiesel transesterification. Surprisingly, some *Chlorella* strains undergo cell division faster in the presence of glycerol than in the presence of glucose. Two-stage growth processes, in which cells are first fed glycerol to increase cell density rapidly and then fed glucose to accumulate lipids, can improve the efficiency with which lipids are produced.

Another method to increase lipid as a percentage of dry cell weight involves the use of acetate as the feedstock for the microalgae. Acetate feeds directly into the point of metabolism that initiates fatty acid synthesis (*i*.*e*. acetyl-CoA); thus providing acetate in the culture can increase fatty acid production. Generally, the microbe is cultured in the presence of a sufficient amount of acetate to increase microbial lipid and/or fatty acid yield, specifically, relative to the yield in the absence of acetate. Acetate feeding is a useful component of the methods provided herein for generating microalgal biomass that has a high percentage of dry cell weight as lipid.

In another embodiment, lipid yield is increased by culturing a lipid-producing microalga in the presence of one or more cofactor(s) for a lipid pathway enzyme *(e.g.* a fatty acid synthetic enzyme). Generally, the concentration of the cofactor(s) is sufficient to increase microbial lipid (*e.g.* fatty acid) yield over microbial lipid yield in the absence of the cofactor(s). In particular embodiments, the cofactor(s) is provided to the culture by including in the culture a microbe secreting the cofactor(s) or by adding the cofactor(s) to the culture medium. Alternatively, the microalgae can be engineered to express an exogenous gene that encodes a protein that participates in the synthesis of the cofactor. In certain embodiments, suitable cofactors include any vitamin required by a lipid pathway enzyme, such as, for example, biotin or pantothenate.

High lipid biomass from microalgae is an advantageous material for inclusion in food products compared to low lipid biomass because it allows for the addition of less microalgal biomass to incorporate the same amount of lipid into a food composition. This is advantageous because healthy oils from high lipid microalgae can be added to food products without altering other attributes, such as texture and taste compared with low lipid biomass. The lipid-rich biomass provided by the disclosed methods typically has at least 25% lipid by dry cell weight. Process conditions can be adjusted to increase the percentage weight of cells that is lipid. For example, in certain embodiments, a microalga is cultured in the presence of a limiting concentration of one or more nutrients, such as, for example, nitrogen, phosphorous or sulfur, while providing an excess of a fixed carbon source, such as glucose. Nitrogen limitation tends to increase microbial lipid yield over microbial lipid yield in a culture in which nitrogen is provided in excess. In particular embodiments, the increase in lipid yield is at least 10%, 50%, 100%, 200% or 500%. The microbe can be cultured in the presence of a limiting amount of a nutrient for a portion of the total culture period or for the entire period. In some embodiments, the nutrient concentration is cycled between a limiting concentration and a non-limiting concentration at least twice during the total culture period.

In a steady growth state, the cells accumulate oil but do not undergo cell division. In one embodiment, the growth state is maintained by continuing to provide all components of the original growth media to the cells with the exception of a fixed nitrogen source. Cultivating microalgal cells by feeding all nutrients originally provided to the cells except a fixed nitrogen source, such as through feeding the cells for an extended period of time, results in a higher percentage of lipid by dry cell weight.

In other embodiments, high lipid biomass is generated by feeding a fixed carbon source to the cells after all fixed nitrogen has been consumed for extended periods of time, such as at least one or two weeks. In some embodiments, cells are allowed to accumulate oil in the presence of a fixed carbon source and in the absence of a fixed nitrogen source for over 20 days. Microalgae grown using conditions described herein or otherwise known in the art can comprise at least 20% lipid by dry weight and often comprise 35%, 45%, 55%, 65% or even 75% or more lipid by dry weight. Percentage of dry cell weight as lipid in microbial lipid production can therefore be improved by holding cells in a heterotrophic growth state in which they consume carbon and accumulate oil but do not undergo cell division.

High protein biomass from algae is another advantageous material for inclusion in food products. The disclosed methods can also provide biomass that has at least 30% of its dry cell weight as protein. Growth conditions can be adjusted to increase the percentage weight of cells that is protein. In a preferred embodiment, a microalga is cultured in a nitrogen rich environment and an excess of fixed carbon energy such as glucose or any of the other carbon sources discussed above. Conditions in which nitrogen is in excess tend to increase microbial protein yield over microbial protein yield in a culture in which nitrogen is not provided in excess. For maximal protein production, the microbe is preferably cultured in the presence of excess nitrogen for the total culture period. Suitable nitrogen sources for microalgae may come from organic nitrogen sources and/or inorganic nitrogen sources. The lipid content of high protein biomass is less than 30%, less than 20% or less than 10% lipid by weight.

Organic nitrogen sources have been used in microbial cultures since the early 1900s. The use of organic nitrogen sources, such as corn steep liquor, was popularized with the production of penicillin from mold. Researchers found that the inclusion of corn steep liquor in the culture medium increased the growth of the microoranism and resulted in an increased yield in products (such as penicillin). An analysis of corn steep liquor determined that it was a rich source of nitrogen and also vitamins, such as B-complex vitamins, riboflavin panthothenic acid, niacin, inositol and nutrient minerals such as calcium, iron, magnesium, phosphorus and potassium (Ligget and Koffler, Bacteriological Reviews (1948);12(4): 297-311). Organic nitrogen sources, such as corn steep liquor, have been used in fermentation media for yeasts, bacteria, fungi and other microorganisms. Non-limiting examples of organic nitrogen sources are yeast extract, peptone, corn steep liquor and corn steep powder. Non-limiting examples of preferred inorganic nitrogen sources include, for example, and without limitation, (NH₄)₂SO₄ and NH₄OH. In one embodiment, the culture media contains only inorganic nitrogen sources. In another embodiment, the culture media contains only organic nitrogen sources. In yet another embodiment, the culture media contains a mixture of organic and inorganic nitrogen sources.

A bioreactor or fermentor is used to culture microalgal cells through the various phases of their physiological cycle. As an example, an inoculum of lipid-producing microalgal cells is introduced into the medium; there is a lag period (lag phase) before the cells begin to propagate. Following the lag period, the propagation rate increases steadily and enters the log, or exponential, phase. The exponential phase is in turn followed by a slowing of propagation due to decreases in nutrients, such as nitrogen, increases in toxic substances and quorum sensing mechanisms. After this slowing, propagation stops and the cells enter a stationary phase or steady growth state, depending on the particular environment provided to the cells. For obtaining protein-rich biomass, the culture is typically harvested during or shortly after the end of the exponential phase. For obtaining lipid-rich biomass, the culture is typically harvested well after then end of the exponential phase, which may be terminated early by allowing nitrogen or another key nutrient (other than carbon) to become depleted, forcing the cells to convert the carbon sources, present in excess, to lipid. Culture condition parameters can be manipulated to optimize total oil production, the combination of lipid species produced and/or production of a specific oil.

Bioreactors offer many advantages for use in heterotrophic growth and propagation methods. As will be appreciated, provisions made to make light available to the cells in photosynthetic growth methods are unnecessary when using a fixed-carbon source in the heterotrophic growth and propagation methods described herein. To produce biomass for use in food, microalgae are preferably fermented in large quantities in liquid, such as in suspension cultures as an example. Bioreactors such as steel fermentors (5000 liter, 10,000 liter, 40,000 liter and higher are used in various embodiments) can accommodate very large culture volumes. Bioreactors also typically allow for the control of culture conditions such as temperature, pH, oxygen tension and carbon dioxide levels. For example, bioreactors are typically configurable using ports attached to tubing, to allow gaseous components, like oxygen or nitrogen, to be bubbled through a liquid culture.

Bioreactors can be configured to flow culture media though the bioreactor throughout the time period during which the microalgae reproduce and increase in number. In some embodiments, for example, media can be infused into the bioreactor after inoculation but before the cells reach a desired density. In other instances, a bioreactor is filled with culture medium at the beginning of a culture and no more culture medium is infused after the culture is inoculated. In other words, the microalgal biomass is cultured in an aqueous medium for a period of time during which the microalgae reproduce and increase in number; however, quantities of aqueous culture medium are not flowed through the bioreactor throughout the time period. Thus in some embodiments, aqueous culture medium is not flowed through the bioreactor after inoculation.

Bioreactors equipped with devices such as spinning blades and impellers, rocking mechanisms, stir bars and means for pressurized gas infusion can be used to subject microalgal cultures to mixing. Mixing may be continuous or intermittent. For example, in some embodiments, a turbulent flow regime of gas entry and media entry is not maintained for reproduction of microalgae until a desired increase in number of said microalgae has been achieved.

Bioreactors are often equipped with various ports that, for example, allow the gas content of the culture of microalgae to be manipulated. To illustrate, part of the volume of a bioreactor can be gas rather than liquid and the gas inlets of the bioreactor allow pumping of gases into the bioreactor. Gases that can be beneficially pumped into a bioreactor include air, air/CO₂ mixtures, noble gases, such as argon, and other gases. Bioreactors are typically equipped to enable the user to control the rate of entry of a gas into the bioreactor. As noted above, increasing gas flow into a bioreactor can be used to increase mixing of the culture.

Increased gas flow affects the turbidity of the culture as well. Turbulence can be achieved by placing a gas entry port below the level of the aqueous culture medium so that gas entering the bioreactor bubbles to the surface of the culture. One or more gas exit ports allow gas to escape, thereby preventing pressure build-up in the bioreactor. Preferably, a gas exit port leads to a "one-way" valve that prevents contaminating microorganisms from entering the bioreactor.

The specific examples of bioreactors, culture conditions and heterotrophic growth and propagation methods described herein can be combined in any suitable manner to improve efficiencies of microbial growth and lipid and/or protein production.

### D. Concentration of Microalgae After Fermentation

Microalgal cultures generated according to the methods described above yield microalgal biomass in fermentation media. To prepare the biomass for use as a food composition, the biomass is concentrated or harvested, from the fermentation medium. At the point of harvesting the microalgal biomass from the fermentation medium, the biomass comprises predominantly intact cells suspended in an aqueous culture medium. To concentrate the biomass, a dewatering step is performed. Dewatering or concentrating refers to the separation of the biomass from fermentation broth or other liquid medium and so is solid-liquid separation. Thus, during dewatering, the culture medium is removed from the biomass (for example, by draining the fermentation broth through a filter that retains the biomass) or the biomass is otherwise removed from the culture medium. Common processes for dewatering include centrifugation, filtration and the use of mechanical pressure. These processes can be used individually or in any combination.

Centrifugation of biomass and broth or other aqueous solution forms a concentrated paste comprising the microalgal cells. Centrifugation does not remove significant amounts of intracellular water. In fact, after centrifugation, there may still be a substantial amount of surface or free moisture in the biomass (*e.g*. upwards of 70%), so centrifugation is not considered to be a drying step.

Filtration can also be used for dewatering. One example of filtration that is suitable for the present methods is tangential flow filtration (TFF), also known as cross-flow filtration. TFF is a separation technique that uses membrane systems and flow force to separate solids from liquids. For an illustrative suitable filtration method, see Geresh, Carb. Polym. 50; 183-189 (2002), which describes the use of a MaxCell A/G Technologies 0.45uM hollow fiber filter. Also see, for example, Millipore Pellicon® devices, used with 100kD, 300kD, 1000 kD (catalog number P2C01MC01), 0.1uM (catalog number P2VVPPV01), 0.22uM (catalog number P2GVPPV01) and 0.45uM membranes (catalog number P2HVMPV01). The retentate preferably does not pass through the filter at a significant level and the product in the retentate preferably does not adhere to the filter material. TFF can also be performed using hollow fiber filtration systems. Filters with a pore size of at least 0.1 micrometer, for example 0.12, 0.14, 0.16, 0.18, 0.2, 0.22, 0.45, or at least 0.65 micrometers, are suitable. Preferred pore sizes of TFF allow solutes and debris in the fermentation broth to flow through, but not microbial cells.

Dewatering can also be effected with mechanical pressure directly applied to the biomass to separate the liquid fermentation broth from the microbial biomass sufficient to dewater the biomass but not to cause predominant lysis of cells. Mechanical pressure to dewater microbial biomass can be applied using, for example, a belt filter press. A belt filter press is a dewatering device that applies mechanical pressure to a slurry (*e.g*. microbial biomass taken directly from the fermentor or bioreactor) that is passed between the two tensioned belts through a serpentine of decreasing diameter rolls. The belt filter press can actually be divided into three zones: the gravity zone, where free draining water/liquid is drained by gravity through a porous belt; a wedge zone, where the solids are prepared for pressure application; and a pressure zone, where adjustable pressure is applied to the gravity-drained solids.

After concentration, microalgal biomass can be processed, as described hereinbelow, to produce vacuum-packed cake, algal flakes, algal homogenate, algal powder, algal flour or algal oil.

### E. Chemical Composition of Microalgal Biomass

The microalgal biomass generated by the culture methods described herein comprises microalgal oil and/or protein as well as other constituents generated by the microorganisms or incorporated by the microorganisms from the culture medium during fermentation.

Microalgal biomass with a high percentage of oil/lipid accumulation by dry weight has been generated using different methods of culture, including methods known in the art. Microalgal biomass with a higher percentage of accumulated oil/lipid is useful in the present methods. *Chlorella vulgaris* cultures with up to 56.6% lipid by dry cell weight (DCW) in stationary cultures grown under autotrophic conditions using high iron (Fe) concentrations have been described (Li et al., Bioresource Technology 99(11):4717-22 (2008). *Nanochloropsis sp.* and *Chaetoceros calcitrans* cultures with 60% lipid by DCW and 39.8% lipid by DCW, respectively, grown in a photobioreactor under nitrogen starvation conditions have also been described (Rodolfi et al., Biotechnology & Bioengineering (2008)). *Parietochloris incise* cultures with approximately 30% lipid by DCW when grown phototropically and under low nitrogen condtions have been described (Solovchenko et al., Journal of Applied Phycology 20:245-251 (2008). *Chlorella protothecoides* can produce up to 55% lipid by DCW when grown under certain heterotrophic conditions with nitrogen starvation (Miao and Wu, Bioresource Technology 97:841-846 (2006)). Other *Chlorella* species, including *Chlorella emersonii, Chlorella sorokiniana* and *Chlorella minutissima* have been described to have accumulated up to 63% oil by DCW when grown in stirred tank bioreactors under low-nitrogen media conditions (Illman et al., Enzyme and Microbial Technology 27:631-635 (2000). Still higher percent lipid by DCW has been reported, including 70% lipid in *Dumaliella tertiolecta* cultures grown in increased NaCl conditions (Takagi et al., Journal of Bioscience and Bioengineering 101(3): 223-226 (2006)) and 75% lipid in *Botryococcus braunii* cultures (Banerjee et al., Critical Reviews in Biotechnology 22(3): 245-279 (2002)).

Heterotrophic growth results in relatively low chlorophyll content (as compared to phototrophic systems such as open ponds or closed photobioreactor systems). Reduced chlorophyll content generally improves organoleptic properties of microalgae and therefore allows more algal biomass (or oil prepared therefrom) to be incorporated into a food product. The reduced chlorophyll content found in heterotrophically grown microalgae (*e.g*. *Chlorella*) also reduces the green color in the biomass as compared to phototrophically grown microalgae. Thus, the reduced chlorophyll content avoids an often undesired green coloring associated with food products containing phototrophically grown microalgae and allows for the incorporation or an increased incorporation of algal biomass into a food product. In at least one embodiment, the food product contains heterotrophically grown microalgae of reduced chlorophyll content compared to phototrophically grown microalgae. In the present invention, the chlorophyll content of microalgal flour is less than 200ppm, less than 100ppm, less than 50ppm, less than 10ppm, less than 2ppm or less than 1ppm.

Oil rich microalgal biomass and algal flour generated by the culture methods described herein are useful for the present methods and comprise at least 10% microalgal oil by DCW. In some embodiments, the microalgal biomass or algal flour comprises at least 15%, 25-35%, 30-50%, 50-55%, 50-65%, 54-62%, 56-60%, at least 75% or at least 90% microalgal oil by DCW.

The microalgal oil of the biomass described herein (or extracted from the biomass or algal flour) can comprise glycerolipids with one or more distinct fatty acid ester side chains. Glycerolipids are comprised of a glycerol molecule esterified to one, two, or three fatty acid molecules, which can be of varying lengths and have varying degrees of saturation. Specific blends of algal oil can be prepared either within a single species of alga or by mixing together the biomass (or algal oil) from two or more species of microalgae.

Thus, the oil composition, *i.e.* the properties and proportions of the fatty acid constituents of the glycerolipids, can also be manipulated by combining biomass (or oil) from at least two distinct species of microalgae. In some embodiments, at least two of the distinct species of microalgae have different glycerolipid profiles. The distinct species of microalgae can be cultured together or separately as described herein, preferably under heterotrophic conditions, to generate the respective oils. Different species of microalgae can contain different percentages of distinct fatty acid constituents in the cell's glycerolipids.

In some embodiments, the microalgal oil is primarily comprised of monounsaturated oil such as 18:1 (oleic) oil, particularly in triglyceride form. In some cases, the algal oil is at least 20% monounsaturated oil by weight. In various embodiments, the algal oil is at least 25%, 50%, 75% or more monounsaturated oil such as 18:1 by weight or by volume. In some embodiments, the monounsaturated oil is 18:1, 16:1, 14:1 or 12:1. In some cases, the algal oil is 60-75%, 64-70% or 65-69% 18:1 oil. In some embodiments, the microalgal oil comprises at least 10%, 20%, 25% or 50% or more esterified oleic acid or esterified alpha-linolenic acid by weight or by volume (particularly in triglyceride form). In at least one embodiment, the algal oil comprises less than 10%, less than 5%, less than 3%, less than 2%, less than 1% by weight or by volume or is substantially free of esterified docosahexanoic acid (DHA (22:6)) (particularly in triglyceride form). For examples of production of high DHA-containing microalgae, such as in *Crypthecodinium cohnii*, see US Patents Nos. 7,252,979, 6,812,009 and 6,372,460. In some embodiments, the lipid profile of extracted oil or oil in microalgal flour or algal biomass is less than 2% 14:0; 13-16% 16:0; 1-4% 18:0; 64-70% 18:1; 10-16% 18:2; 0.5-2.5% 18:3; and less than 2% oil of a carbon chain length 20 or longer.

Microalgal biomass (and oil extracted therefrom) can also include other constituents produced by the microalgae or incorporated into the biomass from the culture medium. These other constituents can be present in varying amounts depending on the culture conditions used and the species of microalgae (and, if applicable, the extraction method used to recover microalgal oil from the biomass). In general, the chlorophyll content in the high protein microalgal biomass is higher than the chlorophyll content in the high lipid microalgal biomass. In some embodiments, the chlorophyll content in the microalgal biomass is less than 200 ppm or less than 100 ppm. The other constituents can include, without limitation, phospholipids (*e.g*. algal lecithin), carbohydrates, soluble and insoluble fiber, glycoproteins, phytosterols (*e.g*. β-sitosterol, campesterol, stigmasterol, ergosterol and brassicasterol), tocopherols, tocotrienols, carotenoids (*e.g*. α-carotene, β-carotene and lycopene), xanthophylls (*e.g*. lutein, zeaxanthin, α-cryptoxanthin and β-cryptoxanthin), proteins, polysaccharides (*e.g*. arabinose, mannose, galactose, 6-methyl galactose and glucose) and various organic or inorganic compounds (*e.g*. selenium).

In some cases, the biomass or algal flour comprises at least 10 ppm selenium. In some cases, the biomass or algal flour comprises at least 25% w/w algal polysaccharide. In some cases, the biomass or algal flour comprises at least 15% w/w algal glycoprotein. In some cases, the biomass, algal flour or oil derived from the biomass comprises between 0-200, 0-115 or 50-115 mcg total carotenoid per gram of algal biomass or algal flour and in specific emodiments 20-70 or 50-60 mcg of the total carotenoid content is lutein. In some cases, the biomass or algal flour comprises at least 0.5% algal phospholipids or from 0.25% to 1.5% total phospholipids per gram of algal flour or algal biomass. In some cases, the biomass, algal flour or oil derived from the algal biomass contains at least 0.10, 0.02-0.5 or 0.05-0.3 mg/g total tocotrienols and in specific emodiments 0.05-0.25 mg/g is alpha tocotrienol. In some cases, the biomass, algal flour or oil derived from the algal biomass contains between 0.125 mg/g to 0.35 mg/g total tocotrienols. In some cases, the algal flour or the oil derived from the algal biomass contains at least 5.0, 1-8, 2-6 or 3-5 mg/100g total tocopherols and in specific emodiments 2-6 mg/100g is alpha tocopherol. In some cases, the algal flour or the oil derived from the algal biomass contains between 5.0mg/100g to 10mg/100g tocopherols.

In some cases the composition of other components of microalgal biomass is different for high protein biomass as compared to high lipid biomass. In specific embodiments, the high protein biomass, the algal flour or the oil contains between 0.18-0.79 mg/100g of total tocopherol and in specific embodiments the high protein biomass, the algal flour or the oil contains 0.01-0.03 mg/g tocotrienols. In some cases, the high protein biomass, the algal flour or the oil biomass also contains between 1-3g/100g total sterols and in specific embodiments 1.299-2.46g/100g total sterols. Detailed descriptions of tocotrienols and tocopherols composition in *Chlorella protothecoides* is included in the Examples below.

In some embodiments, the microalgal biomass or the algal flour comprises 20-45% carbohydrate by dry weight. In other embodiments, the biomass or the algal flour comprises 25-40% or 30-35% carbohydrate by dry weight. Carbohydrate can be dietary fiber as well as free sugars such as sucrose and glucose. In some embodiments the free sugar in microalgal biomass is 1-10%, 2-8%, or 3-6% by dry weight. In certain embodiments the free sugar component comprises sucrose.

In some cases, the microalgal biomass or the algal flour comprises at least 5% soluble fiber. In other embodiments, the microalgal biomass or the algal flour comprises at least 10% soluble fiber or at least 20% to 35% soluble fiber. In some embodiments, the microalgal biomass or the algal flour comprises at least 5% insoluble fiber. In other embodiments, the microalgal biomass or the algal flour comprises at least 5% to at least 10%, or at least 10% to 25% or at least 25% to 50% insoluble fiber. Total dietary fiber is the sum of soluble fiber and insoluble fiber. In some embodiments, the microalgal biomass or the algal flour comprises at least 20% total dietary fiber. In other embodiments, the microalgal biomass or the algal flour comprises at least 25%, 50%, 55%, 60% or 75% total dietary fiber.

In one embodiment the monosaccharide content of the total fiber (total carbohydrate minus free sugars) is 1-20% arabinose; 5-50% mannose; 15-80% galactose; and 10-70% glucose. In other embodiments the monosaccharide content of the total fiber is 1-2% arabinose; 10-15% mannose; 20-30% galactose; and 55-65% glucose.

### III. PROCESSING MICROALGAL BIOMASS INTO ALGAL FLOUR AND FINISHED FOOD INGREDIENTS

The concentrated microalgal biomass produced in accordance with the disclosed methods is itself a finished food ingredient and may be used in foodstuffs without further, or with only minimal, modification. For example, the cake can be vacuum-packed or frozen. Alternatively, the biomass may be dried via lyophilization. However, a variety of microalgal derived finished food ingredients with enhanced properties can result from processing methods disclosed herein that can be applied to the concentrated microalgal biomass. Algal flour comprises the algal cells grown, cultivated or propagated as disclosed herein or under conditions well known to those skilled in the art and processed into algal flour as disclosed herein.

Drying the microalgal biomass, either predominantly intact or in homogenate form, is advantageous to facilitate further processing or for use of the biomass in the methods and compositions described herein. Drying refers to the removal of free or surface moisture/water from predominantly intact biomass or the removal of surface water from a slurry of homogenized (*e.g*. by micronization) biomass. Different textures and flavors can be conferred on food products depending on whether the algal biomass is dried and, if so, the drying method. Drying the biomass generated from the cultured microalgae described herein removes water that may be an undesirable component of finished food products or food ingredients. In some cases, drying the biomass may facilitate a more efficient microalgal oil extraction process.

In one embodiment, the concentrated microalgal biomass is first disrupted and then spray or flash dried (*i.e.* subjected to a pneumatic drying process) to form a powder containing predominantly lysed cells to produce algal flour. In another embodiment, substantially all of the oil contained in the algal flour is extracted, leaving the defatted algal flour which is predominantly made up of carbohydrates (including in the form of dietary fiber), proteins and residual oil or lipids.

In some embodiments, the microalgal biomass or algal flour is 15% or less, 10% or less, 5% or less, 2-6% or 3-5% moisture by weight after drying.

### A. Algal Flour

Algal flour is prepared from concentrated microalgal biomass that has been mechanically lysed and homogenized and the homogenate spray or flash dried into a powder form (or dried using another pneumatic drying system). The production of algal flour requires that cells be lysed to release their oil and that cell wall and intracellular components be micronized or at least reduced in particle size. The average size of particles measured immediately after homogenation or as soon is practical thereafter is preferably no more than 10, no more than 25 or no more than 100 µm. In some embodiments, the average particle size is 1-10, 1-15, 10-100 or 1-40 µm. In some embodiments, the average particle size is greater than 10 µm and up to 100 µm. In some embodiments, the average particle size is 0.1-100 µm.

The average size of a *Chlorella protothecoides* cell is about 5 to 15 µm. Upon preparation into algal flour as disclosed herein, the average particle size is less than 10 µm. As taught in Example 8, varying the homogenization conditions resulted different particle sizes. The skilled artisan will recognize that the homogenization conditions can be varied to yield different particle sizes.

The individual cells comprising the biomass (algal biomass particles) or the algal flour particles aggolemerate to varying degrees. In one embodiment, the agglomerated algal flour particles or the agglomerated algal biomass particles have particle sizes of less than 1,000 µm, less than 750 µm, less than 500 µm, less than 250 µm, or less than 100 µm.

As noted in discussion of micronization, and particularly if measured by a technique, such as laser diffraction, which measures clumps rather than individual particles, average size of particles are preferably measured immediately after homogenization has occurred or as soon as practical thereafter (e.g. within 2 weeks) to avoid or minimize potential distortions of measurement of particle size due to clumping. In practice, the emulsions resulting from homogenization can usually be stored at least two weeks in a refrigerator without material change in particle size. Some techniques for measuring particle size, such as laser diffraction, measure the size of clumps of particles rather than individual particles. The clumps of particles measured have a larger average size than individual particles (e.g. 1-100 microns). Light microscopy of microalgal flour dispersed in water shows both individual particles and clusters of particles. On dispersion of algal flour in water with sufficient blending (e.g.with a hand blender) but without repeating the original homogenization, the clumps can be broken down and laser diffraction can again usually detect an average particle size of no more than 10 µm. Software for automated size analysis of particles from electron micrographs is commercially available and can also be used for measuring particle size. Here as elsewhere, average particle size can refer to any art-recognized measure of an average, such as mean, geometric mean, median or mode. Particle size can be measured by any art-recognized measure including the longest dimension of a particle or the diameter of a particle of equivalent volume. Because particles are typically approximately spherical in shape, these measurements can be essentially the same.

Following homogenization, the resulting oil, water and micronized particles are emulsified such that the oil does not separate from the dispersion prior to drying. For example, a pressure disrupter can be used to pump a cell-containing slurry through a restricted orifice valve to lyse the cells. High pressure (up to 1500 bar) is applied, followed by an instant expansion through an exiting nozzle. Cell disruption is accomplished by three different mechanisms: impingement on the valve, high liquid shear in the orifice and sudden pressure drop upon discharge, causing an explosion of the cell. The method releases intracellular molecules. A Niro (Niro Soavi GEA) homogenizer (or any other high pressure homogenizer) can be used to process cells to particles predominantly 0.2 to 5 microns in length. Processing of algal biomass under high pressure (approximately 1000 bar) typically lyses over 90% of the cells and reduces particle size to less than 5 microns.

Alternatively, a ball mill can be used. In a ball mill, cells are agitated in suspension with small abrasive particles, such as beads. Cells break because of shear forces, grinding between beads and collisions with beads. The beads disrupt the cells to release cellular contents. In one embodiment, algal biomass is disrupted and formed into a stable emulsion using a Dyno-mill ECM Ultra (CB Mills) ball mill. Cells can also be disrupted by shear forces, such as with the use of blending (such as with a high speed or Waring blender as examples), the french press or even centrifugation in case of weak cell walls, to disrupt cells. A suitable ball mill including specifics of ball size and blade is described in US Patent No. 5,330,913.

The immediate product of homogenization is a slurry of particles smaller in size than the original cells that is suspended in in oil and water. The particles represent cellular debris. The oil and water are released by the cells. Additional water may be contributed by aqueous media containing the cells before homogenization. The particles are preferably in the form of a micronized homogenate. If left to stand, some of the smaller particles may coalesce. However, an even dispersion of small particles can be preserved by seeding with a microcrystalline stabilizer, such as microcrystalline cellulose.

To form the algal flour, the slurry is spray or flash dried, removing water and leaving a dry powder-like material containing cellular debris and oil. Although the oil content of the flour (i.e. disrupted cells as a powder-like material) can be at least 10, 25 or 50% by weight of the dry powder, the powder can have a dry rather than greasy feel and appearance (*e.g*. lacking visible oil) and can also flow freely when shaken. Various flow agents (including silica-derived products such as precipitated silica, fumed silica, calcium silicate and sodium aluminum silicates) can also be added. Application of these materials to high fat, hygroscopic or sticky powders prevents caking post drying and in package, promotes free-flow of dry powders and can reduce sticking, build up and oxidation of materials on dryer surfaces. All are approved for food use at FDA designated maximum levels. After drying, the water or moisture content of the powder is typically less than 10%, 5%, 3% or 1% by weight. Other dryers such as pneumatic dryers or pulse combustion dryers can also be used to produce algal flour.

The oil content of algal flour can vary depending on the percent oil of the algal biomass. Algal flour can be produced from algal biomass of varying oil content. In certain embodiments, the algal flour is produced from algal biomass of the same oil content. In other embodiments, the algal flour is produced from alglal biomass of different oil content. In the latter case, algal biomass of varying oil content can be combined and then the homogenization step performed. In other embodiments, algal flour of varying oil content is produced first and then blended together in various proportions in order to achieve an algal flour product that contains the final desired oil content. In a further embodiment, algal biomass of different lipid profiles can be combined together and then homogenized to produce algal flour. In another embodiment, algal flour of different lipid profiles is produced first and then blended together in various proportions in order to achieve an algal flour product that contains the final desired lipid profile.

The algal flour or algal biomass is useful for a wide range of food preparations. Because of the oil content, fiber content and the micronized particles, algal flour or algal biomass is a multifunctional food ingredient.

### B. Defatted Algal Flour

In some cases, algal flour (or any disrupted microalgal biomass) can be subjected to an oil extraction process to produce a defatted algal flour or algal biomass. Microalgal oils can be extracted using liquefaction (see for example Sawayama et al., Biomass and Bioenergy 17:33-39 (1999) and Inoue et al., Biomass Bioenergy 6(4):269-274 (1993)); oil liquefaction (see for example Minowa et al., Fuel 74(12):1735-1738 (1995)); or supercritical CO₂ extraction (see for example Mendes et al., Inorganica Chimica Acta 356:328-334 (2003)). Defatted algal flour that has had substantially all the oil extracted from it using supercritical CO₂ extraction usually will contain phospholipids as a function of the extraction process. Other oil extraction methods including the use of both a polar and non-polar solvent will not only substantially extract all of the oil from the microalgal flour but also extract the phospholipids. The defatted algal flour still retains the protein and carbohydrates of the pre-extracted algal flour. The carbohydrates contained in the defatted algal flour include carbohydrates in the form of dietary fiber (both insoluble and soluble fiber).

Defatted algal flour or algal biomass, with or without phospholipids, are useful as a functional food ingredient. Defatted algal flour or algal biomass containing phospholipids have a high emulsifying capacity. Defatted algal flour or algal biomass with and without phospholipids have a great water retention capacity and therefore are useful in a variety of food applications. Defatted algal flour or algal biomass can be a good source of dietary fiber since it contains carbohydrates in the form of both insoluble and soluble fiber.

### IV. COMBINING MICROALGAL BIOMASS OR MATERIALS DERIVED THEREFROM WITH OTHER FOOD INGREDIENTS

In one aspect, there is provided a food composition comprising at least 0.1% w/w algal biomass and one or more other ingredients, including one or more edible ingredients, wherein the algal biomass comprises at least 10% oil by dry weight, optionally wherein at least 90% of the oil is glycerolipid. In some embodiments, the algal biomass contains at least 25%, 40%, 50% or 60% oil by dry weight. In some cases, the algal biomass contains 10-90%, 25-75%, 40-75% or 50-70% oil by dry weight, optionally wherein at least 90% of the oil is glycerolipid. In at least one embodiment, at least 50% by weight of the oil is monounsaturated glycerolipid oil. In some cases, at least 50% by weight of the oil is an 18:1 lipid in glycerolipid form. In some cases, less than 5% by weight of the oil is docosahexanoic acid (DHA) (22:6). In at least one embodiment, less than 1% by weight of the oil is DHA. An algal lipid content with low levels of polyunsaturated fatty acids (PUFA) is preferred to ensure chemical stability of the biomass. In preferred embodiments, the algal biomass is grown under heterotrophic conditions and has reduced green pigmentation. In other embodiments, the microalga is a color mutant that lacks or is reduced in pigmentation. In another embodiment, the food composition comprises at least 0.1% w/w algal biomass and one or more other edible ingredients and, optionally, one or more other ingredients.

In another aspect, there is provided a food composisiton comprising at least 0.1% w/w algal biomass and one or more other ingredients, including one or more edible ingredients, wherein the algal biomass comprises at least 30% protein by dry weight, at least 40% protein by dry weight, at least 45% protein by dry weight, at least 50% protein by dry weight, at least 55% protein by dry weight, at least 60% protein by dry weight or at least 75% protein by dry weight. In some cases, the algal biomass contains 30-75% or 40-60% protein by dry weight. In some embodiments, at least 40% of the crude protein is digestible, at least 50% of the crude protein is digestible, at least 60% of the crude protein is digestible, at least 70% of the crude protein is digestible, at least 80% of the crude protein is digestible or at least 90% of the crude protein is digestible. In some cases, the algal biomass is grown under heterotrophic conditions. In at least one embodiment, the algal biomass is grown under nitrogen-replete conditions. In other embodiments, the microalga is a color mutant that lacks or is reduced in pigmentation. In another embodiment, the food composition comprises at least 0.1% w/w algal biomass and one or more other edible ingredients and, optionally, one or more other ingredients.

In some cases, the algal biomass comprises predominantly intact cells. In some embodiments, the food composition comprises oil which is predominantly or completely encapsulated inside cells of the biomass. In some cases, the food composition comprises predominantly intact microalgal cells. In some cases, the algal oil is predominantly encapsulated in cells of the biomass. In other cases, the biomass comprises predominantly lysed cells (*e.g.* a homogenate). As discussed above, such a homogenate can be provided as a slurry, flake, powder or flour.

In some embodiments of the food composition, the algal biomass further comprises at least 10 ppm selenium. In some cases, the biomass further comprises at least 15% w/w algal polysaccharide. In some cases, the biomass further comprises at least 5% w/w algal glycoprotein. In some cases, the biomass comprises between 0 and 115 mcg total carotenoids per gram of biomass. In some cases, the biomass comprises at least 0.5% w/w algal phospholipids. In all cases, as just noted, these components are true cellular components and not extracellular.

In some cases, the algal biomass of the food composition contains components that have antioxidant qualities. The strong antioxidant qualities can be attributed to the multiple antioxidants present in the algal biomass which include, but are not limited to, carotenoids and essential minerals such as zinc, copper, magnesium, calcium and manganese. Algal biomass has also been shown to contain other antioxidants such as tocotrienols and tocopherols. These members of the vitamin E family are important antioxidants and have other health benefits such as protective effects against stroke-induced injuries, reversal of arterial blockage, growth inhibition of breast and prostate cancer cells, reduction in cholesterol levels, a reduced-risk of type II diabetes and protective effects against glaucomatous damage. Natural sources of tocotrienols and tocopherols can be found in oils produced from palm, sunflower, corn, soybean and olive oil. However compositions provided herein have significantly greater levels of tocotrienols than heretofore known materials.

In some cases, food compositions contain algal oil comprising at least 5mg/100g, at least 7mg/100g or at least 8mg/100g total tocopherol. In some cases, food compositions contain algal oil comprising at least 0.15mg/g, at least 0.20mg/g or at least 0.25mg/g total tocotrienol.

In particular embodiments of the compositions and/or methods described above, the microalgae can produce carotenoids. In some embodiments, the carotenoids produced by the microalgae can be co-extracted with the lipids or oil produced by the microalgae (*i.e*. the oil or lipid will contain the carotenoids). In some embodiments, the carotenoids produced by the microalgae are xanthophylls. In some embodiments, the carotenoids produced by the microalgae are carotenes. In some embodiments, the carotenoids produced by the microalgae are a mixture of carotenes and xanthophylls. In various embodiments, the carotenoids produced by the microalgae comprise at least one carotenoid selected from the group consisting of astaxanthin, lutein, zeaxanthin, alpha-carotene, trans-beta carotene, cis-beta carotene, lycopene and any combination thereof. A non-limiting example of a carotenoid profile of oil from *Chlorella protothecoides* is included below in the Examples.

In some embodiments of the food composition, the algal biomass is derived from algae cultured and dried under good manufacturing practice (GMP) conditions. In some cases, the algal biomass is combined with one or more other edible ingredients including, without limitation, grain, fruit, vegetable, protein, lipid, herb and/or spice ingredients. In some cases, the food composition is a salad dressing, egg product, baked good, bread, bar, pasta, sauce, soup drink, beverage, frozen dessert, butter or spread. In particular embodiments, the food composition is not a pill or powder. In some cases, the food composition weighs at least 50g or at least 100g.

Biomass can be combined with one or more other edible ingredients to make a food product. The biomass can be from a single algal source (*e.g*. strain) or algal biomass from multiple sources (*e.g*. different strains). The biomass can also be from a single algal species but with different composition profile. For example, a manufacturer can blend microalga that is high in oil content with microalga that is high in protein content to the exact oil and protein content that is desired in the finished food product. The combination can be performed by a food manufacturer to make a finished product for retail sale or food service use. Alternatively, a manufacturer can sell algal biomass as a product and a consumer can incorporate the algal biomass into a food product, for example, by modification of a conventional recipe. In either case, the algal biomass is typically used to replace all or part of the oil, fat, eggs or the like used in many conventional food products.

In one aspect, there is provided a food composition comprising at lest 0.1% w/w algal biomass and one or more other edible ingredients, wherein the algal biomass is formulated through blending of algal biomass that contains at least 40% protein by dry weight with algal biomass that contains 40% lipid by dry weight to obtain a blend of a desired percent protein and lipid by dry weight. In some embodiments, the biomass is from the same strain of alga. Alternatively, algal biomass that contains at least 40% lipid by dry weight containing less than 1% of its lipid as DHA is blended with algal biomass that contains at lest 20% lipid by dry weight containing at least 5% of its lipid as DHA to obtain a blend of dry biomass that contains in the aggregate at least 10% lipid and 1% DHA by dry weight.

In one aspect, there is disclosed a method of preparing algal biomass by drying an algal culture to provide algal biomass comprising at least 15% oil by dry weight under GMP conditions, in which the algal oil is greater than 50% monounsaturated lipid.

In one aspect, there is provided algal biomass containing at least 15% oil by dry weight manufactured under GMP conditions, in which the algal oil is greater than 50% 18:1 lipid. In one aspect, there is provided algal biomass containing at least 40% oil by dry weight manufactured under GMP conditions. In one aspect, there is provided algal biomass containing at least 55% oil by dry weight manufactured under GMP conditions. In some cases, the algal biomass is packaged as a tablet for delivery of a unit dose of biomass. In some cases, the algal biomass is packaged with or otherwise bears a label providing directions for combining the algal biomass with other edible ingredients.

In one aspect, there are disclosed methods of combining microalgal biomass and/or materials derived therefrom, as described above, with at least one other finished food ingredient, as described below, to form a food composition or foodstuff. In various embodiments, the food composition comprises an egg product (powdered or liquid), a pasta product, a dressing product, a mayonnaise product, a cake product, a bread product, an energy bar, a milk product, a juice product, a spread or a smoothie. In some cases, the food composition is not a pill or powder. In various embodiments, the food composition weighs at least 10 g, at least 25 g, at least 50 g, at least 100 g, at least 250 g, or at least 500 g or more. In some embodiments, the food composition formed by the combination of microalgal biomass and/or product derived therefrom is an uncooked product. In other cases, the food composition is a cooked product.

In other cases, the food composition is a cooked product. In some cases, the food composition contains less than 25% oil or fat by weight excluding oil contributed by the algal biomass. Fat, in the form of saturated triglycerides (TAGs or trans fats), is made when hydrogenating vegetable oils, as is practised when making spreads such as margarines. The fat contained in algal biomass has no trans fats present. In some cases, the food composition contains less than 10% oil or fat by weight excluding oil contributed by the biomass. In at least one embodiment, the food composition is free of oil or fat excluding oil contributed by the biomass. In some cases, the food composition is free of oil other than oil contributed by the biomass. In some cases, the food composition is free of egg or egg products.

In one aspect, there is disclosed a method of making a food composition in which the fat or oil in a conventional food product is fully or partially substituted with algal biomass containing at least 10% by weight oil. In one embodiment, the method comprises determining an amount of the algal biomass for substitution using the proportion of algal oil in the biomass and the amount of oil or fat in the conventional food product, and combining the algal biomass with at least one other edible ingredient and less than the amount of oil or fat contained in the conventional food product to form a food composition. In some cases, the amount of algal biomass combined with the at least one other ingredient is 1-4 times the mass or volume of oil and/or fat in the conventional food product.

In some embodiments, the method described above further includes providing a recipe for a conventional food product containing the at least one other edible ingredient combined with an oil or fat and combining 1-4 times the mass or volume of the algal biomass with the at least one other edible ingredient as the mass or volume of fat or oil in the conventional food product. In some cases, the method further includes preparing the algal biomass under GMP conditions.

In some cases, the food composition formed by the combination of microalgal biomass and/or product derived therefrom comprises at least 0.1%, at least 0.5%, at least 1%, at least 5%, at least 10%, at least 25% or at least 50% w/w or v/v microalgal biomass or microalgal oil. In some embodiments, food compositions formed as described herein comprise at least 2%, at least 5%, at least 10%, at least 25%, at least 50%, at least 75%, at least 90% or at least 95% w/w microalgal biomass or product derived therefrom. In some cases, the food composition comprises 5-50%, 10-40% or 15-35% algal biomass or product derived therefrom by weight or by volume.

As described above, microalgal biomass can be substituted for other components that would otherwise be conventionally included in a food product. In some embodiments, the food composition contains less than 50%, less than 40% or less than 30% oil or fat by weight excluding microalgal oil contributed by the biomass or from microalgal sources. In some cases, the food composition contains less than 25%, less than 20%, less than 15%, less than 10% or less than 5% oil or fat by weight excluding microalgal oil contributed by the biomass or from microalgal sources. In at least one embodiment, the food composition is free of oil or fat excluding microalgal oil contributed by the biomass or from microalgal sources. In some cases, the food composition is free of eggs, butter or other fats/oils or at least one other ingredient that would ordinarily be included in a comparable conventional food product. Some food products are free of dairy products (*e.g*., butter, cream and/or cheese).

The amount of algal biomass used to prepare a food composition depends on the amount of non-algal oil, fat, eggs or the like to be replaced in a conventional food product and the percentage of oil in the algal biomass. Thus, in at least one embodiment, the methods include determining an amount of the algal biomass to combine with at least one other edible ingredient from a proportion of oil in the biomass and a proportion of oil and/or fat that is ordinarily combined with the at least one other edible ingredient in a conventional food product. For example, if the algal biomass is 50% w/w microalgal oil and complete replacement of oil or fat in a conventional recipe is desired, then the oil can for example be replaced in a 2:1 ratio. The ratio can be measured by mass but, for practical purposes, it is often easier to measure volume using a measuring cup or spoon and the replacement can be by volume. In a general case, the volume or mass of oil or fat to be replaced is replaced by (100/100-X) volume or mass of algal biomass, where X is the percentage of microalgal oil in the biomass. In general, oil and fats to be replaced in conventional recipes can be replaced in total by algal biomass, although total replacement is not necessary and any desired proportion of oil and/or fats can be retained and the remainder replaced according to taste and nutritional needs. Because the algal biomass contains proteins and phospholipids, which function as emulsifiers, items such as eggs can be replaced in total or in part with algal biomass. If an egg is replaced in total with biomass or algal flour, it is sometimes desirable or necessary to augment the emulsifying agents in the food composition with an additional emulsifying agent(s) and/or add additional water or other liquid(s) to compensate for the loss of these components that would otherwise be provided by the egg. In some embodiments, it may be necessary to add additional emulsifying agents. Alternatively, depending on the food composition, it may not be necessary to add additional emulsifying agents.

For simplicity, substitution ratios can also be provided in terms of mass or volume of oil, fat and/or eggs replaced with mass or volume of biomass or the algal flour. In some methods, the mass or volume of oil, fat and/or eggs in a conventional recipe is replaced with 5-150%, 25-100% or 25-75% of the mass or volume of oil, fat and/or eggs. The replacement ratio depends on factors such as the food product, desired nutritional profile of the food product, overall texture and appearance of the food product and oil content of the biomass or the algal flour.

In cooked foods, the determination of percentages (*i.e*. weight or volume) can be made before or after cooking. The percentage of algal biomass or the algal flour can increase during the cooking process because of loss of liquids. Because some algal biomass cells may lyse in the course of the cooking process, it can be difficult to measure the content of algal biomass directly in a cooked product. However, the content can be determined indirectly from the mass or volume of biomass that went into the raw product as a percentage of the weight or volume of the finished product (on a biomass dry solids basis), as well as by methods of analyzing components that are unique to the algal biomass such as genomic sequences or compounds that are delivered solely by the algal biomass, such as certain carotenoids.

In some cases, it may be desirable to combine algal biomass or the algal flour with the at least one other edible ingredient in an amount that exceeds the proportional amount of oil, fat, eggs or the like that is present in a conventional food product. For example, one may replace the mass or volume of oil and/or fat in a conventional food product with 0.25, 0.5, 0.75, 1, 2, 3, 4 or more times that amount of algal biomass or the algal flour. Some embodiments of the disclosed methods include providing a recipe for a conventional food product containing the at least one other edible ingredient combined with an oil or fat and combining 0.25-4 times the mass or volume of algal biomass or the algal flour with the at least one other edible ingredient as the mass or volume of fat or oil in the conventional food product.

Algal biomass or the algal flour (predominantly intact or homogenized or micronized) and/or algal oil are combined with at least one other edible ingredient to form a food product. In some food products, the algal biomass and/or algal oil is combined with 1-20, 2-10 or 4-8 other edible ingredients. The edible ingredients can be selected from all the major food groups including, without limitation, fruits, vegetables, legumes, meats, fish, grains (e.g. wheat, rice, oats, cornmeal, barley), herbs, spices, water, vegetable broth, juice, wine and vinegar. In some food compositions, at least 2, 3, 4 or 5 food groups are represented as well as the algal biomass or algal oil.

Oils, fats, eggs and the like can also be combined into food compositions but, as has been discussed above, are usually present in reduced amounts (*e.g*. less than 50%, 25%, or 10% of the mass or volume of oil, fat or eggs compared with conventional food products. Some food products are free of oil other than that provided by algal biomass and/or algal oil. Some food products are free of oil other than that provided by algal biomass. Some food products are free of fats other than that provided by algal biomass or algal oil. Some food products are free of fats other than that provided by algal biomass. Some food products are free of both oil and fats other than that provided by algal biomass or algal oil. Some food products are free of both oil and fats other than that provided by algal biomass. Some food products are free of eggs. In some embodiments, the oils produced by the microalgae can be tailored by culture conditions or strain selection to comprise a particular fatty acid component(s) or levels.

In some cases, the algal biomass or the algal flour used in making the food composition comprises a mixture of at least two distinct species of microalgae. In some cases, at least two of the distinct species of microalgae have been separately cultured. In at least one embodiment, at least two of the distinct species of microalgae have different glycerolipid profiles. In some cases, the method described above further comprises culturing algae under heterotrophic conditions and preparing the biomass from the algae. In some cases, all of the at least two distinct species of microalgae contain at least 10% or at least 15% oil by dry weight. In some cases, a food composition contains a blend of two distinct preparations of biomass of the same species, wherein one of the preparations contains at least 30% oil by dry weight and the second contains less than 15% oil by dry weight. In some cases, a food composition contains a blend of two distinct preparations of biomass of the same species, wherein one of the preparations contains at least 50% oil by dry weight and the second contains less than 15% oil by dry weight and further wherein the species is *Chlorella protothecoides.*

As well as using algal biomass or algal flour as an oil, fat or egg replacement in otherwise conventional foods, algal biomass or algal flour can be used as a supplement in foods that do not normally contain oil, such as a smoothie. The combination of oil with products that are mainly carbohydrate can have benefits associated with the oil and from the combination of oil and carbohydrate by reducing the glycemic index of the carbohydrate. The provision of oil encapsulated in biomass is advantageous in protecting the oil from oxidation and can also improve the taste and texture of the smoothie.

Oil extracted from algal biomass or the algal flour can be used in the same way as the biomass itself, that is as a replacement for oil, fat, eggs or the like in conventional recipes. The oil can be used to replace conventional oil and/or fat on about a 1:1 weight/weight or volume/volume basis. The oil can be used to replace eggs by substitution of about 1 teaspoon of algal oil per egg optionally in combination with additional water and/or an emulsifier (an average 58g egg is about 11.2% fat, algal oil has a density of about 0.915 g/ml and a teaspoon has a volume of about 5 ml = 1.2 teaspoons of algal oil/egg). The oil can also be incorporated into dressings, sauces, soups, margarines, creamers, shortenings and the like. The oil is particularly useful for food products in which combination of the oil with other food ingredients is needed to give a desired taste, texture and/or appearance. The content of oil by weight or volume in food products can be at least 5, 10, 25, 40 or 50%.

In at least one embodiment, oil extracted from algal biomass or algal flour can also be used as a cooking oil by food manufacturers, restaurants and/or consumers. In such cases, algal oil can replace conventional cooking oils such as safflower oil, canola oil, olive oil, grape seed oil, corn oil, sunflower oil, coconut oil, palm oil or any other conventionally used cooking oil. The oil obtained from algal biomass or the algal flour as with other types of oil can be subjected to further refinement to increase its suitability for cooking (*e.g*. increased smoke point). Oil can be neutralized with caustic soda to remove free fatty acids. The free fatty acids form a removable soap stock. The color of oil can be removed by bleaching with chemicals such as carbon black and bleaching earth. The bleaching earth and chemicals can be separated from the oil by filtration. Oil can also be deodorized by treating with steam.

Predominantly intact biomass, homogenized or micronized biomass (as a slurry, flake, powder or flour) and purified algal oil can all be combined with other food ingredients to form food products. All are a source of oil with a favorable nutritional profile (relatively high monounsaturated content). Predominantly intact, homogenized and micronized biomass also supply high quality protein (balanced amino acid composition), carbohydrates, fiber and other nutrients as dicussed above. Foods incorporating any of these products can be made in vegan or vegetarian form. Another advantage in using microalgal biomass or algal flour (either predominantly intact or homogenized (or micronized) or both) as a protein source is that it is a vegan/vegetarian protein source that is not from a major allergen source, such as soy, eggs or dairy.

Other edible ingredients with which algal biomass or algal flour and/or algal oil can be combined include, without limitation, grains, fruits, vegetables, proteins, meats, herbs, spices, carbohydrates and fats. The other edible ingredients with which the algal biomass or algal flour and/or algal oil is combined to form food compositions depend on the food product to be produced and the desired taste, texture and other properties of the food product.

Although in general any of these sources of algal oil can be used in any food product, the preferred source depends in part whether the oil is primarily present for nutritional or caloric purposes rather than for texture, appearance or taste of food or, alternatively, whether the oil in combination with other food ingredients is intended to contribute a desired taste, texture or appearance of the food as well as or instead of improving its nutritional or caloric profile.

The food products can be cooked by conventional procedures as desired. Depending on the length and temperature, the cooking process may break down some cell walls, releasing oil such that it combines with other ingredients in the mixture. However, at least some algal cells often survive cooking intact. Alternatively, food products can be used without cooking. In this case, the algal wall remains intact, protecting the oil from oxidation.

The algal biomass or algal flour, if provided in a form with cells predominantly intact, or as a homogenate powder, differs from oil, fat or eggs in that it can be provided as a dry ingredient, facilitating mixing with other dry ingredients, such as flour. In one embodiment, the algal biomass or algal flour is provided as a dry homogenate that contains between 25 and 40% oil by dry weight. A biomass homogenate can also be provided as slurry. After mixing of dry ingredients (and biomass homogenate slurry, if used), liquids such as water can be added. In some food products, the amount of liquid required is somewhat higher than in a conventional food product because of the non-oil component of the biomass and/or because water is not being supplied by other ingredients, such as eggs. However, the amount of water can readily be determined as in conventional cooking.

In one aspect, there is disclosed a food ingredient composition comprising at least 0.5% w/w algal biomass or algal flour containing at least 10% algal oil by dry weight and at least one other edible ingredient, in which the food ingredient can be converted into a reconstituted food product by addition of a liquid to the food ingredient composition. In one embodiment, the liquid is water.

Homogenized or micronized high-oil biomass is particularly advantageous in liquid and/or emulsified food products (water in oil and oil in water emulsions) such as sauces, soups, drinks, salad dressings, butters, spreads and the like in which oil contributed by the biomass forms an emulsion with other liquids. Products that benefit from improved rheology such as dressings, sauces and spreads are described below in the Examples. Using homogenized biomass an emulsion with desired texture (*e.g*. mouth-feel), taste and appearance (*e*.*g.* opacity) can form at a lower oil content (by weight or volume of overall product) than is the case with conventional products employing conventional oils, thus can be used as a fat extender. Such is useful for low-calorie (*i.e*. diet) products. Purified algal oil is also advantageous for such liquid and/or emulsified products. Both homogenized or micronized high-oil biomass and purified algal oil combine well with other edible ingredients in baked goods achieving similar or better taste, appearance and texture to otherwise similar products made with conventional oils, fats and/or eggs but with improved nutritional profile (*e.g.* higher content of monosaturated oil and/or higher content or quality of protein and/or higher content of fiber and/or other nutrients).

Predominantly intact biomass is particularly useful in situations in which it is desired to change or increase the nutritional profile of a food (*e.g.* higher oil content, different oil content (*e.g*. more monounsaturated oil), higher protein content, higher calorie content, higher content of other nutrients). Such foods can be useful, for example, for athletes or patients suffering from wasting disorders. Predominantly intact biomass can be used as a bulking agent. Bulking agents can be used, for example, to augment the amount of a more expensive food (*e.g.* meat helper and the like) or in simulated or imitation foods such as vegetarian meat substitutes. Simulated or imitation foods differ from natural foods in that the flavor and bulk are usually provided by different sources. For example, flavors of natural foods, such as meat, can be imparted into a bulking agent holding the flavor. Predominantly intact biomass can be used as a bulking agent in such foods. Predominantly intact biomass is also particularly useful in dried food, such as pasta, because it has good water-binding properties and can thus facilitate rehydration of such foods. Predominantly intact biomass is also useful as a preservative, for example, in baked goods. The predominantly intact biomass can improve water retention and thus shelf-life.

Disrupted or micronized algal biomass or algal flour can also be useful as a binding agent, bulking agent or to change or increase the nutritional profile a food product. Disrupted algal biomass or algal flour can be combined with another protein source such as meat, soy protein, whey protein, wheat protein, bean protein, rice protein, pea protein, milk protein, etc. where the algal biomass or algal flour functions as a binding and/or bulking agent. Algal biomass or algal flour that has been disrupted or micronized can also improve water retention and thus shelf-life. Increased moisture retention is especially desirable in gluten-free products, such as gluten-free baked goods. A detailed description of formulation of a gluten-free cookie using disrupted algal biomass or algal flour and subsequent shelf-life study is described in the Examples below.

In some cases, the algal biomass or algal flour can be used in egg preparations. In some embodiments, algal biomass or algal flour added to a conventional dry powder egg preparation creates scrambled eggs that are creamier, have more moisture and a better texture than dry powdered eggs prepared without the algal biomass or algal flour. In other embodiments, algal biomass or algal flour is added to whole liquid eggs in order to improve the overall texture and moisture of eggs that are prepared and then held on a steam table. Specific examples of the foregoing preparations are described in the Examples below.

Algal biomass or algal flour (predominantly intact and/or homogenized or micronized) and/or algal oil can be incorporated into virtually any food composition. Some examples include baked goods, such as cakes, brownies, yellow cake, bread including brioche, cookies including sugar cookies, biscuits and pies. Other examples include products often provided in dried form, such as pastas or powdered dressing, dried creamers, comminuted meats and meat substitutes. Incorporation of predominantly intact biomass into such products as a binding and/or bulking agent can improve hydration and increase yield due to the water binding capacity of predominantly intact biomass. Re-hydrated foods, such as scrambled eggs made from dried powdered eggs, may also have improved texture and nutritional profile. Other examples include liquid food products, such as sauces, soups, dressings (ready to eat), creamers, milk drinks, juice drinks, smoothies and creamers. Other liquid food products include nutritional beverages that serve as a meal replacement or algal milk. Other food products include butters or cheeses and the like including shortening, margarine/spreads, nut butters and cheese products, such as nacho sauce. Other food products include energy bars, chocolate confections-lecithin replacement, meal replacement bars, granola bar-type products. Another type of food product is batters and coatings. By providing a layer of oil surrounding a food, predominantly intact biomass or a homogenate repel additional oil from a cooking medium from penetrating a food. Thus, the food can retain the benefits of high monounsaturated oil content of coating without picking up less desirable oils (*e.g.* trans fats, saturated fats and by products from the cooking oil). The coating of biomass can also provide a desirable (*e.g*. crunchy) texture to the food and a cleaner flavor due to less absorption of cooking oil and its byproducts.

In uncooked foods, most algal cells in the biomass remain intact. This has the advantage of protecting the algal oil from oxidation, which confers a long shelf-life and minimizes adverse interaction with other ingredients. Depending on the nature of the food products, the protection conferred by the cells may reduce or avoid the need for refrigeration, vacuum packaging or the like. Retaining cells intact also prevents direct contact between the oil and the mouth of a consumer, which reduces the oily or fatty sensation that may be undesirable. In food products in which oil is used more as nutritional supplement, such can be an advantage in improving the organoleptic properties of the product. Thus, predominantly intact biomass is suitable for use in such products. However, in uncooked products, such as a salad dressing, in which oil imparts a desired mouth feel (*e.g.* as an emulsion with an aqueous solution such as vinegar), use of purified algal oil or micronized biomass is preferred. In cooked foods, some algal cells of original intact biomass may be lysed but other algal cells may remain intact. The ratio of lysed to intact cells depends on the temperature and duration of the cooking process. In cooked foods in which dispersion of oil in a uniform way with other ingredients is desired for taste, texture and/or appearance (*e.g*. baked goods), use of micronized biomass or purified algal oil is preferred. In cooked foods, in which algal biomass or algal flour is used to supply oil and/or protein and other nutrients, primarily for their nutritional or caloric value rather than texture.

Algal biomass or algal flour can also be useful in increasing the satiety index of a food product (*e.g.* a meal-replacement drink or smoothie) relative to an otherwise similar conventional product made without the algal biomass or algal flour. The satiety index is a measure of the extent to which the same number of calories of different foods satisfy appetite. Such an index can be measured by feeding a food being tested and measuring appetite for other foods at a fixed interval thereafter. The less appetite for other foods thereafter, the higher the satiety index. Values of satiety index can be expressed on a scale in which white bread is assigned a value of 100. Foods with a higher satiety index are useful for dieting. Although not dependent on an understanding of mechanism, algal biomass or algal flour is believed to increase the satiety index of a food by increasing the protein and/or fiber content of the food for a given amount of calories.

Algal biomass or algal flour (predominantly intact and homogenized or micronized) and/or algal oil can also be manufactured into nutritional or dietary supplements. For example, algal oil can be encapsulated into digestible capsules in a manner similar to fish oil. Such capsules can be packaged in a bottle and taken on a daily basis (*e.g.* 1-4 capsules or tablets per day). A capsule can contain a unit dose of algal biomass or algal flour or algal oil. Likewise, biomass can be optionally compressed with pharmaceutical or other excipients into tablets. The tablets can be packaged, for example in a bottle or blister pack, and taken daily at a dose of, *e.g.,* 1-4 tablets per day. In some cases, the tablet or other dosage formulation comprises a unit dose of biomass or algal oil. Manufacturing of capsule and tablet products and other supplements is preferably performed under GMP conditions appropriate for nutritional supplements as codified at 21 C.F.R. 111 or comparable regulations established by foreign jurisdictions. The algal biomass or algal flour can be mixed with other powders and be presented in sachets as a ready-to-mix material (*e.g*. with water, juice, milk or other liquids). The algal biomass or algal flour can also be mixed into products such as yogurts.

Although algal biomass or algal flour and/or algal oil can be incorporated into nutritional supplements, the functional food products discussed above have distinctions from typical nutritional supplements, which are in the form of pills, capsules or powders. The serving size of such food products is typically much larger than a nutritional supplement both in terms of weight and in terms of calories supplied. For example, food products often have a weight of over 100g and/or supply at least 100 calories when packaged or consumed at one time. Typically food products contain at least one ingredient that is either a protein, a carbohydrate or a liquid and often contain two or three such other ingredients. The protein or carbohydrate in a food product often supplies at least 30%, 50% or 60% of the calories of the food product.

As discussed above, algal biomass or algal flour can be made by a manufacturer and sold to a consumer, such as a restaurant or individual, for use in a commercial setting or in the home. Such algal biomass or algal flour is preferably manufactured and packaged under Good Manufacturing Practice (GMP) conditions for food products. The algal biomass or algal flour in predominantly intact form or homogenized or micronized form as a powder is often packaged dry in an airtight container, such as a sealed bag. Homogenized or micronized biomass in slurry form can be conveniently packaged in a tub among other containers. Optionally, the algal biomass or algal flour can be packaged under vacuum to enhance shelf life. Refrigeration of packaged algal biomass or algal flour is not required. The packaged algal biomass or algal flour can contain instructions for use including directions for how much of the algal biomass or algal flour to use to replace a given amount of oil, fat or eggs in a conventional recipe, as discussed above. For simplicity, the directions can state that oil or fat are to be replaced on a 2:1 ratio by mass or volume of biomass and eggs on a ratio of 11g biomass or 1 teaspoon of algal oil per egg. As discussed above, other ratios are possible, for example, using a ratio of 10-175% mass or volume of biomass to mass or volume of oil and/or fat and/or eggs in a conventional recipe. Upon opening a sealed package, the instructions may direct the user to keep the algal biomass or algal flour in an airtight container, such as those widely commercially available (*e.g*. Glad), optionally with refrigeration.

Algal biomass or algal flour (predominantly intact or homogenized or micronized powder) can also be packaged in a form combined with other dry ingredients (*e.g*. sugar, flour, dry fruits, flavorings), portioned and packed to ensure uniformity in the final product. The mixture can then be converted into a food product by a consumer or food service company simply by adding a liquid, such as water or milk, and optionally mixing, and/or cooking without adding oils or fats. In some cases, the liquid is added to reconstitute a dried algal biomass or algal flour composition. Cooking can optionally be performed using a microwave oven, convection oven, conventional oven or on a cooktop. Such mixtures can be used for making cakes, breads, pancakes, waffles, drinks, sauces and the like. Such mixtures have advantages of convenience for the consumer as well as long shelf life without refrigeration. Such mixtures are typically packaged in a sealed container bearing instructions for adding liquid to convert the mixture into a food product.

Algal oil for use as a food ingredient is likewise preferably manufactured and packaged under GMP conditions for a food. The algal oil is typically packaged in a bottle or other container in a similar fashion to conventionally-used oils. The container can include an affixed label with directions for using the oil in replacement of conventional oils, fats or eggs in food products and as a cooking oil. When packaged in a sealed container, the oil has a long shelf-life (at least one year) without substantial deterioration. After opening, algal oil comprised primarily of monounsaturated oils is not acutely sensitive to oxidation. However, unused portions of the oil can be kept longer and with less oxidation if kept cold and/or out of direct sunlight (*e.g*. within an enclosed space, such as a cupboard). The directions included with the oil can contain such preferred storage information.

Optionally, the algal biomass or algal flour and/or the algal oil may contain a food approved preservative/antioxidant to maximize shelf-life including, but not limited to, carotenoids (*e.g*. astaxanthin, lutein, zeaxanthin, alpha-carotene, beta-carotene and lycopene), phospholipids (*e.g*. N-acylphosphatidylethanolamine, phosphatidic acid, phosphatidylethanolamine, phosphatidylcholine, phosphatidylinositol and lysophosphatidylcholine), tocopherols (*e.g*. alpha tocopherol, beta tocopherol, gamma tocopherol and delta tocopherol), tocotrienols (*e.g*. alpha tocotrienol, beta tocotrienol, gamma tocotrienol and delta tocotrienol), butylated hydroxytoluene, butylated hydroxyanisole, polyphenols, rosmarinic acid, propyl gallate, ascorbic acid, sodium ascorbate, sorbic acid, benzoic acid, methyl parabens, levulinic acid, anisic acid, acetic acid, citric acid and bioflavonoids.

The description of incorporation of predominantly intact biomass, homogenized or micronized biomass (slurry, flake, powder or flour) or algal oil into food for human nutrition is in general also applicable to food products for non-human animals.

The biomass imparts high quality oil or proteins or both in such foods. The content of algal oil is preferably at least 10 or 20% by weight as is the content of algal protein. Obtaining at least some of the algal oil and/or protein from predominantly intact biomass is sometimes advantageous for food for high performance animals, such as sport dogs or horses. Predominantly intact biomass is also useful as a preservative. Algal biomass or algal flour or oil is combined with other ingredients typically found in animal foods (*e.g.* a meat, meat flavor, fatty acid, vegetable, fruit, starch, vitamin, mineral, antioxidant or probiotic) and any combination thereof. Such foods are also suitable for companion animals, particularly those having an active life style. Inclusion of taurine is recommended for cat foods. As with conventional animal foods, the food can be provided in bite-size particles appropriate for the intended animal.

Delipidated meal is useful as a feedstock for the production of an algal protein concentrate and/or isolate, especially delipidated meal from high protein-containing algal biomass or algal flour. The algal protein concentrate and/or isolate can be produced using standard processes used to produce soy protein concentrate/isolate. An algal protein concentrate would be prepared by removing soluble sugars from delipidated algal biomass or algal flour or meal. The remaining components would mainly be proteins and insoluble polysaccharides. By removing the soluble sugars from the delipidated meal, the protein content is increased, thus creating an algal protein concentrate. An algal protein concentrate would contain at least 45% protein by dry weight. Preferably, an algal protein concentrate would contain at least 50%-75% protein by dry weight. Algal protein isolate can also be prepared using standard processes used to produce soy protein isolate. This process usually involves a temperature and basic pH extraction step using NaOH. After the extraction step, the liquids and solids are separated and the proteins are precipitated out of the liquid fraction using HCl. The solid fraction can be re-extracted and the resulting liquid fractions can be pooled prior to precipitation with HCl. The protein is then neutralized and spray dried to produce a protein isolate. An algal protein isolate would typically contain at least 90% protein by dry weight.

Delipidated meal is useful as animal feed for farm animals, *e.g*. ruminants, poultry, swine and aquaculture. Delipidated meal is a by-product of preparing purified algal oil either for food or other purposes. The resulting meal, although of reduced oil content, still contains high quality proteins, carbohydrates, fiber, ash and other nutrients appropriate for an animal feed. Because the cells are predominantly lysed, delipidated meal is easily digestible by such animals. Delipidated meal can optionally be combined with other ingredients, such as grain, in an animal feed. Because delipidated meal has a powdery consistency, it can be pressed into pellets using an extruder or expanders, which are commercially available.

### A. Aerated Foods

"Aerated food" is a term that usually applies to desserts, but can also apply to non-dessert foods formulated with the same principles. "Aerated desserts" refers to desserts such as mousse, ice cream, whipped toppings, sorbets, etc. Aerated foods are composed of two phases: a continuous phase and a discontinous phase. The discontinuous phase is air that is held as air cells or air bubbles in the food item. The continuous phase can be made up of water, water with dissolved solids (such as milk), colloidal solids, proteins, etc. Because aerated foods are composed of a discontinous air phase, the ability to hold the air in air cells inside the food is critical to the successful formulation of an aerated food. Emulsifiers help form the air cells for the discontinous phase and stabilizers can help hold the air cells intact within the food. A surprising and unexpected effect of adding algal biomass or algal flour (particularly lipid-rich microalgal flour) in the preparation of an aerated food is the air-holding capacity of the biomass. Algal biomass or algal flour, especially the lipid-rich microalgal flour, has excellent air-holding or stabilizing capacity. Microalgal flour or algal biomass also has a great emulsifying capacity and therefore is suitable for use in aerated foods.

In baked goods such as cakes, fats including the lipids contributed by the lipid-rich microalgal flour or algal biomass, perform several crucial roles: (1) the fats are partially responsible for the light, airy texture by holding or stabilizing the tiny air bubbles that form from the leavening agent in the cake (the same can be true in breads); (2) fats create the "melt in your mouth" texture and other organoleptic properties by coating the flour proteins and prohibiting the formation of gluten; (3) solid fats (with high degree of saturation) usually have a higher air holding or stabilizing capacity than liquid fats, which results in a lighter texture and (4) emulsifiers (such as mono and diglycerides) aid in the distribution of fat in the batter, which results in better distribution of the air bubbles in the batter, leading to a light and airy texture of the cake or baked goods. Although the lipid-rich algal flour or algal biomass contains mono- and di- glycerides, it does not contain saturated fats (unlike solid fats, such as butter/lard). Therefore, it is unexpected that lipid-rich algal flour or algal biomass has such great air-holding/stabilizing capacity and produces the same airy/light texture in baked goods when using only algal flour or algal biomass to replace butter and/or egg yolks.

Another example of an aerated food is ice cream (or sorbets and gelatos, etc.). Ice cream can be defined as a partially frozen foam, usually with an air content of 20% or greater (discontinuous phase). The continuous phase contains dissolved and colloidal solids, i.e. sugars, proteins, stabilizers and a fatty phase in an emulsified form. Under an electron microscope, the structure of ice cream appears to be made up of air cells that are coated by fat globules amongst ice crystals that make up the continuous phase. The emulsifying capabilities and the lipid content in the algal flour or algal biomass makes it suitable for use in the formulation of an ice cream. Other non-limiting examples of aerated foods include mousse (both savory and sweet), whipped topping/cream and meringue. Aeration is also responsible for the lightness that is found in some cakes (e.g. angel food cake), cookies, breads or sauces.

### B. Comminuted and Reformed Meats

Comminuted meats are essentially a two phase system composed of a dispersion of a solid and a liquid, where the solid is immiscible. The liquid is an aqueous solution of salts and at the same time is a medium in which the insoluble proteins (and other components) of the muscle fibers, fat and connective tissue of the meat (the solids) are dispersed and forms a matrix. Although this two phase system is not technically an emulsion, it has components and the structural aspects of a meat "emulsion". The stable state of this meat emulsion is responsible for the integrity of comminuted and reformed meats. The solid phase of comminuted meats are made up of processed meats (containing muscle fibers, connective tissue and fat among other components) that have been chopped or ground to a consistency found in forced meats. The solid phase then gets incorporated with the liquid phase to form a meat emulsion. Common examples of comminuted meats include sausages, frankfurters, bologna, meat patties (e.g. hamburger patties) and canned meats.

"Reformed meats" refers to meat that has been mechanically separated and then reformed into shapes. Because the meat is "reformed", the meat product may have an artifact of having the appearance of a cut, slice or portion of the meat that has be disrupted that is formed by 'tumbling' chopped meat, with or without the addition of finely comminuted meat, whereby the soluble proteins of the chopped meat bind the small pieces together. Mechanical separation of the meat can include chopping, grinding or other forms of processing meat into smaller pieces, thereby shortening the muscle fibers. Because the original meat fibers have been broken, the formation of a partial meat emulsion (similar to comminuted meats) is necessary to hold the reformed meat product together. Non-limiting examples of reformed meat products are chicken nuggets, packaged coldcuts (e.g. ham, turkey, etc.) and fish sticks.

Algal biomass or algal flour can be added as an ingredient in comminuted and reformed meats. The algal biomass or algal flour can have a multifunctional effect in such meat products. One aspect is that the algal biomass or algal flour can act as a bulking agent or filler product. Another aspect is that the lipids, carbohydrates and proteins from the algal biomass or algal flour act as a binder for the other components in the comminuted/reformed meat. Another advantage, which is quite surprising and unexpected, is that the algal biomass or algal flour (lipid-rich algal flour, in particular) can improve the texture and flavor of comminuted meat and/or reformed meat products, especially if the meat product is made with lower fat containing meats. Low fat (4% fat) ground beef and ground turkey (3% fat) has a resistant, chewy and dry texture and may have a liver-like "uncharacteristic" meat flavor. The addition of lipid-rich algal flour or algal biomass may result in the improvement of both the texture and flavor of comminuted and/or reformed meats made with such low fat meats. In such cases, the low fat meat product will have a texture that is more moist and more tender and a taste that is richer and meatier than without the addition of lipid-rich algal flour or algal biomass, giving the low fat meat product a texture that is similar to a higher fat ground beef (20% fat) or ground turkey (15% fat). The addition of the algal biomass or algal flour into comminuted and/or reformed meats can create a healthier meat product (low in fat), while having the texture and taste of a higher fat meat product.

### C. Dairy mimetics

Algal flour or algal biomass can be used as a dairy mimetic or dairy replacer (examples includes using algal flour instead of butter). Algal flour or algal biomass can also be used as an extender when blended with enzyme-modified cheese (in cheese flavoring or cheese sauces). Additionally, algal flour or algal biomass can also be used to make beverages such as algal milk. Algal flour or algal biomass can also increase the creaminess of a food product (foods in which dairy products are added to give the food a creamy texture) such as macaroni and cheese, soy milk, rice milk, almond milk, yogurt, ice cream, whipped cream, etc.

Defatted algal flour or algal biomass can also be used as a dairy mimetic. Defatted or delipidated algal flour or algal biomass does not contain substantial amounts of oil after extraction. Depending on the method of processing, defatted algal flour or algal biomass can include phospholipids that are a component of the algal biomass or algal flour. Defatted algal flour or algal biomass is non-dairy and is also potentially very low in fat (as compared to the trans-fat containing hydrogenated oils currently used to make non-dairy creamer). When added to coffee, defatted algal flour or algal biomass can reduce the bitterness in the coffee and impart a creamy mouthfeel (fullness). The product is suitable as a creamer or for use in mochas, hot chocolates, frappe and other coffee-based drinks.

The following examples are offered to illustrate, but not to limit, the claimed invention.

### V. EXAMPLES

### EXAMPLE 1

### Cultivation of Microalgae to Achieve High Oil Content

Microalgal strains were cultivated in shake flasks with a goal to achieve over 20% of oil by dry cell weight. The flask media used was as follows: K₂HPO₄: 4.2 g/L, NaH₂PO₄: 3.1g/L, MgSO₄7H₂O: 0.24g/L, citric acid monohydrate: 0.25g/L, CaCl₂2H₂O: 0.025g/L, yeast extract: 2g/L and 2% glucose. Cryopreserved cells were thawed at room temperature and 500 ul of cells were added to 4.5 ml of medium and grown for 7 days at 28°C with agitation (200 rpm) in a 6-well plate. Dry cell weights were determined by centrifuging 1 ml of culture at 14,000 rpm for 5 min in a pre-weighed Eppendorf tube. The culture supernatant was discarded and the resulting cell pellet washed with 1 ml of deionized water. The culture was again centrifuged, the supernatant discarded and the cell pellets placed at -80°C until frozen. Samples were then lyophyllized for 24 hrs and dry cell weights calculated. For determination of total lipid in cultures, 3 ml of culture was removed and subjected to analysis using an Ankom system (Ankom Inc., Macedon, NY) according to the manufacturer's protocol. Samples were subjected to solvent extraction with an Amkom XT10 extractor according to the manufacturer's protocol. Total lipid was determined as the difference in mass between acid hydrolyzed dried samples and solvent-extracted, dried samples. Percent oil dry cell weight measurements are shown in Table 1.

**Table 1. Percent oil by dry cell weight**

| **Species** | **Strain** | **% oil** | **Strain #** |
|---|---|---|---|
| Chlorella protothecoides | UTEX 250 | 34.24 | 1 |
| Chlorella protothecoides | UTEX 25 | 40.00 | 2 |
| Chlorella protothecoides | CCAP 211/8D | 47.56 | 3 |
| Chlorella kessleri | UTEX 397 | 39.42 | 4 |
| Chlorella kessleri | UTEX 2229 | 54.07 | 5 |
| Chlorella kessleri | UTEX 398 | 41.67 | 6 |
| Parachlorella kessleri | SAG 11.80 | 37.78 | 7 |
| Parachlorella kessleri | SAG 14.82 | 50.70 | 8 |
| Parachlorella kessleri | SAG 21.11 H9 | 37.92 | 9 |
| Prototheca stagnora | UTEX 327 | 13.14 | 10 |
| Prototheca moriformis | UTEX 1441 | 18.02 | 11 |
| Prototheca moriformis | UTEX 1435 | 27.17 | 12 |
| Chlorella minutissima | UTEX 2341 | 31.39 | 13 |
| Chlorella sp. | UTEX 2068 | 45.32 | 14 |
| Chlorella sp. | CCAP 211/92 | 46.51 | 15 |
| Chlorella sorokiniana | SAG 211.40B | 46.67 | 16 |
| Parachlorella beijerinkii | SAG 2046 | 30.98 | 17 |
| Chlorella luteoviridis | SAG 2203 | 37.88 | 18 |
| Chlorella vulgaris | CCAP 211/11K | 35.85 | 19 |
| Chlorella reisiglii | CCAP 11/8 | 31.17 | 20 |
| Chlorella ellipsoidea | CCAP 211/42 | 32.93 | 21 |
| Chlorella saccharophila | CCAP 211/31 | 34.84 | 22 |
| Chlorella saccharophila | CCAP 211/32 | 30.51 | 23 |

Additional strains of *Chlorella protothecoides* were also grown using the conditions described above and the lipid profile was determined for each of these *Chlorella protothecoides* strains using standard gas chromatography (GC/FID) procedures. A summary of the lipid profile is included below. Values are expressed as area percent of total lipids. The collection numbers with UTEX are algal strains from the UTEX Algae Collection at the Univeristy of Texas, Austin (1 University Station A6700, Austin, Texas 78712-0183). The collections numbers with CCAP are algal strains from the Culture Collection of Algae and Protozoa (SAMS Research Services, Ltd. Scottish Marine Institute, OBAN, Argyll PA37 1QA, Scotland, United Kingdom). The collection number with SAG are are algal strains from the Culture Collection of Algae at Goettingen University (Nikolausberger Weg 18, 37073 Gottingen, Germany).

**Collection**

| Number | C12:0 | C14:0 | C16:0 | C16:1 | C18:0 | C18:1 | C18:2 | C18:3 | C20:0 | C20:1 |
|---|---|---|---|---|---|---|---|---|---|---|
| UTEX 25 | 0.0 | 0.6 | 8.7 | 0.3 | 2.4 | 72.1 | 14.2 | 1.2 | 0.2 | 0.2 |
| UTEX 249 | 0.0 | 0.0 | 9.7 | 0.0 | 2.3 | 72.4 | 13.7 | 1.9 | 0.0 | 0.0 |
| UTEX 250 | 0.0 | 0.6 | 10.2 | 0.0 | 3.7 | 69.7 | 14.1 | 1.4 | 0.3 | 0.0 |
| UTEX 256 | 0.0 | 0.9 | 10.1 | 0.3 | 5.6 | 64.4 | 17.4 | 1.3 | 0.0 | 0.0 |
| UTEX 264 | 0.0 | 0.0 | 13.3 | 0.0 | 5.7 | 68.3 | 12.7 | 0.0 | 0.0 | 0.0 |
| UTEX 411 | 0.0 | 0.5 | 9.6 | 0.2 | 2.8 | 71.3 | 13.5 | 1.5 | 0.2 | 0.2 |
| CCAP 211/17 | 0.0 | 0.8 | 10.5 | 0.4 | 3.3 | 68.4 | 15.0 | 1.6 | 0.0 | 0.0 |
| CCAP 221/8d | 0.0 | 0.8 | 11.5 | 0.1 | 3.0 | 70.3 | 12.9 | 1.2 | 0.2 | 0.0 |
| SAG 221 10d | 0.0 | 1.4 | 17.9 | 0.1 | 2.4 | 55.3 | 20.2 | 2.7 | 0.0 | 0.0 |

These data show that, although all of the above strains are *Chlorella protothecoides*, there are differences in the lipid profile between some of the strains.

### EXAMPLE 2

Three fermentation processes were performed with three different media formulations with the goal of generating algal biomass with high oil content. The first formulation (Media 1) was based on medium described in Wu et al. (1994 Science in China, vol. 37, No. 3, pp. 326-335) and consisted of per liter: KH₂PO₄, 0.7g; K₂HPO₄, 0.3g; MgSO₄7H₂O, 0.3g; FeSO₄7H₂O, 3mg; thiamine hydrochloride, 10 µg; glucose, 20g; glycine, 0.1g; H₃BO₃, 2.9mg; MnCl₂4H₂O, 1.8mg; ZnSO₄7H₂O, 220µg; CuSO₄5H₂O, 80µg; and NaMoO₄2H₂O, 22.9mg. The second medium (Media 2) was derived from the flask media described in Example 1 and consisted of per liter: K₂HPO₄, 4.2g; NaH₂PO₄, 3.1g; MgSO₄7H₂O, 0.24g; citric acid monohydrate, 0.25g; calcium chloride dihydrate, 25mg; glucose, 20g; yeast extract, 2g. The third medium (Media 3) was a hybrid and consisted of per liter: K₂HPO₄, 4.2g; NaH₂PO₄, 3.1g; MgSO₄7H₂O, 0.24g; citric acid monohydrate, 0.25g; calcium chloride dihydrate, 25mg; glucose, 20g; yeast extract, 2g; H₃BO₃, 2.9mg; MnCl₂4H₂O, 1.8 mg; ZnSO₄7H₂O, 220µg; CuSO₄5H₂O, 80µg; and NaMoO₄2H₂O, 22.9mg. All three media formulations were prepared and autoclave sterilized in lab scale fermentor vessels for 30 minutes at 121°C. Sterile glucose was added to each vessel following cool down post autoclave sterilization.

Inoculum for each fermentor was *Chlorella protothecoides* (UTEX 250), prepared in two flask stages using the medium and temperature conditions of the fermentor inoculated. Each fermentor was inoculated with 10% (v/v) mid-log culture. The three lab scale fermentors were held at 28°C for the duration of the experiment. The microalgal cell growth in Media 1 was also evaluated at a temperature of 23°C. For all fermentor evaluations, pH was maintained at 6.6-6.8, agitations at 500rpm and airflow at 1 vvm. Fermentation cultures were cultivated for 11 days. Biomass accumulation was measured by optical density at 750 nm and dry cell weight.

Lipid/oil concentration was determined using direct transesterification with standard gas chromatography methods. Briefly, samples of fermentation broth with biomass was blotted onto blotting paper and transferred to centrifuge tubes and dried in a vacuum oven at 65-70°C for 1 hour. When the samples were dried, 2mL of 5% H₂SO₄ in methanol was added to the tubes. The tubes were then heated on a heat block at 65-70°C for 3.5hours, while being vortexed and sonicated intermittently. 2ml of heptane was then added and the tubes were shaken vigorously. 2ml of 6% K₅CO₃ was added and the tubes were shaken vigorously to mix and then centrifuged at 800rpm for 2 minutes. The supernatant was then transferred to GC vials containing Na₂SO₄ drying agent and run using standard gas chromatography methods. Percent oil/lipid was based on a dry cell weight basis. The dry cell weights for cells grown using: Media 1 at 23°C was 9.4g/L; Media 1 at 28°C was 1.0g/L, Media 2 at 28°C was 21.2g/L; and Media 3 at 28°C was 21.5g/L. The lipid/oil concentration for cells grown using: Media 1 at 23°C was 3g/L; Media 1 at 28°C was 0.4g/L; Media 2 at 28°C was 18 g/L; and Media 3 at 28°C was 19g/L. The percent oil based on dry cell weight for cells grown using: Media 1 at 23°C was 32%; Media 1 at 28°C was 40%; Media 2 at 28°C was 85%; and Media 3 at 28°C was 88%. The lipid profiles (in area %, after normalizing to the internal standard) for algal biomass generated using the three different media formulations at 28°C are summarized below in Table 2.

**Table 2. Lipid profiles for Chlorella protothecoides grown under different media conditions.**

| | **Media 1 28°C** | **Media 2 28°C** | **Media 3 28°C** |
|---|---|---|---|
| | **(in Area %)** | **(in Area %)** | **(in Area %)** |
| **C14:0** | 1.40 | 0.85 | 0.72 |
| **C16:0** | 8.71 | 7.75 | 7.43 |
| **C16:1** | -- | 0.18 | 0.17 |
| **C17:0** | -- | 0.16 | 0.15 |
| **C17:1** | -- | 0.15 | 0.15 |
| **C18:0** | 3.77 | 3.66 | 4.25 |
| **C18:1** | 73.39 | 72.72 | 73.83 |
| **C18:2** | 11.23 | 12.82 | 11.41 |
| **C18:3 alpha** | 1.50 | 0.90 | 1.02 |
| **C20:0** | -- | 0.33 | 0.37 |
| **C20:1** | -- | 0.10 | 0.39 |
| **C20:1** | -- | 0.25 | -- |
| **C22:0** | -- | 0.13 | 0.11 |

### EXAMPLE 3

### Preparation of Biomass for Food Products

Microalgal biomass was generated by culturing microalgae as described in any one of Examples 1-2. The microalgal biomass was harvested from the fermentor, flask or other bioreactor.

GMP procedures were followed. Any person who, by medical examination or supervisory observation, is shown to have, or appears to have, an illness, open lesion, including boils, sores, or infected wounds, or any other abnormal source of microbial contamination by which there is a reasonable possibility of food, food-contact surfaces or food packaging materials becoming contaminated, is to be excluded from any operations which may be expected to result in such contamination until the condition is corrected. Personnel are instructed to report such health conditions to their supervisors. All persons working in direct contact with the microalgal biomass, biomass-contact surfaces and biomass-packaging materials conform to hygienic practices while on duty to the extent necessary to protect against contamination of the microalgal biomass. The methods for maintaining cleanliness include, but are not limited to: (1) Wearing outer garments suitable to the operation in a manner that protects against the contamination of biomass, biomass-contact surfaces or biomass packaging materials. (2) Maintaining adequate personal cleanliness. (3) Washing hands thoroughly (and sanitizing if necessary to protect against contamination with undesirable microorganisms) in an adequate hand-washing facility before starting work, after each absence from the work station and at any other time when the hands may have become soiled or contaminated. (4) Removing all unsecured jewelry and other objects that might fall into biomass, equipment or containers and removing hand jewelry that cannot be adequately sanitized during periods in which biomass is manipulated by hand. If such hand jewelry cannot be removed, it may be covered by material which can be maintained in an intact, clean and sanitary condition and which effectively protects against the contamination by these objects of the biomass, biomass-contact surfaces or biomass-packaging materials. (5) Maintaining gloves, if they are used in biomass handling, in an intact, clean and sanitary condition. The gloves should be of an impermeable material. (6) Wearing, where appropriate, in an effective manner, hair nets, headbands, caps, beard covers or other effective hair restraints. (7) Storing clothing or other personal belongings in areas other than where biomass is exposed or where equipment or utensils are washed. (8) Confining the following to areas other than where biomass may be exposed or where equipment or utensils are washed: eating biomass, chewing gum, drinking beverages or using tobacco. (9) Taking any other necessary precautions to protect against contamination of biomass, biomass-contact surfaces or biomass-packaging materials with microorganisms or foreign substances including, but not limited to, perspiration, hair, cosmetics, tobacco, chemicals and medicines applied to the skin. The microalgal biomass can optionally be subjected to a cell disruption procedure to generate a lysate and/or optionally dried to form a microalgal biomass composition.

### EXAMPLE 4

### Absence of Algal Toxins in Dried Chlorella protothecoides Biomass

A sample of *Chlorella protothecoides* (UTEX 250) biomass was grown and prepared using the methods described in Example 1. The dried biomass was analyzed using liquid chromatography-mass spectrometry/mass spectrometry (LC-MS/MS) analysis for the presence of contaminating algal and cyanobacterial toxins. The analyses covered all groups of algal and cyanobacterial toxins published in the literature and mentioned in international food regulations. The results show that the biomass sample did not contain any detectable levels of any of the algal or cyanobacterial toxins that were tested. The results are summarized in Table 3.

**Table 3. LC-MS/MS analytical results for algal and cyanobacterial toxins.**

| **Toxin Category** | **Toxin** | **Result** | **Limit of detection (LC/MS)** |
|---|---|---|---|
| Amnesic Shellfish Poisoning (ASP) Toxins | Domoic Acid | Not detectable | 1 µg/g |
| Diarrhetic Shellfish Poisoning (DSP) Toxins | Okadaic acid and Dinophysistoxins | Not detectable | 0.1 µg/g |
| | Pectenotoxins | Not detectable | 0.1 µg/g |
| | Yessotoxins | Not detectable | 0.1 µg/g |
| | Azaspiracides | Not detectable | 0.1 µg/g |
| | Gymnodimines | Not detectable | 0.1 µg/g |
| Paralytic Shellfish Poisoning (PSP) Toxins | Saxitoxin | Not detectable | (HPLC/FD) 0.3 µg/g |
| | Neosaxitoxin | Not detectable | (HPLC/FD) 0.3 µg/g |
| | Decarbamoylsaxitoxin | Not detectable | (HPLC/FD)) 0.3 µg/g |
| | Gonyautoxins | Not detectable | (HPLC/FD) 0.3 µg/g |
| Neurotoxic Shellfish Poisoning (NSP) Toxins | Brevetoxins | Not detectable | 0.1 µg/g |
| Cyanobacterial toxins | Microsystins MC-RR, MC-LR, MC-YR, MC-LA, MC-LW and MC-LF | Not detectable | 0.1 µg/g |
| | Nodularin | Not detectable | 0.1 µg/g |
| | Anatoxin-a | Not detectable | 0.5 µg/g |
| | Cylindrospermopsins | Not detectable | 0.2 µg/g |
| | Beta-Methylamino-L-Alanine | Not detectable | 2.5 µg/g |

### EXAMPLE 5

### Dietary Fiber Content in Chlorella protothecoides biomass

Proximate analysis was performed on samples of dried *Chlorella protothecoides* (UTEX 250) biomass grown and prepared using the methods described in Example 1 in accordance with Official Methods of ACOC International (AOAC Method 991.43). Acid hydrolysis for total fat content (lipid/oil) was performed on both samples and the fat content for the high lipid algal biomass was approximately 50% and for high protein algal biomass was approximately 15%. The crude fiber content was 2% for both high lipid and high protein algal biomass. The moisture (determined gravimetrically) was 5% for both high lipid and high protein algal biomass. The ash content, determined by crucible burning and analysis of the inorganic ash, was 2% for the high lipid algal biomass and 4% for the high protein biomass. The crude protein, determined by the amount of nitrogen released from burning each biomass, was 5% for the high lipid biomass and 50% for the high protein biomass. Carbohydrate content was calculated by difference, taking the above known values for fat, crude fiber, moisture, ash and crude protein and subtracting that total from 100. The calculated carbohydrate content for the high lipid biomass was 36% and the carbohydrate content for the high protein biomass as 24%.

Further analysis of the carbohydrate content of both algal biomass showed approximately 4-8% (w/w) free sugars (predominantly sucrose) in the samples. Multiple lots of high lipid-containing algal biomass were tested for free sugars (assays for fructose, glucose, sucrose, maltose and lactose) and the amount of sucrose ranged from 2.83% to 5.77%; maltose ranged from undected to 0.6%; and glucose ranged from undetected to 0.6%. The other sugars, namely fructose, maltose and lactose, were undetected in any of the assayed lots. Multiple lots of high protein-containing algal biomass were also tested for free sugars and only sucrose was detected in any of the lots at a range of 6.93% to 7.95%.

The analysis of the total dietary fiber content (within the carbohydrate fraction of the algal biomass) of both algal biomass was performed using methods in accordance with Offical Methods of ACOC International (AOAC Method 991.43). The high lipid biomass contained 19.58% soluble fiber and 9.86% insoluble fiber, for a total dietary fiber of 29.44%. The high protein biomass contained 10.31% soluble fiber and 4.28% insoluble fiber, for a total dietary fiber of 14.59%. Monosaccharide analysis of algal biomass

A sample of dried *Chlorella protothecoides* (UTEX 250) biomass with approximately 50% lipid by dry cell weight, grown and prepared using the methods described in Example 4, was analyzed for monosaccharide (glycosyl) composition using combined gas chromatography/mass spectrometry (GC/MS) of the per-O-trimethylsilyl (TMS) derivatives of the monosaccharide methyl glycosides produced from the sample by acidid methanolysis. Briefly, the methyl glycosides were first prepared from the dried *Chlorella protothecoides* sample by methanolysis in 1M HCl in methanol at 80°C for 18-22°C, followed by re-N-acetylation with pyridine and acetic anhydride in methanol (for detection of amino sugars). The samples were then per-O-trimethylsilylated by treatment with Tri-Sil (Pierce) at 80°C for 30 minutes. These procedures were previously described in Merkle and Poppe (1994) Methods Enzymol. 230:1-15 and York et al. (1985) Methods Enzymol. 118:3-40. GC/MS analysis of the TMS methyl glycosides was performed on an HP 6890 GC interfaced to a 5975b MSD, using a All Tech EC-1 fused silica capillary column (30m x 0.25 mm ID). The monosaccharides were identified by their retention times in comparison to standards and the carbohydrate character of these were authenticated by their mass spectra. The monosaccharide (glycosyl) composition of *Chlorella protothecoides* was: 1.2 mole % arabinose, 11.9 mole % mannose, 25.2 mole % galactose and 61.7 mole % glucose. These results are expressed as mole percent of total carbohydrate.

### EXAMPLE 6

### Amino acid profile of algal biomass

A sample of dried *Chlorella protothecoides* (UTEX 250) biomass with approximately 50% lipid by dry cell weight, grown and prepared using the methods described in Example 1, was analyzed for amino acid content in accordance with Official Methods of AOAC International (tryptophan analysis: AOAC method 988.15; methionine and cystine analysis: AOAC method 985.28 and the other amino acids: AOAC method 994.12). The amino acid profile from the dried algal biomass (expressed in percentage of total protein) was compared to the amino acid profile of dried whole egg (profile from product specification sheet for Whole Egg, Protein Factory Inc., New Jersey) and the results show that the two sources have comparable protein nutritional values. Results of the relative amino acid profile of a sample of *Chlorella protothecoides* show the biomass contains methionine (2.25%), cysteine (1.69%), lysine (4.87%), phenylalanine (4.31%), leucine (8.43%), isoleucine (3.93%), threonine (5.62%), valine (6.37%), histidine (2.06%), arginine (6.74%), glycine (5.99%), aspartic acid (9.55%), serine (6.18%), glutamic acid (12.73%), proline (4.49%) hydroxyproline (1.69%), alanine (10.11%), tyrosine (1.87%), and tryptophan (1.12%).

### EXAMPLE 7

### Carotenoid, Phospholipid, Tocotrienol and Tocopherol Compositions of Chlorella protothecoides UTEX 250 Biomass, Chlorella protothecoides algal flour, Chlorella protothecoides color mutant (strain BM1320) and oil extracted from Chlorella protothecoides color mutant (strain BM1320)

A sample of algal biomass produced using the methods described in Example 4 was analyzed for tocotrienol and tocopherol content using normal phase HPLC, AOCS Method Ce 8-89. The tocotrienol- and tocopherol- containing fraction of the biomass was extracted using hexane or another non-polar solvent. The complete tocotrienol and tocopherol composition results are summarized in Table 4.

**Table 4. Tocotrienol and tocopherol content in algal biomass.**

| **Tocotrienol and tocopherol composition of *Chlorella protothecoides* UTEX 250** | |
|---|---|
| Tocopherols | |
| Alpha tocopherol | 6.29 mg/100g |
| Delta tocopherol | 0.47 mg/100g |
| Gamma tocopherol | 0.54 mg/100g |
| **Total tocopherols** | **7.3 mg/100g** |

| Tocotrienols | |
|---|---|
| Alpha tocotrienol | 0.13 mg/g |
| Beta tocotrienol | 0 |
| Gamma tocotrienol | 0.09 mg/g |
| Delta tocotrienol | 0 |
| **Total tocotrienols** | **0.22 mg/g** |

The carotenoid-containing fraction of the biomass was isolated and analyzed for carotenoids using HPLC methods. The carotenoid-containing fraction was prepared by mixing lyophilized algal biomass (produced using methods described in Example 3) with silicon carbide in an aluminum mortar and ground four times for 1 minute each time, with a mortar and pestle. The ground biomass and silicon mixture was then rinsed with tetrahydrofuran (THF) and the supernatant was collected. Extraction of the biomass was repeated until the supernatant was colorless and the THF supernatant from all of the extractions were pooled and analyzed for carotenoid content using standard HPLC methods. The carotenoid content for algal biomass that was dried using a drum dryer was also analyzed using the methods described above.

The carotenoid content of freeze dried algal biomass was: total lutein (66.9-68.9mcg/g: with cis-lutein ranging from 12.4-12.7mcg/g and trans-lutein ranging from 54.5-56.2mcg/g); trans-zeaxanthin (31.427-33.451mcg/g); cis-zeaxanthin (1.201-1.315mcg/g); t-alpha cryptoxanthin (3.092-3.773mcg/g); t-beta cryptoxanthin (1.061-1.354mcg/g); 15-cis-beta carotene (0.625-.0675mcg/g); 13-cis-beta carotene (.0269-.0376mcg/g); t-alpha carotene (0.269-.0376mcg/g); c-alpha carotene (0.043-.010mcg/g); t-beta carotene (0.664-0.741mcg/g); and 9-cis-beta carotene (0.241-0.263mcg/g). The total reported carotenoids ranged from 105.819mcg/g to 110.815mcg/g.

The carotenoid content of the drum-dried algal biomass was significantly lower: total lutein (0.709mcg/g: with trans-lutein being 0.091mcg/g and cis-lutein being 0.618mcg/g); trans-zeaxanthin (0.252mcg/g); cis-zeaxanthin (0.037mcg/g); alpha-cryptoxanthin (0.010mcg/g); beta-cryptoxanthin (0.010mcg/g) and t-beta-carotene (0.008mcg/g). The total reported carotenoids were 1.03mcg/g. These data suggest that the method used for drying the algal biomass can significantly affect the carotenoid content.

Phospholipid analysis was also performed on the algal biomasss. The phospholipid-containing fraction was extracted using the Folch extraction method (chloroform, methanol and water mixture) and the oil sample was analyzed using AOCS Official Method Ja 7b-91, HPLC determination of hydrolysed lecithins (International Lecithin and Phopholipid Society 1999) and HPLC analysis of phospholipids with light scatting detection (International Lecithin and Phospholipid Society 1995) methods for phospholipid content. The total phospholipids by percent w/w was 1.18%. The phospholipid profile of algal oil was phosphatidylcholine (62.7%), phosphatidylethanolamine (24.5%), lysophosphatidiylcholine (1.7%) and phosphatidylinositol (11%). Similar analysis using hexane extraction of the phospholipid-containing fraction from the algal biomass was also performed. The total phospholipids by percent w/w was 0.5%. The phospholipid profile was phosphatidylethanolamine (44%), phosphatidylcholine (42%) and phosphatidylinositol (14%).

A sample of *Chlorella protothecoides* algal flour was tested for its phospholipid content as discussed above. The total phospholipid content of this sample was determined to be 0.8% w/w. The individual phospholipid content on a w/w basis was as follows: <0.01 % N-acylphosphatidylethanolamine, <0.01% phosphatidic acid; 0.25% phosphatidylethanolamine, 0.48% phosphatidylcholine, 0.07% phosphatidylinositol and <0.01% lysophosphatidylcholine.

A sample of algal flour made from a color mutant of *Chlorella protothecoides*, strain BM320, was tested for its phospholipid content as discussed above. The total phospholipid content of this sample was determined to be 0.62% w/w. The individual phospholipid content on a w/w basis was as follows: <0.01 % N-acylphosphatidylethanolamine, <0.01% phosphatidic acid; 0.21% phosphatidylethanolamine, 0.36% phosphatidylcholine, 0.05% phosphatidylinositol and <0.01% lysophosphatidylcholine.

An oil extracted from a color mutant of *Chlorella protothecoides*, strain BM320, was analyzed for various components. The oil was extracted by solvent extraction (acetone and liquid CO₂). The oil was not refined, bleached or deodorized. The oil comprised, in percent, w/w, 0.19% monoglycerides and 5.77% diglycerides. The oil comprised 3.24 mg alpha tocopherol per 100 g oil and 0.95 mg gamma tocopherol per 100 g oil. The oil comprised 191 mg ergosterol per 100 g oil, 5.70 mg campesterol per 100 g oil, 10.3 mg stigmasterol per 100 g oil, 5.71 mg β-sitosterol per 100 g oil and 204 mg other sterol per 100 g oil. The total tocotrienols of this oil was 0.25 mg per 100 g oil (0.22 mg alpha tocotrienol, <0.01 mg beta tocotrienol and 0.03 mg delta tocotrienol).

### EXAMPLE 8

### Production of Algal Flour (High Lipid)

High lipid containing *Chlorella protothecoides* grown using the fermentation methods and conditions described in Example 1 was processed into a high lipid algal flour. To process the microaglal biomass into algal flour, the harvested *Chlorella protothecoides* biomass was separated from the culture medium using centrifugation. The resulting concentrated biomass, containing over 40% moisture, was micronized using a high pressure homogenizer (GEA model NS1001 operating at a pressure level of 1000-1200 Bar until the average particle size of the biomass was less than 10 µm). The algal homogenate was then spray dried using standard methods. The resulting algal flour (micronized algal cells that have been spray dried into a powder form) was packaged and stored until use.

A sample of high lipid flour was analyzed for particle size. An algal flour in water dispersion was created and the algal flour particle size was deterimined using laser diffraction on a Malvern® Mastersizer 2000 machine using a Hydro 2000S attachment. A control dispersion was created by gentle mixing and other dispersions were created using 100 bar, 300 bar, 600 bar and 1000 bar of pressure. The results showed that the mean particle size of the algal flour is smaller in the condition with higher pressure (3.039µm in the gentle mixing condition and 2.484µm in the 1000 bar condition). The distribution of the particle sizes were shifted in the higher pressure conditions, with a decrease in larger sized particles (above 10 µm) and an increase in smaller particles (less than 1µm).

### EXAMPLE 9

### Food Compositions Using High-Lipid (Lipid-rich) Algal Flour

The following food formulations comprise high-lipid algal flour produced using the methods described in Example 8 and contained approximately 50% lipid.

### Algal Milk/Frozen Dessert

A formulation for algal milk was produced using high lipid algal flour. The algal milk contained the following ingredients (by weight): 88.4% water, 6.0% algal flour, 3.0% whey protein concentrate, 1.7% sugar, 0.6% vanilla extract, 0.2% salt and 0.1% stabilizers. The ingredients were combined and homogenized on low pressure using a hand-held homogenizer. The resulting algal milk was chilled before serving. The mouthfeel was comparable to that of whole milk and had good opacity. The algal flour used contained about 50% lipid, so the resulting algal milk contained about 3% fat. When compared to vanilla flavored soy milk (Silk), the algal milk had a comparable mouthfeel and opacity and lacked the beany flavor of soy milk.

The algal milk was then combined with additional sugar and vanilla extract and mixed until homogenous in a blender for 2-4 minutes. The mixture was placed in a prechilled ice cream maker (Cuisinart) for 1-2 hours until the desired consistency was reached. A conventional recipe ice cream made with 325 grams of half and half, 220 grams of 2% milk and 1 egg yolk was prepared as a comparison. The conventional recipe ice cream had the consistency comparable to that of soft served ice cream and was a rich-tasting, smooth-textured ice cream. Although the ice cream made from algal milk lacked the overall creaminess and mouthfeel of the conventional recipe ice cream, the consistency and mouthfeel was comparable to a rich tasting ice milk. Overall, the use of algal milk in a frozen dessert application was successful: the frozen dessert algal milk product was a lower fat alternative to a conventional ice cream.

### Algal Flour Pound Cake

Pound cake was produced with high lipid algal flour as an example of a baked good formulation to demonstrate the algal flour or algal biomass' capacity for holding or stabilizing air bubbles (aeration) in a baked good. The formulation for the algal flour pound cake was: vanilla extract (6.0 g); powdered sugar (122.0 g); whole eggs (122.0 g); water (16.0 g); all purpose flour (122 g); salt (1.5 g); Xanthan gum (Keltrol F) (0.2 g); baking powder (4 g); high lipid algal flour (45 g). The eggs were whisked until thick, pale and creamy and then the sugar was added and incorporated well. The vanilla extract was then added and mixed, followed by the algal flour, which was folded into the sugar/egg mixture. The dry ingredients were then blended well and added to the sugar/egg mixture alternatively with the water. The batter was then folded until well incorporated. The batter was then poured into paper-lined muffin tins and baked at 163°C (325°F) for 8-9 minutes. The pan was then rotated and baked for another 8-10 minutes.

The cakes had a light and airy texture with a well-developed crumb structure, identical to pound cake using butter. This pound cake with 10% (w/w) high lipid algal flour instead of butter demonstrated the algal flour or algal biomass' capacity to hold or stabilize aeration within a baked good.

### Macaroni and Cheese

Macaroni and cheese was produced in order to examine the ability of high-lipid algal flour or algal biomass and defatted algal flour (produced through CO₂ extraction of high lipid algal flour) to increase the cheese flavor and creaminess of a dairy (emzyme modified cheese (EMC) and butter/milk) product. The formulation for the macaroni and cheese was (expressed in % of final product by weight): EMC cheese powder (6.35%); water (21.27%); salt (0.21%); high lipid algal flour (3.81%); defatted algal flour (0.32%); cooked macaroni noodles (67.95%); and 50% acetic acid (0.10%). The dry ingredients (except for the noodles) were combined and water was added to the dry ingredients. The cheese mixture was then combined with the noodles.

The macaroni and cheese produced with high lipid algal flour and defatted algal flour tasted similar to macaroni and cheese products made from EMC powder (boxed macaroni and cheese). The high lipid algal flour/defatted algal flour-containing macaroni and cheese had a creamy texture and mouthfeel similar to macaroni and cheese prepared according to package direction (with milk and butter). This Example is a successful demonstration of how high lipid algal flour or algal biomass and defatted algal flour can impart a creamy, enhanced cheese flavor as a substitute for butter and milk. The overall fat content of the algal flour-containing macaroni and cheese was less than 2%.

### Low-fat Meat Patties

The effects of high lipid algal flour or algal biomass on ground beef patties was tested in the following formulations: 96% fat free ground beef containing 0, 0.5%, 1% or 2% high lipid algal flour (as a percent of the weight of the final product). 80% fat free ground beef was used as a positive control. The ground beef was mixed with the algal flour until well-blended and was then shaped into patties. No additional ingredients were added. The patties were then cooked in a hot skillet until fully cooked through. The 94% fat free negative control patty was dry and had a gamey/liver taste. The 80% fat free positive control patty had a moister and tender texture and the gamey/liver taste was less pronounced. The patties made with 96% fat free ground beef with 0.5%, 1% and 2% high lipid algal flour had a moister and tender texture than the negative control patty. The 2% high lipid algal flour patty was texturally similar to that of the positive control and had the same reduced gamey/liver taste.

Ground turkey patties with 0, 0.5%, 1% or 2% high lipid algal flour (as a percent of the weight of the final product) incorporated into 99% fat free ground turkey were also tested. As a positive control, a turkey patty made from 93% fat free ground turkey was also made. The ground turkey was mixed with the algal flour until well-blended and then was shaped into patties. The patties were then cooked in a hot skillet until fully cooked through. The 97% fat free turkey patty was dry, tough and chewy. The 93% fat free positive control turkey patty was juicier and had a roasted turkey taste. The patties containing 0.5%, 1% and 2% high lipid algal flour had a moister and juicier texture than the negative control patty. In addition, the 2% high lipid algal flour patty had a roasted turkey taste similar to the positive control.

### EXAMPLE 10

### Genotyping to Identify Other Microalgal Strains Suitable for Use as Food Genotyping of Algae

Genomic DNA was isolated from algal biomass as follows. Cells (approximately 200 mg) were centrifuged from liquid cultures 5 minutes at 14,000 x g. Cells were then resuspended in sterile distilled water, centrifuged 5 minutes at 14,000 x g and the supernatant discarded. A single glass bead ∼2mm in diameter was added to the biomass and tubes were placed at -80°C for at least 15 minutes. Samples were removed and 150 µl of grinding buffer (1% Sarkosyl, 0.25 M Sucrose, 50 mM NaCl, 20 mM EDTA, 100 mM Tris-HCl, pH 8.0, RNase A 0.5 ug/ul) was added. Pellets were resuspended by vortexing briefly, followed by the addition of 40 ul of 5M NaCl. Samples were vortexed briefly, followed by the addition of 66 µl of 5% CTAB (cetyl trimethylammonium bromide) and a final brief vortex. Samples were next incubated at 65°C for 10 minutes after which they were centrifuged at 14,000 x g for 10 minutes. The supernatant was transferred to a fresh tube and extracted once with 300 µl of phenol: chloroform: isoamyl alcohol:: 12:12:1, followed by centrifugation for 5 minutes at 14,000 x g. The resulting aqueous phase was transferred to a fresh tube containing 0.7 vol of isopropanol (∼190 µl), mixed by inversion and incubated at room temperature for 30 minutes or overnight at 4°C. DNA was recovered via centrifugation at 14,000 x g for 10 minutes. The resulting pellet was then washed twice with 70% ethanol, followed by a final wash with 100% ethanol. Pellets were air dried for 20-30 minutes at room temperature followed by resuspension in 50 µl of 10mM TrisCl, 1mM EDTA (pH 8.0).

Five µl of total algal DNA, prepared as described above, was diluted 1:50 in 10 mM Tris, pH 8.0. PCR reactions, final volume 20 µl, were set up as follows. Ten µl of 2 x iProof HF master mix (BIO-RAD) was added to 0.4 µl primer SZ02613 (5'-TGTTGAAGAATGAGCCGGCGAC-3' (SEQ ID NO:24) at 10mM stock concentration). This primer sequence runs from position 567-588 in Gen Bank accession no. L43357 and is highly conserved in higher plants and algal plastid genomes. This was followed by the addition of 0.4 µl primer SZ02615 (5'-CAGTGAGCTATTACGCACTC-3' (SEQ ID NO:25) at 10 mM stock concentration). This primer sequence is complementary to position 1112-1093 in Gen Bank accession no. L43357 and is highly conserved in higher plants and algal plastid genomes. Next, 5 µl of diluted total DNA and 3.2 µl dH₂O were added. PCR reactions were run as follows: 98°C, 45"; 98°C, 8"; 53°C, 12"; 72°C, 20" for 35 cycles followed by 72°C for 1 min and holding at 25°C. For purification of PCR products, 20 µl of 10 mM Tris, pH 8.0, was added to each reaction, followed by extraction with 40 µl of phenol:chloroform:isoamyl alcohol:: 12:12:1, vortexing and centrifuging at 14,000 x g for 5 minutes. PCR reactions were applied to S-400 columns (GE Healthcare) and centrifuged for 2 minutes at 3,000 x g. Purified PCR products were subsequently TOPO cloned into PCR8/GW/TOPO and positive clones selected for on LB/Spec plates. Purified plasmid DNA was sequenced in both directions using M13 forward and reverse primers. Sequence alignments and unrooted trees were generated using Geneious DNA analysis software. Sequences from strains 1-23 (designated in Example 1) are listed as SEQ ID NOs: 1-23 in the attached Sequence Listing, respectively (*i.e.* strain 1 corresponds to SEQ ID NO:1, strain 2 corresponds to SEQ ID NO:2 and so on).

### Genomic DNA analysis of 23S rRNA from 9 strains of Chlorella protothecoides

Genomic DNA from 8 strains of *Chlorella protothecoides* (UTEX 25, UTEX 249, UTEX 250, UTEX 256, UTEX 264, UTEX 411, SAG 211 10d, CCAP 211/17 and CCAP 211/8d) were isolated and genomic DNA analysis of 23S rRNA was performed according to the methods described above. All strains of *Chlorella protothecoides* tested were identical in sequence except for UTEX 25. Sequences for all eight strains are listed as SEQ ID NOs: 26 and 27 in the attached Sequence Listing.

### Genotyping analysis of commercially purchased Chlorella samples

Three commercially purchased *Chlorella* samples, *Chlorella regularis* (New Chapter, 390mg/gelcap), Whole Foods Broken Cell Wall *Chlorella* (Whole Foods, 500mg/pressed tablet) and NutriBiotic CGF Chlorella (NutriBiotic, 500mg/pressed tablet), were genotyped using the methods described herein. Approximately 200 mg of each commercially purchased *Chlorella* samples were resuspended and sterile distilled water for genomic DNA isolation.

The resulting PCR products were isolated and cloned into vectors and sequenced using M13 forward and reverse primers. The sequences were compared to known sequences using a BLAST search.

Comparison of 23s rRNA DNA sequences revealed that two out of the three commercially purchased *Chlorella* samples had DNA sequences matching *Lyngbya aestuarii* present (Whole Foods Broken Wall *Chlorella* and NutriBiotic CGF). *Lyngbya aestuarii* is a marine-species cynobacteria. These results show that some commercially available *Chlorella* contain other species of contaminating microorganisms, including organisms from genera such as *Lyngbya* that are known to produce toxins (see for example Teneva et. al, Environmental Toxicology, 18(1)1, pp. 9 - 20 (2003); Matthew et al., J Nat Prod., 71(6):pp. 1113-6 (2008); and Carmichael et al., Appl Environ Microbiol, 63(8): pp. 3104-3110 (1997).

### EXAMPLE 11

### Color Mutants of Microalgal Biomass Suitable for Use as Food

### Chemical Mutagenesis to Generate Color Mutants

*Chlorella protothecoides* (UTEX 250) was grown according to the methods and conditions described in Example 1. Chemical mutagenesis was performed on the algal strain using N-methyl-N'-nitro-N-nitroguanidine (NTG). The algal culture was subjected to the mutagen (NTG) and then selected through rounds of reisolation on 2.0% glucose agar plates. The colonies were screened for color mutants. *Chlorella protothecoides* (wildtype) appears to be a golden color when grown heterotophically. The screen produced one strain that appeared white in color on the agar plate. This color mutant was named 33-55 (deposited on October 13, 2009 in accordance with the Budapest Treaty at the American Type Culture Collection at 10801 University Boulevard, Manassas, VA 20110-2209 with a Patent Deposit Designation of PTA-10397). Another colony was also isolated and went through three rounds of reisolation to confirm that this mutation was stable. This mutant appeared to be light yellow in color on the agar plate and was named 25-32 (deposited on October 13, 2009 in accordance with the Budapest Treaty at the American Type Culture Collection at 10801 University Boulevard, Manassas, VA 20110-2209 with a Patent Deposit Designation of PTA-10396).

### Lipid Profile of Chlorella protothecoides 33-55

*Chlorella protothecoides* 33-55 and the parental *Chlorella protothecoides* (UTEX 250) were grown according to the methods and conditions described in Example 1. The percent lipid (by dry cell weight) was determined for both strains: *Chlorella protothecoides* 33-55 was at 68% lipid and the parental strain was at 62% lipid. The lipid profiles were determined for both strains and were as follows (expressed as area %): *Chlorella protothecoides* 33-55, C14:0 (0.81); C16:0 (10.35); C16:1 (0.20); C18:0 (4.09); C18:1 (72.16); C18:2 (10.60); C18:3 (0.10); and others (1.69); for the parental strain, C14:0 (0.77); C16:0 (9.67); C16:1 (0.22); C18:0 (4.73); C18:1 (71.45); C18:2 (10.99); C18:3 (0.14); and others (2.05).

### EXAMPLE 12

### Cellulosic Feedstock for the Cultivation of Microalgal Biomass Suitable for Use as Food

In order to evaluate if *Chlorella protothecoides* (UTEX 250) was able to utilize a non-food carbon source, cellulosic materials (exploded corn stover) was prepared for use as a carbon source for heterotrophic cultivation of *Chlorella protothecoides* that is suitable for use in any of the food applications described above in the preceeding Examples.

Wet, exploded corn stover material was prepared by the National Renewable Energy Laboratory (Golden, CO) by cooking corn stover in a 1.4% sulfuric acid solution and dewatering the resultant slurry. Using a Mettler Toledo Moisture analyzer, the dry solids in the wet corn stover were determined to be 24%. A 100 g wet sample was resuspended in deionized water to a final volume of 420 ml and the pH was adjusted to 4.8 using 10 N NaOH. Celluclast™ (Novozymes) (a cellulase) was added to a final concentration of 4% and the resultant slurry incubated with shaking at 50°C for 72 hours. The pH of this material was then adjusted to 7.5 with NaOH (negligible volume change), filter sterilized through a 0.22um filter and stored at -20°C. A sample was reserved for determination of glucose concentration using a hexokinase-based kit from Sigma, as described below.

Glucose concentrations were determined using Sigma Glucose Assay Reagent #G3293. Samples, treated as outlined above, were diluted 400 fold and 40µl was added to the reaction. The corn stover cellulosic preparation was determined to contain approximately 23 g/L glucose.

After enzymatic treatment and saccharification of cellulose to glucose, xylose and other monosaccharide sugars, the material prepared above was evaluated as a feedstock for the growth of *Chlorella protothecoides* (UTEX 250) using the medium described in Example 1. Varying concentrations of cellulosic sugars mixed with pure glucose were tested (0, 12.5, 25, 50 and 100% cellulosic sugars). Cells were incubated in the dark on the varying concentrations of cellulosic sugars at 28°C with shaking (300 rpm). Growth was assessed by measurement of absorbance at 750nm in a UV spectrophotometer. *Chlorella protothecoides* cultures grew on the corn stover material prepared with Celluclast, including media conditions in which 100% of fermentable sugar was cellulosic-derived. Similar experiments were also performed using sugarbeet pulp treated with Accellerase as the cellulosic feedstock. Like the results obtained with corn stover material, all of the *Chlorella protothecoides* cultures were able to utilize the cellulosic-derived sugar as a carbon source.

### EXAMPLE 13

### Algal Flour Improves Mouthfeel and Enhances Texture of Food Compositions Shortbread Cookie

Shortbread cookies containing algal flour, comprising approximately 20% total fat, were prepared using the following recipe. Shortbread cookies containing no algal flour, comprising approximately 20% total fat, were also prepared using the following recipe (Control). The cookies made with algal flour were determined by panel to be more buttery and richer in flavor than the cookies made without algal flour.

**Shortbread Cookie**

| | **Source** | **Control Cookie** | **Cookie with algal flour** |
|---|---|---|---|
| **Component** | | **Percent by weight** | **Percent by weight** |
| Flour, all purpose | General Mills | 42.11% | 41.50% |
| Baking Soda | Retail | 0.50% | 0.50% |
| Baking Powder | Retail | 0.65% | 0.65% |
| Salt | Retail | 0.51% | 0.51% |
| Nonfat dry milk | | 1.00% | 1.00% |
| Egg White, dry | | 1.00% | 1.00% |
| Modified Food Starch | Baka Snack | 2.00% | 2.00% |
| Sugar, bakers | | 23.20% | 22.81% |
| Algal Flour | | 0.00% | 3.00% |
| Water | | 4.00% | 4.00% |
| Vanilla extract: | McCormick 1x | 1.53% | 1.53% |
| Butter | | 23.50% | 21.50% |
| TOTAL | | 100.00% | 100.00% |
| | | | |
| Fat from Butter | | 19.98% | 18.28% |
| Fat from Algal flour | | 0.00% | 1.65% |
| **Total Fat** | | 19.98% | 19.93% |
| | | | |
| Water from Butter | | 3.53% | 3.23% |
| Water | | 4.00% | 4.00% |
| **Total Water** | | 9.06% | 8.76% |

The cookies were baked in a convection oven at 163°C (325°F) for 7 min.

### Chocolate Ice Cream

Chocolate ice cream containing algal flour, comprising approximately 10% total fat, was prepared using the following recipe. Chocolate ice cream containing no algal flour, comprising approximately 10% total fat, was also prepared using the following recipe (Control). The chocolate ice cream made with algal flour was determined by a panel to be richer, smoother and creamier than the ice cream made without algal flour. The ice cream made with algal flour was perceived by the panel to be higher in fat. Trace amounts of additional ingredients as shown below were added.

**Chocolate Ice Cream with Algal Flour**

| **Component** | **Source** | **Percent by weight** | **Total Fat %** |
|---|---|---|---|
| Milk, skim | | 52.90% | |
| Sugar, granulated | C&H | 18.00% | |
| Algal flour | | 2.00% | 1.10% |
| Manufacturing Cream, 40% fat | 40% Fat | 20.50% | 8.2% |
| Cocoa 11% | Gerken's Russet Plus | 2.50% | 0.28% |
| Corn Syrup, 36DE | 36DE | Trace | |
| Nonfat dry milk high heat, #33225 | | 2.00% | |
| Unsweetened chocolate | | 1.50% | 0.75% |
| GELSTAR®, IC 3548 (stabilizer) | FMC | 0.600% | |
| Flavors | | Trace | |
| Total | | 100.00% | 10.33% |

### Directions

1. All ingredients were mixed in the following order. A pastry knife was used to blend algal flour, stabilizer and sugar. Next, cocoa was added and the mixture was set aside.
2. Corn syrup, skim milk and milk solids mixed together and blend into dry mix of (1) above. The cream was added last.
3. The mixture was heated to 82°C (180°F) in a glass mixing bowl with a lid in a microwave oven. Every two minutes, the temperature was checked and the mixture was stirred. Once the mixture reached 82°C (180°F), the microwave oven was turned off. Alternatively, the mixture can be heated in double boiler until temperature reaches 69°C (150°F).
4. Next, the mixture was homogenize at 180/30 bar using the GEA NiroSoavi Panda Homogenizer.
5. The mixture was then refrigerated, generally overnight, flavors were added and the ice cream machine was activated.

**Chocolate Ice Cream without Algal Flour**

| **Component** | | **Percent by weight** | **Total Fat %** |
|---|---|---|---|
| Milk, skim | | 51.40% | |
| Sugar, granulated | C&H | 18.00% | |
| Algal flour | | 0.00% | 0.00% |
| Manufacturing Cream, 40% fat | 40% Fat | 23.00% | 9.2% |
| cocoa 11% | Gerken's Russet Plus | 2.50% | 0.28% |
| Corn Syrup, 36DE | 36DE | trace | |
| NFDM, high heat, #33225 | | 3.00% | |
| Unsweetened chocolate | | 1.50% | 0.75% |
| GELSTAR® IC 3548 (stabilizer) | FMC | 0.600% | |
| Flavor | | trace | |
| Total | | 100.00% | 10.23% |

### Directions

The ice cream was made as above, without the addition of the algal flour.

### EXAMPLE 14

### Interaction with Milk Proteins

The proteins contained in milk are casein and whey. Algal flour or algal biomass interacts with milk and milk proteins to provide improved mouthfeel of certain foods.

The use of algal flour in combination whey improved the mouthfeel of the algal beverage of Example 9. The beverage disclosed in Example 9 was modified as described below. The addition of whey to the algal beverage improved the mouthfeel of the beverage. Other proteins such as Golden Chlorella High protein (commercially available) were also shown to improve mouthfeel. In contrast, the addition of a soy protein or pea protein did not improve the mouthfeel of the algal beverage.

Similarly, the interaction of algal flour or algal biomass with milk provides improved mouthfeel of food compositions of foods comprising milk, for example, cream-based soups, coffee and tea creamers, dairy-based beverages, yogurts, ice cream, ice milk, sherbet, sorbet and the like.

**Algal Milk Beverage**

| Component | Wet weight Ingredient, Percent |
|---|---|
| Bottled or Tap water | 89.381 |
| Sugar granulated | 1.7 |
| Salt | 0.23 |
| algal flour | 5 |
| Tic 710H Carrageenan (stabilizer) | 0.014 |
| FMC Viscarin 359 Stabilizer (stabilizer) | 0.075 |
| Vanilla extract: McCormick 1x | 0.6 |
| Eggstend 300 (whey protein) | 3 |
| Total | 100 |

### Directions

Water was added to a container and the remaining ingredients were added to the water in the order listed while blending. The liquid was homogenized in a bach homonizer at 300-400 barr for one pass. The homogenized liquid was transferred to appropriate containers and refrigerated.

### EXAMPLE 15

### Extension of Shelf Life of Food Compositions Containing Algal Flour

### Sugar Cookies

Sugar cookies containing algal flour were prepared using the following recipe. Sugar cookies containing no algal flour were also prepared using the following recipe. The 3% algal flour sugar cookie formulation was adjusted by removing egg yolk and reducing the butter from the conventional cookie formulation to provide a cookie in which the total fat was the same in both formulations. The cookies were stored for a period of time in foil packaging and evaluated by a sensory panel after three days and after three months. The cookies containing no algal flour were stale and cohesive after three days and were not acceptable at three months. The cookies containing algal flour remained crisp at both three days and three months and were acceptable at both time periods.

**Sugar Cookie**

| | **Source** | **Cookie without algal flour** | **Cookie with 3% algal flour** |
|---|---|---|---|
| **Component** | | **Percent** | **Percent** |
| Flour, all purpose | General Mills | 36.09% | 35.00% |
| Baking Soda | retail | 0.30% | 0.30% |
| Baking Powder | retail | 0.70% | 0.70% |
| Salt | retail | 0.00% | 0.00% |
| Eggs, whole | | 6.52% | 0.00% |
| Egg White | | 0.00% | 0.50% |
| Sugar, bakers | C&H | 37.00% | 35.00% |
| Algal Flour | | 0.00% | 3.00% |
| Water | | 0.00% | 7.00% |
| Vanilla extract, 1X: | McCormick | 0.75% | 0.75% |
| Butter | unsalted | 19.00% | 17.75% |
| TOTAL | | 100.36% | 100.00% |
| Fat from Eggs | | 0.73% | 0.00% |
| Fat from Butter | | 16.15% | 15.09% |
| Fat from Algal flour | | | 1.65% |
| Total Fat | | 16.88% | 16.74% |
| Water | | 0 | 0 |
| Water from Eggs | | 4.89% | 0.00% |
| Water from Butter | | 2.85% | 2.66% |
| Vanilla extract | | 0.75% | 0.75% |
| Total Water | | 0.00% | 7.00% |
| Total | | 8.49% | 10.41% |

### Directions

1. The dry ingredients, flour, salt baking soda and baking powder were blended and set aside.
2. The shortening was creamed by slowly adding algal flour and sugar in a Kitchen Aid mixer with the paddle attachment.
3. With the mixer on slow speed (1 or 2), water and vanilla extract were slowly added. Once all the water and vanilla extract was added, the mixture speed was increased to medium and mixed for two minutes.
4. Next the eggs were added and the mixture was mixed at medium speed for two minutes.
5. The blended dry ingredients of step 1 were added slowly to the mixture of step 4, initially at a slow mix speed, then increasing to 6-8 for about 2-3 minutes to form a dough.
6. A baking sheet was sprayed with oil and the dough of step 6 was rolled out to a thickness of 8 mm and baked at 177°C (350°F) for 7-9 minutes.

### Crackers

Crackers containing algal flour were prepared by the American Baking Institute using the following recipe. Crackers containing no algal flour were also prepared using the following recipe. In preparing the crackers containing algal flour, shortening and algal flour use levels were adjusted to provide a cracker with about 33% or about 50% reduction in added fat as compared to the full fat control formulations containing no algal flour. The mixing procedures were tested to evaluate the impact of dough characteristics. Delaying the addition of the algal flour to the dough during the mixing process resulted in a reduction in the total amount of the water added to the dough. The procedure was modified to add all ingredients except the algal flour to the mixing bowl and mixed on speed one for two minutes to blend the ingredients together. The mixing speed was then changed to speed two and mixed for four minutes. Next, the algal flour was added and mixed for an additional eight minutes.

The texture of the algal flour-containing cracker was at par with the full fat, non-algal flour containing cracker. A panel described the cracker formulated with the algal flour as being "crunchier" and preferred the flavor and texture over the cracker formulated without the algal flour.

The crackers were stored for a period of time in foil packaging and evaluated by a panel after 30 days and after four months. The crackers containing no algal flour were stale and adhesive after 30 days and were not acceptable at four months. The crackers containing algal flour after four months of storage remained crunchy and acceptable.

**Crackers**

| | **Crackers Without Algal Flour** | **Crackers With Algal Flour (50% fat reduction)** |
|---|---|---|
| Ingredient | Weight Percent | Weight Percent |
| Flour, pastry | 65.34% | 65.06% |
| Salt | 0.65% | 0.65% |
| Sodium Bicarbonate | 0.49% | 0.49% |
| Shortening | 7.84% | 1.04% |
| Algal Flour | 0.00% | 5.21% |
| Sugar, granulated | 5.23% | 5.23% |
| Non Fat Dry Milk | 0.98% | 0.98% |
| Nondiastatic Malt | 0.33% | 0.33% |
| Ammonium Bicarbonate | 0.65% | 0.65% |
| Fresh Yeast | 0.16% | 0.16% |
| Sodium Sulfite | 0.03% | 0.03% |
| Water | 18.30% | 20.17% |
| TOTAL | 100.00% | 100.00% |

### Directions

All ingredients except the algal flour were mixed together in a Hobart floor mixer with a paddle for two minutes at the first speed to form a dough. The speed of the mixer was increased to second speed and mixed for four minutes. The algal flour was then added to the dough then mixed for an additional 8 minutes at second speed. The dough was baked in an oven on a mesh band in zone 1 (250°C (450°F) top / 239CF (430°F) bottom w/ dampers closed/closed), zone 2 (236°C (425°F) top/ 222°C (400°F) bottom w/ dampers open/open) or zone 3 (231°C (415°F) top/ 208°C (375°F) bottom w/ dampers open/open) until golden brown. The crackers had a moisture content of about 3%.

### EXAMPLE 16

A spreadable butter product with algal flour was prepared according to the recipe below. The spreadable butter was made by whipping algal flour with butter in a mixer at high speed and therafter water was slowly added to the algal flour/butter mixture while mixing at high speed. Next salt was dissolved in water to prepare salted water. Thereafter, salted water was slowly added to the algal flour/palm oil mixture while mixing at high speed. The texture and flavor of the algal flour-containing spread was similar to full fat butter and margarine spreads without algal flour.

### Spreadable Butter

**Spreadable Butter**

| **Component** | **Weight Percent** |
|---|---|
| Algal Flour | 20% |
| Water | 30% |
| Butter, salted | 50% |
| TOTAL | 100% |

### EXAMPLE 17

### Combination of algal oil and defatted defatted algal flour

In the cookie formulation as shown below, instead of using algal flour, an equivalent amount of defatted algal flour and algal oil were used in making the cookies. The cookies made with defatted algal flour and algal oil were compared to cookies made with algal flour. A panel evaluated the cookies. The cookies made with algal flour were noted as tasting better, sweeter, had a chewier texture and were perceived to have stronger, more buttery flavor. Additionally, the color of the cookies made with defatted algal flour and algal oil had a different color than the cookies made with algal flour. In non-homogenized foods, the use of defatted algal flour and algal oil produced an inferior product when compared to the use of algal flour.

**Algal Sugar Cookies: No Eggs and No Butter (approximately 3.5% total fat)**

| | **Component** | **Ingredient Percent by weight** | **Grams** |
|---|---|---|---|
| Dry Mix 1: | Flour, all purpose | 38 | 155.6 |
| | Baking Soda | 0.3 | 1.19 |
| | Baking Powder | 0.7 | 2.88 |
| | salt | 0.5 | 2.2 |
| Dry Mix 2: | Algal flour | 7 | 28.8 |
| | Sugar granulated | 34 | 140.5 |
| Wet Ingredients | water | 17 | 70.7 |
| | Vanilla extract: McCormick, 1x | 1.5 | 6.5 |
| | eggstend | 1 | 4 |
| | TOTAL | 100 | 412.37 |

### Directions

1. The flour, salt, baking soda, baking powder and eggs were mixed and set aside.
2. The sugar and algal flour were mixed in a Kitchen Aid miixer with a whisk attachment for 5 minutes.
3. With mixer on slow speed (1-2), water was slowly added to the mixture from step 2 above.
4. With mixer on slow speed (1-2), vanilla extract was slowly added to the mixture from step 3 above to form a dough.
5. The dough was refrigerated for 1 hour. Alternatively, the dough can be refrigerated for longer periods, including up to 2-4 days or be frozen for later use.
6. The cookie sheet was sprayed with oil.
7. The dough was scooped and rolled into disks and placed onto a cookie sheet. Each cookie weighed approximately 15 grams.
8. The cookies were baked for approximately from 6 minutes to 9 minutes at 293°C 325°F. Cookies baked for about 6 minutes yielded a cookie "soft" in texture. Cookies baked longer were crunchier and darker.

In the algal beverage formulation of Example 9, instead of using algal flour, an equivalent amount of defatted algal flour and algal oil were used in making the homogenized beverage. A panel determined that the beverage made with defatted algal flour and algal oil was equivalent to the beverage made with algal flour.

### EXAMPLE 18

### Combination of non-algal oil and non-algal fiber

Cookies and a beverage as described in Example 17 were prepared using canola oil and oat fiber. For both beverages and cookies, the combination of canola oil and oat fiber did not reproduce the results of beverages and cookies made with algal flour. The use of canola oil and oat fiber produced inferior beverages and cookies.

The publications mentioned herein are cited for the purpose of describing and disclosing reagents, methodologies and concepts that may be used in connection with the present invention. Nothing herein is to be construed as an admission that these references are prior art in relation to the inventions described herein.

Although this invention has been described in connection with specific embodiments thereof, it will be understood that it is capable of further modifications. This application is intended to cover any variations, uses or adaptations of the invention following, in general, the principles of the invention and including such departures from the present disclosure as come within known or customary practice within the art to which the invention pertains and as may be applied to the essential features hereinbefore set forth. It is understood that the examples and embodiments described herein are for illustrative purposes only and that various modifications or changes in light thereof will be suggested to persons skilled in the art and are to be included within the purview of this application and scope of the appended claims.

### SEQUENCE LISTING

**SEQ ID NO:24**
TGTTGAAGAATGAGCCGGCGAC
**SEQ ID NO:25**
CAGTGAGCTATTACGCACTC

## Claims

1. A frozen food composition comprising:
(a) heterotrophically produced algal flour, which is a powdered homogenate of microalgal biomass containing mechanically lysed cells in which more than 50% of the cells have been disrupted such that the intracellular components of the cell are no longer completely enclosed within the cell membrane, said algal flour comprising less than 200 ppm chlorophyll and more than 20% by dry weight triglyceride oil, wherein less than 5% by weight of the oil is docosahexaenoic acid (DHA);
(b) at least one additional edible ingredient; and
(c) gas;
wherein the frozen food composition comprises a continuous phase and a discontinuous gas phase, and wherein the percent of the volume of the food contributed by the gas is between 1% and 50%.

2. The frozen food composition of claim 1, wherein the food composition is an aerated food.

3. The frozen food composition of claim 1 or claim 2, wherein the composition is selected from the group consisting of ice cream, gelato, sorbet, mousse, flan, custard, meringue, pate, baked good, mousse, whipped dairy toppings, frozen yogurt, whipped fillings and sauce.

4. The frozen food composition of any one of the preceding claims, wherein the food composition is an ice cream, sorbet or gelato.

5. A method of making an aerated food comprising mixing:
(a) heterotrophically produced algal flour, which is a powdered homogenate of microalgal biomass containing mechanically lysed cells in which more than 50% of the cells have been disrupted such that the intracellular components of the cell are no longer completely enclosed within the cell membrane, said algal flour comprising less than 200 ppm chlorophyll and more than 20% by dry weight triglyceride oil, wherein less than 5% by weight of the oil is docosahexaenoic acid (DHA);
(b) water; and
(c) at least one additional edible ingredient,
to make a dispersion, wherein the algal flour comprises 0.5 to 10% w/w of the dispersion; and
incorporating gas into the dispersion to form stable discontinuous gas phase bubbles, wherein the food composition comprises a continuous phase and a discontinuous gas phase and the percent of the volume of the food contributed by the gas is between 1% and 50%.

6. A meat product comprising a matrix of:
(a) ground or chopped meat; and
(b) at least 0.5% w/w heterotrophically produced algal flour, which is a powdered homogenate of microalgal biomass containing mechanically lysed cells in which more than 50% of the cells have been disrupted such that the intracellular components of the cell are no longer completely enclosed within the cell membrane, said algal flour comprising less than 200 ppm chlorophyll and at least 20% by dry weight triglyceride oil, wherein less than 5% by weight of the oil is docosahexaenoic acid (DHA);
wherein the meat and algal flour are dispersed throughout the matrix,

7. A dairy food composition comprising:
(a) at least one dairy ingredient; and
(b) heterotrophically produced algal flour, which is a powdered homogenate of microalgal biomass containing mechanically lysed cells in which more than 50% of the cells have been disrupted such that the intracellular components of the cell are no longer completely enclosed within the cell membrane, said algal flour comprising less than 200 ppm chlorophyll and at least 20% by dry weight triglyceride oil, wherein less than 5% by weight of the oil is docosahexaenoic acid (DHA);
wherein between 10% and 100% of the fat in the food is provided by the algal flour.

8. The frozen food composition of claim 1, the meat product of claim 6 or the dairy food composition of claim 7, wherein more than 75 to 90% of the mechanically lysed cells have been disrupted such that the intracellular components of the cell are no longer completely enclosed within the cell membrane.

9. The frozen food composition of claim 1, the meat product of claim 6 or the dairy food composition of claim 7,wherein the algal flour is obtained from a species of the genus *Chlorella.*

10. The frozen food composition of claim 1, the meat product of claim 6 or the dairy food composition of claim 7, wherein the algal flour is obtained from *Chlorella protothecoides.*

11. The method of claim 5, wherein more than 75 to 90% of the mechanically lysed cells have been disrupted such that the intracellular components of the cell are no longer completely enclosed within the cell membrane.

12. The method of claim 5, wherein the algal flour is obtained from a species of the genus *Chlorella.*

13. The method of claim 5, wherein the algal flour is obtained from *Chlorella protothecoides.*

## Patentansprüche

1. Gefrorene Nahrungsmittelzusammensetzung, umfassend:
(a) auf heterotrophe Weise erzeugtes Algenmehl, wobei es sich um ein pulverförmiges Homogenisat aus Mikroalgenbiomasse handelt, die Zellen enthält, welche eine mechanische Lyse erfahren haben, wobei mehr als 50 % der Zellen derart aufgebrochen worden sind, dass die intrazellulären Bestandteile der Zelle nicht mehr vollständig innerhalb der Zellmembran eingeschlossen sind, wobei das Algenmehl weniger als 200 ppm an Chlorophyll und mehr als 20 Trockengewichts-% an Triglyceridöl umfasst, wobei Docosahexaensäure (DHA) weniger als 5 Gewichts-% des Öls ausmacht;
(b) mindestens einen zusätzlichen essbaren Inhaltsstoff; und
(c) Gas;
wobei die gefrorene Nahrungsmittelzusammensetzung eine kontinuierliche Phase und eine diskontinuierliche Gasphase umfasst, und wobei der Prozentanteil am Nahrungsmittel nach Volumen, welchen das Gas ausmacht, zwischen 1 % und 50 % liegt.

2. Gefrorene Nahrungsmittelzusammensetzung nach Anspruch 1, wobei es sich bei der Nahrungsmittelzusammensetzung um ein lufthaltiges Nahrungsmittel handelt.

3. Gefrorene Nahrungsmittelzusammensetzung nach Anspruch 1 oder Anspruch 2, wobei die Zusammensetzung aus der Gruppe ausgewählt ist, die aus Cremeeis, Speiseeis italienischer Art mit geringem Milch- und Luftanteil, Sorbet, Schaumspeisen, Puddinggebäck, Custard, Baisermasse, Pastetenmasse, Backwaren, Schaumspeisen, aufgeschlagenen Milchprodukten zur Verfeinerung, Joghurteis, aufgeschlagenen Füllungen und aus Soßen besteht.

4. Gefrorene Nahrungsmittelzusammensetzung nach einem beliebigen der vorhergehenden Ansprüche, wobei es sich bei der Nahrungsmittelzusammensetzung um ein Cremeeis, ein Sorbet oder ein Speiseeis italienischer Art mit geringem Milch- und Luftanteil handelt.

5. Verfahren zur Herstellung eines lufthaltigen Nahrungsmittels, im Rahmen dessen Folgendes vermischt wird:
(a) auf heterotrophe Weise erzeugtes Algenmehl, wobei es sich um ein pulverförmiges Homogenisat aus Mikroalgenbiomasse handelt, die Zellen enthält, welche eine mechanische Lyse erfahren haben, wobei mehr als 50 % der Zellen derart aufgebrochen worden sind, dass die intrazellulären Bestandteile der Zelle nicht mehr vollständig innerhalb der Zellmembran eingeschlossen sind, wobei das Algenmehl weniger als 200 ppm an Chlorophyll und mehr als 20 Trockengewichts-% an Triglyceridöl umfasst, wobei Docosahexaensäure (DHA) weniger als 5 Gewichts-% des Öls ausmacht;
(b) Wasser; und
(c) mindestens ein zusätzlicher essbarer Inhaltsstoff,
um eine Dispersion herzustellen, wobei das Algenmehl 0,5 bis 10 % (w/w) der Dispersion ausmacht; und
woraufhin der Dispersion Gas beigefügt wird, um stabile diskontinuierliche Gasphasenblasen zu bilden, wobei die Nahrungsmittelzusammensetzung eine kontinuierliche Phase und eine diskontinuierliche Gasphase umfasst und der Prozentanteil am Nahrungsmittel nach Volumen, welchen das Gas ausmacht, zwischen 1 % und 50 % liegt.

6. Fleischprodukt, das eine Matrix aus Folgendem umfasst:
(a) gewolftes oder gehacktes Fleisch; und
(b) mindestens 0,5 % (w/w) an auf heterotrophe Weise erzeugtem Algenmehl, wobei es sich um ein pulverförmiges Homogenisat aus Mikroalgenbiomasse handelt, die Zellen enthält, welche eine mechanische Lyse erfahren haben, wobei mehr als 50 % der Zellen derart aufgebrochen worden sind, dass die intrazellulären Bestandteile der Zelle nicht mehr vollständig innerhalb der Zellmembran eingeschlossen sind, wobei das Algenmehl weniger als 200 ppm an Chlorophyll und mindestens 20 Trockengewichts-% an Triglyceridöl umfasst, wobei Docosahexaensäure (DHA) weniger als 5 Gewichts-% des Öls ausmacht;
wobei das Fleisch und das Algenmehl über die gesamte Matrix hinweg dispergiert sind.

7. Nahrungsmittelzusammensetzung auf Milchbasis, umfassend:
(a) mindestens einen Inhaltsstoff auf Milchbasis; und
(b) auf heterotrophe Weise erzeugtes Algenmehl, wobei es sich um ein pulverförmiges Homogenisat aus Mikroalgenbiomasse handelt, die Zellen enthält, welche eine mechanische Lyse erfahren haben, wobei mehr als 50 % der Zellen derart aufgebrochen worden sind, dass die intrazellulären Bestandteile der Zelle nicht mehr vollständig innerhalb der Zellmembran eingeschlossen sind, wobei das Algenmehl weniger als 200 ppm an Chlorophyll und mindestens 20 Trockengewichts-% an Triglyceridöl umfasst, wobei Docosahexaensäure (DHA) weniger als 5 Gewichts-% des Öls ausmacht;
wobei zwischen 10 % und 100 % des Fettes, welches in dem Nahrungsmittel vorliegt, aus dem Algenmehl stammt.

8. Gefrorene Nahrungsmittelzusammensetzung nach Anspruch 1, Fleischprodukt nach Anspruch 6, oder Nahrungsmittelzusammensetzung auf Milchbasis nach Anspruch 7, wobei mehr als 75 bis 90 % der Zellen, welche eine mechanische Lyse erfahren haben, derart aufgebrochen worden sind, dass die intrazellulären Bestandteile der Zelle nicht mehr vollständig innerhalb der Zellmembran eingeschlossen sind.

9. Gefrorene Nahrungsmittelzusammensetzung nach Anspruch 1, Fleischprodukt nach Anspruch 6 oder Nahrungsmittelzusammensetzung auf Milchbasis nach Anspruch 7, wobei das Algenmehl ausgehend von einer Art der Gattung *Chlorella* erhalten wird.

10. Gefrorene Nahrungsmittelzusammensetzung nach Anspruch 1, Fleischprodukt nach Anspruch 6 oder Nahrungsmittelzusammensetzung auf Milchbasis nach Anspruch 7, wobei das Algenmehl ausgehend von *Chlorella protothecoides* erhalten wird.

11. Verfahren nach Anspruch 5, wobei mehr als 75 bis 90 % der Zellen, welche eine mechanische Lyse erfahren haben, derart aufgebrochen worden sind, dass die intrazellulären Bestandteile der Zelle nicht mehr vollständig innerhalb der Zellmembran eingeschlossen sind.

12. Verfahren nach Anspruch 5, wobei das Algenmehl ausgehend von einer Art der Gattung *Chlorella* erhalten wird.

13. Verfahren nach Anspruch 5, wobei das Algenmehl ausgehend von *Chlorella protothecoides* erhalten wird.

## Revendications

1. Composition alimentaire congelée comprenant :
(a) une farine d'algue produite de façon hétérotrophe, qui est un homogénat pulvérulent de biomasse de microalgue contenant des cellules lysées mécaniquement dans lequel plus de 50 % des cellules ont été rompues de sorte que les composants intracellulaires de la cellule ne sont plus complètement entourés par la membrane cellulaire, ladite farine d'algue comprenant moins de 200 ppm de chlorophylle et plus de 20 % en poids sec d'huile de triglycéride, dans laquelle moins de 5 % en poids de l'huile est de l'acide docosahexaénoïque (DHA) ;
(b) au moins un ingrédient comestible supplémentaire ; et
(c) un gaz ;
où la composition alimentaire congelée comprend une phase continue et une phase gazeuse discontinue, et dans laquelle le pourcentage du volume de l'aliment constitué par le gaz est compris entre 1 % et 50 %.

2. Composition alimentaire congelée selon la revendication 1, où la composition alimentaire est un aliment aéré.

3. Composition alimentaire congelée selon la revendication 1 ou la revendication 2, où la composition est choisie dans le groupe constitué de crème glacée, crème glacée italienne, sorbet, mousse, flan, crème anglaise, meringue, pâté, produits de boulangerie, mousse, garnitures laitières fouettées, yaourt congelé, garnitures fouettées et sauce.

4. Composition alimentaire congelée selon l'une quelconque des revendications précédentes, où la composition alimentaire est une crème glacée, un sorbet ou une crème glacée italienne.

5. Procédé de fabrication d'un aliment aéré comprenant le mélange de :
(a) une farine d'algue produite de façon hétérotrophe, qui est un homogénat pulvérulent de biomasse de microalgue contenant des cellules lysées mécaniquement dans lequel plus de 50 % des cellules ont été rompues de sorte que les composants intracellulaires de la cellule ne sont plus complètement entourés par la membrane cellulaire, ladite farine d'algue comprenant moins de 200 ppm de chlorophylle et plus de 20 % en poids sec d'huile de triglycéride, dans laquelle moins de 5 % en poids de l'huile est de l'acide docosahexaénoïque (DHA) ;
(b) de l'eau ; et
(c) au moins un ingrédient comestible supplémentaire, pour préparer une dispersion, dans laquelle la farine d'algue constitue 0,5 à 10 % m/m de la dispersion ; et l'incorporation de gaz dans la dispersion pour former des bulles de phase gazeuse discontinue stables, dans lequel la composition alimentaire comprend une phase continue et une phase gazeuse discontinue et le pourcentage du volume de l'aliment constitué par le gaz est compris entre 1 % et 50 %.

6. Produit de viande comprenant une matrice de :
(a) viande broyée ou hachée ; et
(b) au moins 0,5 % m/m de farine d'algue produite de façon hétérotrophe, qui est un homogénat pulvérulent de biomasse de microalgue contenant des cellules lysées mécaniquement dans lequel plus de 50 % des cellules ont été rompues de sorte que les composants intracellulaires de la cellule ne sont plus complètement entourés par la membrane cellulaire, ladite farine d'algue comprenant moins de 200 ppm de chlorophylle et au moins 20 % en poids sec d'huile de triglycéride, dans laquelle moins de 5 % en poids de l'huile est de l'acide docosahexaénoïque (DHA) ;
dans lequel la viande et la farine d'algue sont dispersées dans l'ensemble de la matrice.

7. Composition alimentaire laitière comprenant :
(a) au moins un ingrédient laitier ; et
(b) une farine d'algue produite de façon hétérotrophe, qui est un homogénat pulvérulent de biomasse de microalgue contenant des cellules lysées mécaniquement dans lequel plus de 50 % des cellules ont été rompues de sorte que les composants intracellulaires de la cellule ne sont plus complètement entourés par la membrane cellulaire, ladite farine d'algue comprenant moins de 200 ppm de chlorophylle et au moins 20 % en poids sec d'huile de triglycéride, dans laquelle moins de 5 % en poids de l'huile est de l'acide docosahexaénoïque (DHA) ; dans laquelle entre 10 % et 100 % de la matière grasse de l'aliment est fournie par la farine d'algue.

8. Composition alimentaire congelée selon la revendication 1, produit de viande selon la revendication 6 ou composition alimentaire laitière selon la revendication 7, dans lesquels plus de 75 à 90 % des cellules lysées mécaniquement ont été rompues de sorte que les composants intracellulaires de la cellule ne sont plus complètement entourés par la membrane cellulaire.

9. Composition alimentaire congelée selon la revendication 1, produit de viande selon la revendication 6 ou composition alimentaire laitière selon la revendication 7, dans lesquels la farine d'algue est obtenue à partir d'une espèce du genre *Chlorella.*

10. Composition alimentaire congelée selon la revendication 1, produit de viande selon la revendication 6 ou composition alimentaire laitière selon la revendication 7, dans lesquels la farine d'algue est obtenue à partir de *Chlorella protothecoides.*

11. Procédé selon la revendication 5, dans lequel plus de 75 à 90 % des cellules lysées mécaniquement ont été rompues de sorte que les composants intracellulaires de la cellule ne sont plus complètement entourés par la membrane cellulaire.

12. Procédé selon la revendication 5, dans lequel la farine d'algue est obtenue à partir d'une espèce du genre Chlorella.

13. Procédé selon la revendication 5, dans lequel la farine d'algue est obtenue à partir de *Chlorella protothecoides.*
